# EUROPEAN PATENT APPLICATION

(11) **EP 3 287 004 A1**
(43) Date of publication of application: **28.02.2018**
(21) Application number: 16783014.0
(22) Date of filing: 07.04.2016
(51) Int. Cl.: A01G 9/08, A01G 7/00, A01G 9/00

(54) **TRANSPLANT DEVICE, TRANSPLANT SYSTEM, TRANSPLANT METHOD, AND COMPUTER PROGRAM**

(30) Priority: 21.04.2015 JP 2015087129; 03.09.2015 JP 2015174104
(71) Applicant: Tsubakimoto Chain Co., Osaka-shi, Osaka 530-0005 (JP)
(72) Inventor: ITO, Go, Osaka-shi, Osaka 530-0005 (JP); KINOSHITA, Yuji, Osaka-shi, Osaka 530-0005 (JP); HIRAI, Tatsuya, Osaka-shi, Osaka 530-0005 (JP); MATSUDA, Hirotaka, Osaka-shi, Osaka 530-0005 (JP)
(74) Representative: dompatent von Kreisler Selting Werner - Partnerschaft von Patent- und Rechtsanwälten mbB
(86) International application number: PCT/JP2016/061415
(87) International publication number: WO 2016/170993

(57) **Abstract**

Provided are a transplant device that has achieved a decrease in space for the device, a computer program and a transplant method, and a transplant device, a transplant system, a transplant method, and a computer program which enable efficient selection and transplantation with a simple configuration. The transplant device is provided with; a first holding unit that holds a flat board-like culture medium in which a plurality of plants is planted in a row direction and column direction; a second holding unit that holds a flat board-like cultivation panel so as to be parallel with the culture medium, the cultivation panel being provided with a plurality of plant holding holes in the row direction and the column direction; a procedure determination unit that determines, on the basis of a predetermined transplant algorithm, a procedure for transmitting from the culture medium to the holes in the cultivation panel; a moving unit for moving the first holding unit or the second holding unit so that the plants in the culture medium corresponding to the transplant procedure determined by the procedure determination unit and the cultivation panel holes are positioned vertically; and a transplant unit that, after the movement, transplants the plants by having the plants drawn or pushed into the holes, using a transplant arm that can be moved up and down in a direction perpendicular to the culture medium and the cultivation panel.

## Description

### [Technical Field]

The present invention relates to a system for transplanting seedlings of plants, and to a transplant device achieving, with a simple configuration, reduction in space for the device as well as efficient sorting and transplanting in the case where sorting is performed by conducting an examination, a transplant system, a transplant method and a computer program that employ the transplant device.

### [Background Art]

The number of plant factories for growing plants while controlling their growth environment has been increased regardless of the sizes of the factories. The plants cultivated in such facilities are not only food vegetables but also plants for various purposes such as processed foods, drugs or ornamentals. It is possible in a plant factory to grow plants while controlling the environment, which allows for a steady supply without being affected by natural conditions such as climate alteration and bad weather. Plant factories are thus likely to keep spreading.

The procedure of cultivation in a plant factory includes seeding, sprouting, greening, raising seedlings, transplanting seedlings, growing and harvesting. It has been proposed to utilize an automatic transplant device which automatically transplants seedlings at the timing of transplanting the seedlings in each step of the procedure to make the seedling transplant work efficient. As cost reduction has been sought for even in small to mid-sized facilities that have been increased in recent years, improvement in efficiency of work is desired by using a transplant device for automatic transplanting.

Patent Document 1 discloses an automatic planting device which cuts out seedbed pieces each including one stock of seedlings to permanently plant the seedbed pieces to a planting panel, sequentially from an end of a mat made of elastic foam synthetic resin such as board-like urethane. The automatic planting device disclosed in Patent Document 1 employs a method of, when transplanting seedlings from a mat which is a seedbed to a planting panel, cutting out seedbed pieces in sequence from an end of the mat and transplanting the seedbed pieces to holes opened in matrix in a cultivation panel in sequence from an end column of the cultivation panel.

Furthermore, in the course of the steps described above, seedlings are sorted at the timing of, for example, transplanting the seedlings in order to remove poorly-grown seedlings due to the effect of environment, disease or the like. If seedlings are sorted and transplanted by manpower, the cost is increased and the standards for sorting may differ depending on the worker, causing difficulties in quality maintenance and homogenization.

Regarding the sorting of seedlings, Patent Document 2 proposes a hydroponic cultivation device comprising a sorting mechanism that transfers pallets in which seedlings are accommodated one by one by a robot arm, examines the seedlings, and collects a poorly-grown seedling in accordance with a result of the examination. In the examination disclosed in Patent Document 1, a seedling is photographed and is determined whether or not the size of a leaf, or the length of a stem or root corresponds to a predetermined value or greater.

Regarding the sorting of seedlings, Non-Patent Document 1 further discloses a cultivation system having, in a large-scale plant factory that achieves large-volume production of high quality and homogeneous plants, a sorting function that concurrently examines a large number of seedlings conveyed by an automatic conveyance system and transplants only good seedlings in accordance with a result of examination. In Non-Patent Document 1, six hundred seedlings are concurrently examined for variations in the activation level within 24 hours, and a seedling not satisfying an evaluation standard is sorted as a poor seedling.

### [Prior Art Document]

### [Patent Document]

Patent Document 1: Japanese Patent Application Laid-Open Publication No. 2000-004699
Patent Document 2: WO2011/125965 [Non-Patent Document]

Non-Patent Document 1: Tsubakimoto Chain Co., Ltd., "(Co-developed with Osaka Prefecture University) Development of the World's First "Automated System for Sorting Good Seedlings" [on-line], November 10, 2014, Tsubakimoto Chain Co., NEWS Release, Internet <URL: http://www.tsubakimoto.jp/fileadmin/ja/news/articles/141110/141110 .pdf>

### [Summary of the Invention]

### [Problems to be Solved by the Invention]

As disclosed in Patent Document 1, the conventional transplant device has employed a method of cutting out seedbed pieces in sequence from an end of a seedbed mat, and transplanting seedlings into respective holes in sequence from a hole at an end of the panel where the seedlings are to be transplanted. Here, if the end of the seedbed mat is moved merely by aligning it with the end of the panel to which the seedlings are to be transplanted, the size of the device is increased.

For example, in the conventional transplant device, the seedlings are transplanted in sequence to holes in an end column, which requires the length of a planting panel conveyor which moves the planting panel to be at least twice the length of an elevating stage for seedbed pieces located at a fixed position in the conveying direction of the planting panel. In the automatic planting device disclosed in Patent Document 1, furthermore, multiple planting panels are conveyed in sequence, so that the length of the device is set to be several times the length of the planting panel.

Since seedbeds or panels for growing seedlings may be arranged one over another in the vertical direction in a plant factory, plants may advantageously be produced in an area significantly smaller than that in outdoor cultivation. Particularly in small to mid-sized facilities that have recently been increased in number, it is desirable for a transplant device to have a compact configuration as well.

Furthermore, in the case of examining seedlings at the time of transplanting, the automatic examination disclosed in Patent Document 2 is inefficient because seedlings are transferred one by one for being examined. While relative evaluation is necessary for sorting seedlings since relatively poorly grown seedlings are to be removed in view of the growth conditions of all the seedlings, absolute evaluation is employed in the configuration where seedlings are determined one by one on whether or not the size of a leaf or the like corresponds to a predetermined value or higher. In the cultivation system disclosed in Non-Patent Document 1, multiple seedlings may be examined at a time by the automatic examination, which however requires high cost for introduction. In small to mid-sized facilities that have recently been increased in number, an automatic transplant device capable of examining seedlings with a simple configuration that can suppress the cost for the introduction thereof has been sought for.

The present invention has been made in view of the circumstances described above, and aims to provide a transplant device for achieving reduction in space for the device, a computer program and a transplant method.

The present invention further aims to provide a transplant device achieving with a simple configuration efficient sorting and transplanting, a transplant system, a transplant method and a computer program.

### [Means for Solving Problems]

A transplant device according to one embodiment of the present disclosure, includes: a first holding unit that holds a flat board-like culture medium in which a plurality of plants are planted in row and column directions; and a second holding unit that holds a flat board-like cultivation panel in which a plurality of holes for holding the plants are arranged in row and column directions; transplants the plants from the culture medium to the holes of the cultivation panel, and comprises: a procedure deciding unit that decides a transplant procedure from the culture medium to the holes of the cultivation panel based on a predetermined transplant algorithm; a moving unit that moves the first holding unit or the second holding unit so that a plant in the culture medium and a hole of the cultivation panel corresponding to a transplant procedure decided by the procedure deciding unit are aligned in a vertical direction; and a transplant unit that performs transplanting, after the moving unit moves the first and second holding units, by pulling or pushing the plant into the hole using a transplant arm which is raised and lowered in a direction orthogonal to the culture medium and the cultivation panel.

In the transplant device according to one embodiment of the present disclosure, the moving unit moves the first holding unit or the second holding unit in a planar direction within a range where corresponding regions, in a plurality of regions obtained by dividing the cultivation panel and the culture medium to have a same number of regions in the row direction or the column direction, are opposed to each other.

In the transplant device according to one embodiment of the present disclosure, the moving unit moves the first holding unit or the second holding unit within a range where corresponding regions, in a plurality of regions obtained by dividing the cultivation panel and the culture medium to have a same number of regions in a longitudinal direction of the cultivation panel or the culture medium out of the row direction and the column direction of each of the cultivation panel and the culture medium, are opposed to each other.

In the transplant device according to one embodiment of the present disclosure, the moving unit moves the first holding unit or the second holding unit within a range where corresponding regions, in a plurality of regions obtained by dividing the cultivation panel and the culture medium to have a same number of regions both in the row direction and the column direction, are opposed to each other.

In the transplant device according to one embodiment of the present disclosure, the same number is a greatest common divisor of the number of rows or columns in a longitudinal direction of the culture medium and the number of rows or columns in a direction of the cultivation panel corresponding to the longitudinal direction.

In the transplant device according to one embodiment of the present disclosure, the moving unit moves the first holding unit or the second holding unit within a range where corresponding regions, in a plurality of regions obtained by dividing the cultivation panel or the culture medium into two regions in a first direction, which is a short direction, out of the row direction and the column direction of each of the cultivation panel and the culture medium, are opposed to each other.

In the transplant device according to one embodiment of the present disclosure, the procedure deciding unit associates holes in one region in the plurality of regions of the cultivation panel in sequence from an end in the first direction with plants in a region corresponding to the one region in sequence from an end of the culture medium in the first direction toward a middle, or associates holes in one region in the plurality of regions of the cultivation panel in sequence from a middle of the cultivation panel in the first direction with plants in a region corresponding to the one region in sequence from a middle of the culture medium in the first direction toward an end.

The transplant device according to one embodiment of the present disclosure, further comprises a storage unit storing in advance an association between the corresponding regions.

A transplant device according to one embodiment of the present disclosure, transplanting from a flat board-like culture medium in which a plurality of plants are planted in a row direction and a column direction, the plants to a flat board-like cultivation panel in which holes for holding the plants are arranged in a row direction and a column direction, comprises: a plurality of transplant arms arranged in parallel at an interval corresponding to a common multiple of an interval between the plants in one direction of the culture medium and an interval between the holes in the one direction of the cultivation panel; and a transplant unit concurrently transplanting a plurality of plants planted in the culture medium at an interval corresponding to the common multiple to the cultivation panel by the plurality of transplant arms in a predetermined order.

In the transplant device according to one embodiment of the present disclosure, the transplant unit further comprises an operability deciding unit that decides whether or not each of the plurality of transplant arms is able to operate in transplanting the plants in the culture medium, based on sorting information for the plants.

A transplant device according to one embodiment of the present disclosure, transplanting a plurality of plants from a flat board-like culture medium in which the plants are planted in a row direction and a column direction to a flat board-like cultivation panel in which a plurality of holes for holding the plants are arranged in a row direction and a column direction, comprises: an imaging unit that photographs the culture medium; a transmitting unit that transmits an image photographed by the imaging unit; a receiving unit that receives sorting information for a plant sorted based on the image transmitted by the transmitting unit; a transplant deciding unit that decides a plurality of plants to be transplanted based on the sorting information received by the receiving unit; and a transplant unit that transplants the plants decided by the transplant deciding unit to the cultivation panel.

In the transplant device according to one embodiment of the present disclosure, the transplant unit further comprises a plurality of transplant arms arranged in parallel at an interval corresponding to a common multiple of an interval of the plants in one direction of the culture medium and an interval of the holes in the one direction of the cultivation panel, and the transplant unit is configured to concurrently transplant the plants decided by the transplant deciding unit, among a plurality of plants planted in the culture medium at an interval corresponding to the common multiple, to the cultivation panel by the plurality of transplant arms.

A transplant system according to one embodiment of the present disclosure, comprises: a transplant device that transplants a plurality of plants from a flat board-like culture medium in which the plants are planted in a row direction and a column direction to a flat board-like cultivation panel in which a plurality of holes for holding the plants are arranged in a row direction and a column direction, and a communication device having a display unit and being connected to the transplant device, wherein the transplant device comprises: an imaging unit that photographs the culture medium; and a transmitting unit that transmits an image photographed by the imaging unit to the communication device, and the transplant device further comprises: a receiving unit receiving sorting information for plants sorted based on an image transmitted by the transmitting unit from the communication device; a transplant deciding unit that decides a plurality of plants to be transplanted based on the sorting information received by the receiving unit; and a transplant unit that transplants the plants decided by the transplant deciding unit to the cultivation panel.

In the transplant system according to one embodiment of the present disclosure, the transplant device further comprises a plurality of transplant arms arranged at an interval corresponding to a common multiple of an interval between the plants in one direction of the culture medium and an interval between the holes in the one direction of the cultivation panel, the transplant unit is configured to concurrently transplant a plurality of plants planted in the culture medium at an interval corresponding to the common multiple to the cultivation panel by the plurality of transplant arms, and the transplant deciding unit is configured to decide whether or not each of the plurality of transplant arms is able to operate, based on the received sorting information.

A method of transplanting according to one embodiment of the present disclosure, transplanting a plurality of plants from a flat board-like culture medium in which the plants are planted in a row direction and a column direction to a flat board-like cultivation panel in which a plurality of holes for holding the plants are arranged in a row direction and a column direction, includes steps of: the cultivation panel and the culture medium are divided to have a same number of regions in a row direction or a column direction; the culture medium or the cultivation panel is moved in a planar direction within a range where corresponding regions, in a plurality of divided regions, are opposed to each other; and after moving the culture medium or the cultivation panel, the plants are transplanted from the culture medium by pulling or pushing the plants into the holes in a direction orthogonal to the culture medium.

A method of transplanting according to one embodiment of the present disclosure, transplanting a plurality of plants from a flat board-like culture medium in which the plants are planted in a row direction and a column direction to a flat board-like cultivation panel in which a plurality of holes for holding the plants are arranged in a row direction and a column direction, comprises: concurrently transplanting, using a plurality of transplant arms arranged in parallel at an interval corresponding a common multiple of an interval between the plants in the culture medium in one direction and an interval between the holes in the one direction of the cultivation panel, the plurality of plants planted in the culture medium at the interval to the cultivation panel by the plurality of transplant arms; and transplanting a plant remaining in the culture medium to the cultivation panel using any one of the plurality of transplant arms.

A method of transplanting according to one embodiment of the present disclosure, transplanting a plurality of plants using a transplant device that transplants the plants from a flat board-like culture medium in which the plants are planted in a row direction and a column direction to a flat board-like cultivation panel in which a plurality of holes for further growing the plants are arranged in a row direction and a column direction, and a communication device having a display unit and being connected to the transplant device: includes steps of: the transplant device transmits a photographed image of the culture medium to the communication device; the communication device displays a received photographed image on the display unit, accepts selection of a plant in a culture medium on the photographed image, and transmits sorting information defined by the selection to the transplant device; and the transplant device receives sorting information from the communication device, decides a plurality of plants to be transplanted based on the received sorting information, and transplants the decided plants to the cultivation panel.

A computer program according to one embodiment of the present disclosure, causes a processor, included in a transplant device comprising a first holding unit that holds a flat board-like culture medium in which a plurality of plants are planted in a row direction and a column direction and a second holding unit that holds a flat board-like cultivation panel in which holes for holding the plants are arranged in a row direction and a column direction, to move the first holding unit or the second holding unit in a planar direction, the program causes the processor to execute processing of moving the first holding unit or the second holding unit within a range where corresponding regions, in a plurality of regions obtained by dividing the cultivation panel and the culture medium to have a same number of regions in the row direction or the column direction, are opposed to each other.

A computer program according to one embodiment of the present disclosure, causes a computer to execute transplanting of a plurality of plants from a flat board-like culture medium in which the plants are planted in a row direction and a column direction to a flat board-like cultivation panel in which a plurality of holes for holding the plants are arranged in a row direction and a column direction, the program further causing the computer to execute processing of: deciding a plurality of plants to be planted concurrently by a plurality of transplant arms arranged in parallel at an interval corresponding to a common multiple of an interval between the plants in one direction of the culture medium and an interval between the holes in the one direction of the cultivation panel; concurrently transplanting the decided plants to the cultivation panel by the plurality of transplant arms; and transplanting a plant remaining in the culture medium to the cultivation panel using any one of the plurality of transplant arms.

A computer program according to one embodiment of the present disclosure, causes a computer having a display unit to accept selection from a flat board-like culture medium in which a plurality of plants are planted in a row direction and a column direction, the program further causing the computer to execute processing of: obtaining a photographed image of the culture medium; displaying the obtained photographed image on the display unit; accepting selection of a plant in the culture medium on the photographed image; and transmitting sorting information defined by the selection to an external device.

According to an aspect of the present invention, a cultivation panel or a culture medium is moved in a planar direction within a range where multiple regions obtained by dividing the cultivation panel and the culture medium to have the same number of substantially parallel regions in the row or column direction are opposed to each other. A region at one end of the divided regions of the cultivation panel is not opposed to any region other than the region at the corresponding position at one end of the culture medium. A region at the other end of the divided regions of the cultivation panel is not opposed to any region other than the region at the other end of the culture medium. This prevents the moving range of the culture medium or cultivation panel from largely deviating from each other.

According to an aspect of the present invention, the cultivation panel and the culture medium are divided into regions at least in the longitudinal direction thereof, and the cultivation panel or culture medium is moved in a planar direction within a range where corresponding regions of the divided regions are opposed to each other. In the case where the divided regions in the longitudinal direction are opposed to each other, the opposed areas of the cultivation panel and the culture medium may be increased as much as possible while reducing the deviation between the panel and the culture medium.

According to an aspect of the present invention, the cultivation panel and the culture medium are moved within a range where the divided regions are opposed to each other in both row and column directions. The moving range of the culture medium or cultivation panel is not largely deviated from each other in both of the row and column directions.

According to an aspect of the present invention, with the use of the greatest common divisor of the number of rows or columns in the longitudinal direction of the culture medium and the number of rows or columns in a direction of the cultivation panel corresponding to the longitudinal direction of the culture medium as the number of divisions, the number of divisions may be reduced as much as possible, and thus the culture medium and cultivation panel may efficiently be divided for the moving range.

According to an aspect of the present invention, each of the cultivation panel and the culture medium is divided into two regions in the first direction which is the short direction of the cultivation panel or the culture medium, and is moved within a range where the corresponding divided regions are opposed to each other. Here, between the corresponding regions, the plants at an end in the first direction of the culture medium are transplanted to the holes at an end in the first direction of the cultivation panel, while the plants at the middle in the first direction of the culture medium is transplanted to the holes at the middle in the first direction of the cultivation panel. This can prevent deviation of the cultivation panel and the culture medium from each other in the first direction.

According to an aspect of the present invention, the association between regions which is stored in advance may be read out in an arbitrary order, which makes it possible to position a plant on the culture medium and a hole of the cultivation panel to be opposed to each other in an arbitrary order.

According to an aspect of the present invention, using multiple transplant arms arranged at an interval corresponding to a common multiple of the interval between the plants in the culture medium in a predetermined direction of the culture medium and the interval between the holes of the cultivation panel, the plants in the culture medium are transplanted concurrently to the cultivation panel. This allows the plants to be transplanted concurrently to the cultivation panel by the amount corresponding to the number of the transplant arms in a possible range.

According to another aspect of the present invention, upon concurrently operating the multiple transplant arms, whether or not each of the transplant arms is able to operate (to execute transplanting) is decided based on sorting information. It is possible to make such a decision that only a transplant arm corresponding to a poorly-grown plant does not operate, so that efficient sorting and transplanting may be achieved.

According to a further aspect of the present invention, the sorting information used in transplanting is accepted by an information processing device using a photographed image obtained by photographing a culture medium in which multiple plants are planted at a time and having a display unit on which the photographed image is displayed. This makes it possible to achieve sorting based on relative evaluation with a simpler configuration than that in the case where the plants are individually examined one by one or where a special examination is performed several times for one plant.

### [Advantageous Effects]

According to an aspect of the present invention, the moving range of a culture medium or cultivation panel is not largely deviated from each other, which can reduce a space occupied by the entire device as much as possible.

According to another aspect of the present invention, plants corresponding to the number of transplant arms may be transplanted to the cultivation panel concurrently to the extent possible, which can achieve efficient transplanting. Moreover, the information of the plants to be sorted is acquired based on an image obtained by photographing the entire culture medium in which multiple plants are planted, which can attain efficient sorting and transplanting with a simple configuration by deciding whether or not each of the transplant arms to be concurrently operated is able to operate.

### [Brief Description of the Drawings]

FIG. 1 is a perspective view illustrating a transplant device according to Embodiment 1.
FIG. 2 is a perspective view illustrating an example of a culture medium from which plants are transplanted.
FIG. 3 is a perspective view illustrating a culture medium, holder, cultivation panel and transplant arm according to Embodiment 1.
FIG. 4 is a block diagram illustrating the internal configuration of a transplant device according to Embodiment 1.
FIG. 5 is a flowchart illustrating an example of a procedure of transplanting according to Embodiment 1.
FIG. 6 is an explanatory view showing transplant orders i assigned to holes in a cultivation panel.
FIG. 7 is an explanatory view showing an example of divided regions in row direction.
FIG. 8 is an explanatory view showing an example of divided regions.
FIG. 9 is an explanatory view showing an example of association between holes in a cultivation panel and seedbed portions of a culture medium.
FIG. 10 is an explanatory view showing transplant order i from a culture medium to the first cultivation panel.
FIG. 11 is an explanatory view showing a positional relationship between a culture medium and the first cultivation panel in transplanting seedbed portions from the culture medium to the first cultivation panel.
FIG. 12 is an explanatory view showing a positional relationship between a culture medium and the first cultivation panel in transplanting seedbed portions from the culture medium to the first cultivation panel.
FIG. 13 is an explanatory view showing a positional relationship between a culture medium and the first cultivation panel in transplanting seedbed portions from the culture medium to the first cultivation panel.
FIG. 14 is an explanatory view showing a positional relationship between a culture medium and the first cultivation panel in transplanting seedbed portions from the culture medium to the first cultivation panel.
FIG. 15 is an explanatory view showing a positional relationship between a culture medium and the first cultivation panel in transplanting seedbed portions from the culture medium to the first cultivation panel.
FIG. 16 is an explanatory view showing transplant order i from a culture medium to the second and third cultivation panels.
FIG. 17 is an explanatory view showing another example of transplant order i from a culture medium to the first cultivation panels.
FIG. 18 is an explanatory view showing transplant order i assigned to each hole in a cultivation panel according to Embodiment 2.
FIG. 19 is an explanatory view showing an example of divided regions in row direction according to Embodiment 2.
FIG. 20 is an explanatory view showing an example of divided regions according to Embodiment 2.
FIG. 21 is an explanatory view showing an example of association between holes in a cultivation panel and seedbed portions of a culture medium according to Embodiment 2.
FIG. 22 is an explanatory view showing transplant order i from a culture medium to a cultivation panel according to Embodiment 2.
FIG. 23 is an explanatory view showing transplant order i from a culture medium to a cultivation panel according to Embodiment 2.
FIG. 24 is an explanatory view showing transplant order i assigned to each hole in a cultivation panel according to Embodiment 3.
FIG. 25 is an explanatory view showing an example of divided regions in row direction according to Embodiment 3.
FIG. 26 is an explanatory view showing an example of divided regions according to Embodiment 3.
FIG. 27 is an explanatory view showing another example of divided regions according to Embodiment 3.
FIG. 28 is an explanatory view showing an example of association between holes in a cultivation panel and seedbed portions of a culture medium according to Embodiment 3.
FIG. 29 is an explanatory view showing transplant order i from a culture medium B to a cultivation panel according to Embodiment 3.
FIG. 30 is an explanatory view showing transplant order i from a culture medium B to a cultivation panel according to Embodiment 3.
FIG. 31 is an explanatory view showing another example of divided regions according to Embodiment 3.
FIG. 32 is a flowchart illustrating an example of a procedure of transplanting according to Embodiment 4.
FIG. 33 is an explanatory view showing transplant orders i assigned to seedbed portions in a culture medium according to Embodiment 5.
FIG. 34 is a flowchart illustrating an example of a procedure of deciding an association between seedbed portions in a culture medium and holes in a cultivation panel according to Embodiment 5.
FIG. 35 is an explanatory view showing an example of region dividing in a culture medium and a cultivation panel.
FIG. 36 is an explanatory view showing an example of region dividing in a culture medium and a cultivation panel.
FIG. 37 is an explanatory view showing an association between regions in a culture medium and cultivation panel.
FIG. 38 is an explanatory view showing transplant orders i from a culture medium to the first cultivation panel.
FIG. 39 is an explanatory view showing positional relationship between a culture medium and a cultivation panel at the time of transplanting seedbed portions from the culture medium to the cultivation panel.
FIG. 40 is an explanatory view showing positional relationship between a culture medium and a cultivation panel at the time of transplanting seedbed portions from the culture medium to the cultivation panel.
FIG. 41 is an explanatory view showing positional relationship between a culture medium and a cultivation panel at the time of transplanting seedbed portions from the culture medium to the cultivation panel.
FIG. 42 is an explanatory view showing transplant orders i in a culture medium and a cultivation panel.
FIG. 43 is a perspective view illustrating a transplant device according to Embodiment 6.
FIG. 44 is a perspective view illustrating an example of a cultivation panel to which a plant is to be transplanted according to Embodiment 6.
FIG. 45 is a block diagram illustrating the internal configurations of a transplant device according to Embodiment 6.
FIG. 46 is a block diagram illustrating the internal configurations of an information processing device according to Embodiment 6.
FIG. 47 is a flowchart illustrating an example of a procedure of transplanting according to Embodiment 6.
FIG. 48 is an explanatory view showing a transplant order defined by transplant algorithm according to Embodiment 6.
FIG. 49 is an explanatory view showing a transplant order defined by transplant algorithm according to Embodiment 6.
FIG. 50 is an explanatory view showing a transplant order defined by transplant algorithm according to Embodiment 6.
FIG. 51 is an explanatory view showing a transplant order defined by transplant algorithm according to Embodiment 6.
FIG. 52 is an explanatory view showing a transplant order defined by transplant algorithm according to Embodiment 6.
FIG. 53 is an explanatory view showing a transplant order defined by transplant algorithm according to Embodiment 6.
FIG. 54 is an explanatory view showing a transplant order defined by transplant algorithm according to Embodiment 6.
FIG. 55 is a flowchart illustrating an example of a detailed procedure of transplanting according to Embodiment 6.
FIG. 56 is a flowchart illustrating an example of a detailed procedure of transplanting according to Embodiment 6.
FIG. 57 is an explanatory view showing an example of an operation screen displayed on an information processing device according to Embodiment 6.
FIG. 58 is an explanatory view showing an example of sorting information.
FIG. 59 is an explanatory view showing an example of transplanting based on the sorting information in FIG. 58.
FIG. 60 is an explanatory view showing an example of an operation screen according to Variation Example 1.
FIG. 61 is a perspective view illustrating a transplant device according to Embodiment 7.
FIG. 62 is a flowchart illustrating an example of a procedure of transplanting according to Embodiment 7.
FIG. 63 is a flowchart illustrating an example of a procedure of transplanting in the case where a still image is used according to Embodiment 7.

### [Modes for Carrying Out the Invention]

The present invention will now be described in detail with reference to the drawings illustrating the embodiments thereof.

It is to be understood that the following embodiments are merely illustrative and the present invention is not limited to the configurations described in the embodiments.

### (Embodiment 1)

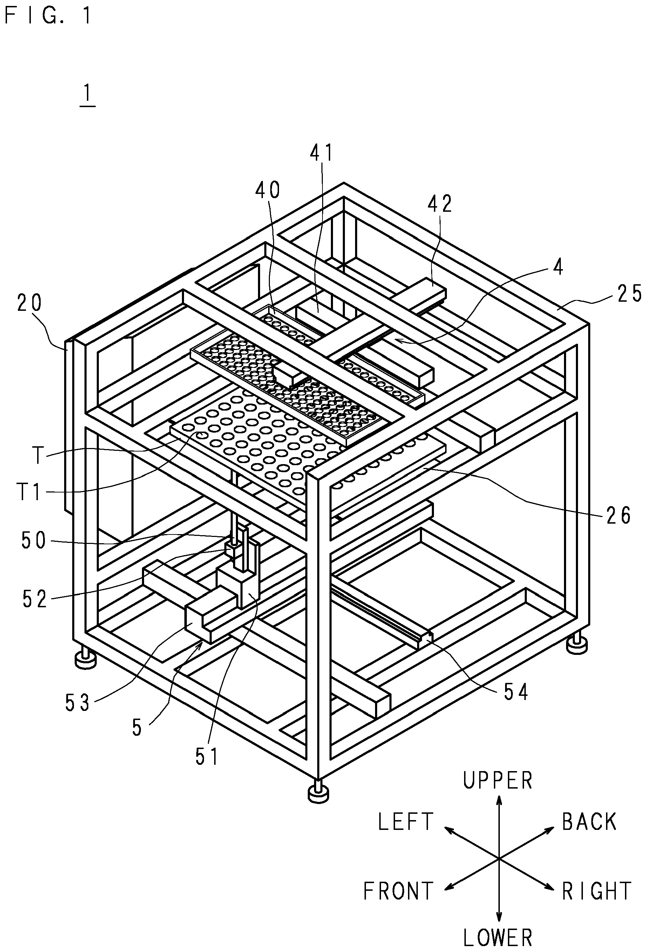

FIG. 1 is a perspective view illustrating a transplant device 1 according to Embodiment 1. In the following description, upper, lower, front, back, left and right are used as indicated by the arrows in FIG. 1.

The transplant device 1 comprises a frame 25 holding a cultivation panel T, a holder transfer unit 4 transferring a culture medium holder 40, a transplant arm drive unit 5 driving a transplant arm 50, and a transplant control unit 20 (outer casing thereof is illustrated in FIG. 1) instructing the holder transfer unit 4 and the transplant arm drive unit 5 to transfer the holder 40 and to drive the transplant arm 50, respectively.

The frame 25 is constituted by multiple supporting posts and multiple horizontal members that connect the supporting posts at the top and bottom thereof. A guide frame is constructed at the middle part of the frame 25 in the front-back and left-right directions, and a supporting plate 26 is further mounted to the guide frame in a horizontal manner. The cultivation panel T is fixed on the supporting plate 26 such that its adjacent two sides are along the respective sides of the guide frame. It is noted that the cultivation panel T may manually be attached to and detached from a predetermined position on the supporting plate 26. Details of the cultivation panel T will be described later.

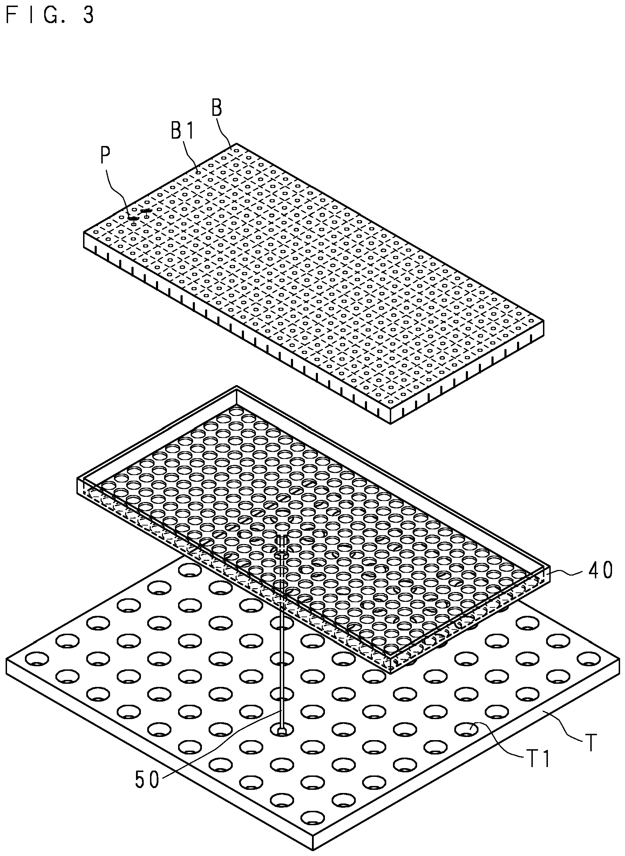

The transplant arm drive unit 5 is located below the cultivation panel T, and comprises the transplant arm 50, a supporting stage 51, a drive unit 52, a traveling guide 53 and a lateral guide 54. The traveling guide 53 is located at the lower part of the frame 25 along the front-back direction. The position where the traveling guide 53 is located is under the cultivation panel T. The supporting stage 51 is mounted to the traveling guide 53 so as to be movable thereon. The supporting stage 51 is provided with the drive unit 52 to which the transplant arm 50 is attached. The length of the traveling guide 53 is substantially equal to the length in the longitudinal direction of the cultivation panel T, while the transplant arm 50 may move a distance corresponding to the longitudinal direction of the cultivation panel T. Furthermore, the traveling guide 53 is so configured that is movable in the left-right direction along the lateral guide 54. Accordingly, the transplant arm 50 may move to any position under every one of holes T1 of the cultivation panel T with a range corresponding to the size of the cultivation panel T in a space below the cultivation panel T. The transplant arm 50 may further be raised from the supporting stage 51 by the operation of the drive unit 52, while a transplant hand (see FIG. 3) located at the tip end of the transplant arm 50 may be raised and lowered between an initial position which is lower than the cultivation panel T and a raised position which is higher than the cultivation panel T as it penetrates through each of the holes T1 opened in the cultivation panel T.

The holder transfer unit 4 is located above the cultivation panel T, and comprises a holder 40, a lateral guide 41 and a longitudinal guide 42. The longitudinal guide 42 is installed in the front-back direction at the position above the cultivation panel T at the middle back side thereof. The lateral guide 41 extending in the left-right direction is attached to the longitudinal guide 42. One long side of the holder 40 having the shape of a rectangular frame is attached to the front surface of the lateral guide 41. This allows the holder 40 to move in the left-right direction along the lateral guide 41, and to also move together with the lateral guide 41 in the front-back direction along the longitudinal guide 42. It is noted that the length of the longitudinal guide 42 is a little longer than the length of the cultivation panel T in the front-back direction, and that the length of the lateral guide 41 is also a little longer than the width (length in the left-right direction) of the cultivation panel T. The holder 40 may move in a space above the cultivation panel T within a range not largely deviated from the range corresponding to the cultivation panel T. Details of the holder 40 and its moving range will be described later.

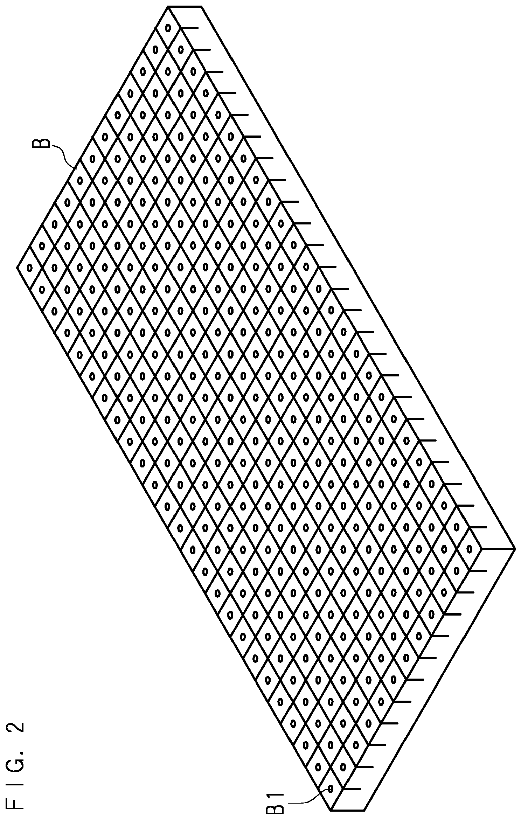

Transplanting of a plant P from a culture medium B to the cultivation panel T in the transplant device 1 will be summarized with reference to FIGS. 2 and 3, together with the details of the culture medium B and the cultivation panel T. FIG. 2 is a perspective view illustrating an example of a culture medium from which plants are transplanted (hereinafter also referred to as "culture medium of a transplant source"). FIG. 3 is a perspective view illustrating the culture medium B, holder 40, cultivation panel T and transplant arm 50 according to Embodiment 1.

The culture medium B is made of urethane, for example, and has the shape of a rectangular flat board as illustrated in FIG. 2. The culture medium B is divided into multiple seedbed portions arranged in multiple longitudinal and lateral lines. At one surface of the culture medium B, a hole B1 for growing a plant P is opened in each of the seedbed portions. The other surface of the culture medium B is cut to the extent that would not reach the one surface. The culture medium B illustrated in FIG. 2 is sectioned into 300 (=12×25) seedbed portions. It is understood that the number of sections of the seedbed portions is not limited thereto.

The holder 40 of the rectangular frame shape has a bottom plate provided with holes aligned in longitudinal and lateral lines. The inner perimeter of the rectangular frame of the holder 40 is substantially equal to the outer perimeter of the culture medium B, so that the culture medium B is accommodated into the holder 40. The size and number of holes opened in the bottom plate of the holder 40 correspond to the size and number of divisions of the seedbed portions of the culture medium B.

The cultivation panel T is made of, for example, styrene foam, and has the shape of a rectangular flat board. The cultivation panel T is provided with multiple holes T1 aligned in longitudinal and lateral directions. Each hole T1 is circular, and is reduced in diameter to have a tapered shape from one surface side of the panel to approximately half the depth of the hole. The diameter of the hole T1 on the one surface side is substantially equal to the length of a diagonal line of one seedbed portion in the culture medium B, whereas the diameter thereof on the tapered side is substantially equal to or slightly shorter than the length of one side of the seedbed portion. The cultivation panel T illustrated in FIG. 3 is provided with, for example, 100 (=10×10) holes T1. It is understood that the number of the holes T1 in the cultivation panel T is not limited thereto, and the distance between holes T1 is designed to be suitable for growing the plant P depending on the type of the plant P.

A process of transplanting the plant P from the culture medium B to the cultivation panel T by the transplant device 1 will be described with reference to FIG. 3. The holder 40 which holds the culture medium B installed by a worker moves in a space above the cultivation panel T in the front-back and left-right directions under the control of the transplant control unit 20. The supporting stage 51 of the transplant arm 50 then moves in a space below the cultivation panel T in the front-back and left-right directions under the control of the transplant control unit 20. In the case where a seedbed portion of the culture medium B is located directly above a vacant hole T1 of the cultivation panel T, the transplant control unit 20 moves the supporting stage 51 such that the transplant arm 50 is positioned directly below the seedbed portion. Subsequently, the transplant control unit 20 makes the drive unit 52 operate so that a transplant hand at the tip end of the transplant arm 50 is moved to a raised position. When the transplant arm 50 together with the transplant hand penetrates the vacant hole T1 and a hole in the bottom plate of the holder 40, and when the transplant hand is moved to the raised position where it reaches the seedbed portion, the transplant hand grips the seedbed portion. The transplant control unit 20 then lowers the transplant arm 50. The seedbed portion gripped by the transplant hand is lowered with the transplant arm 50 to be fractured by a hole opened in the bottom plate of the holder 40, and is further lowered into the hole T1 of the cultivation panel T1 and held at the tapered portion of the hole T1. The transplant control unit 20 releases the grip by the transplant hand at a position where the seedbed portion is held in the hole T1, and the transplant arm is further lowered so that the transplant hand is returned to the initial position. As such, the holder 40, supporting stage 51 and transplant arm 50 move in the front-back and upper-lower directions according to the instructions of the transplant control unit 20, to achieve transplanting of the seedbed portions in the culture medium B to the cultivation panel T.

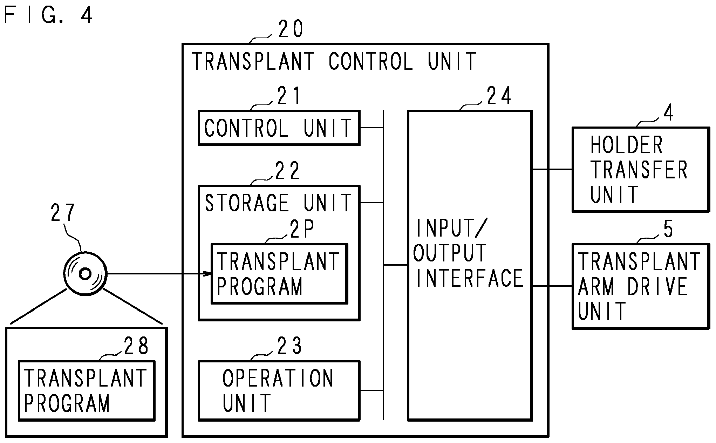

Details of such transplant control for the plant P by the transplant control unit 20 in the transplant device 1 will now be described. FIG. 4 is a block diagram illustrating the internal configuration of a transplant device 1 according to Embodiment 1. The transplant device 1 is constituted by, as described above, the holder transfer unit 4, the transplant arm drive unit 5, and the transplant control unit 20 controlling these units 4 and 5. The transplant control unit 20 is a programmable logic controller. The transplant control unit 20 comprises a control unit 21 which is a microprocessor, a storage unit 22 using a flash memory or the like, an operation unit 23 which is a man machine interface, and an input/output interface 24 connected to the holder transfer unit 4 and the transplant arm drive unit 5.

The control unit 21 instructs the holder transfer unit to move the holder 40 and to stop the movement thereof in accordance with the operation accepted by the operation unit 23 based on a transplant program 2P pre-stored in the storage unit 22. The control unit 21 further instructs the transplant arm drive unit 5 to move the supporting stage 51 of the transplant arm 50 in the front-back and left-right directions and to stop the movement thereof, and also to drive the transplant arm 50 in the vertical direction.

The transplant program 2P described above is stored in the storage unit 22. Incorporated into the transplant program 2P are the number and size of the holes T1 in the cultivation panel T mounted to the transplant device 1 and the association for transplanting depending on the number of divided seedbed portions of the culture medium B accommodated in the holder 40. The association for transplanting includes, for example, the positional information of a seedbed portion of the culture medium B of the transplant source that is associated with the positional information of a hole T1 to which the seedbed portion is to be transplanted (hereinafter also referred to as a hole of a transplant destination) in the cultivation panel T. The positional information of the hole T1 and the positional information of the seedbed portion in the culture medium B that are associated with each other may be assigned numbers indicating the order of transplanting (transplant order) and stored. More specifically, the association for transplanting is determined in advance in accordance with a prescribed algorithm for the cultivation panel T including 100 (=10×10) holes T1 and for the culture medium B with 300 (=12×25) divisions in Embodiment 1. This association is the association between one culture medium B and three cultivation panels T. Details of the association between the culture medium B and the cultivation panel T will be described later. The association for transplanting may be stored in the storage unit 22 separately from the transplant program 2P, and may be referred to by the control unit 21.

The transplant program 2P is a computer program for executing the control by the control unit 21 described above. The transplant program 2P is pre-stored in the storage unit 22, or is incorporated into the control unit 21. Moreover, the transplant program 2P may be recorded in a computer readable recording culture medium 27. The storage unit 22 stores therein a transplant program 2P read out from the recording culture medium 27 by a reading device (not illustrated). The recording culture medium 27 includes an optical disc such as a CD (Compact Disc)-ROM, DVD (Digital Versatile Disc)-ROM or BD (Blu-ray (registered trademark) Disc), a magnetic disk such as a flexible disk or a hard disk, a magneto-optical disk, a semiconductor memory and so forth. It is further possible to download the transplant program 2P according to Embodiment 1 from an external computer (not illustrated) connected to a communication network (not illustrated), and store it in the storage unit 21.

For the operation unit 23, a switch and a button are used that are located on the upper surface of the outer casing of the control unit 21. The switch and button include a start button for instructing the control unit 21 to start transplanting. The operation unit 23 includes a liquid crystal panel on which details of operation, error messages and the like may be displayed. The control unit 21 detects the operation in the operation unit 23 and executes each control concerning transplanting as described later in accordance with the details of operation.

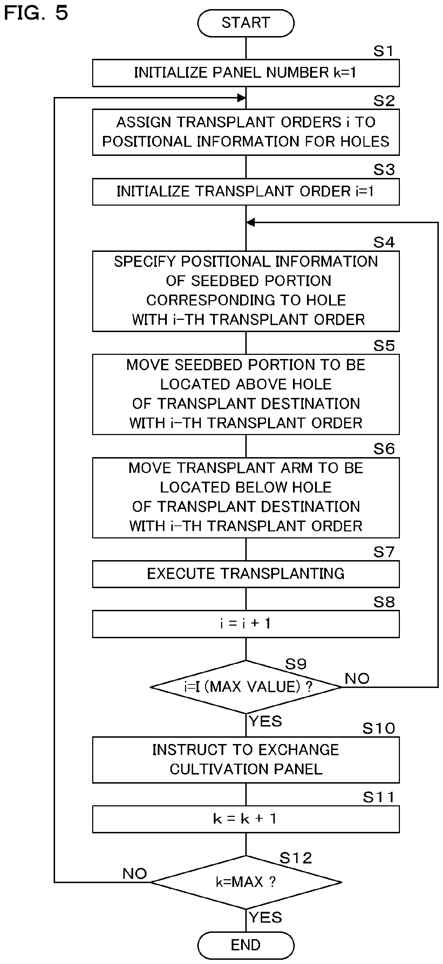

The procedure of transplanting in the transplant device 1 configured as described above will be described in detail with reference to a flowchart. FIG. 5 is a flowchart illustrating an example of a procedure of transplanting according to Embodiment 1. A worker places the cultivation panel T with all vacant holes T1 on the supporting plate 26, fits the culture medium B of the plant P that had been through a seedling growing step into the holder 40, and presses the start button at the operation unit 23, when the procedure illustrated in the flowchart of FIG. 5 is started by the control unit 21 that detects the pressing of the start button.

The control unit 21 starts the processing, assuming that the cultivation panel T of the transplant destination as well as the culture medium B are both new (the cultivation panel T is vacant while the culture medium B is full). In the description below, the positional information of holes T1 in the cultivation panel T is identified by x rows and y columns with the frontmost row in FIG. 1 being the 1st row and the leftmost column in FIG. 1 being the 1st column (x=1 to 10, y=1 to 10). Likewise, the seedbed portions in the culture medium B are identified by m rows and n columns with the front side of the holder 40 in FIG. 1 being the 1st row and the left side of the holder 40 being the 1st column (m=1 to 12, n=1 to 25).

In an example of the cultivation panel T and culture medium B according to Embodiment 1, transplanting from one culture medium B to three cultivation panels T is executed as one process. Thus, the control unit 21 first initializes a panel number k (=1 to 3) indicating which one of the cultivation panels T is to be processed (k=1) (step S1).

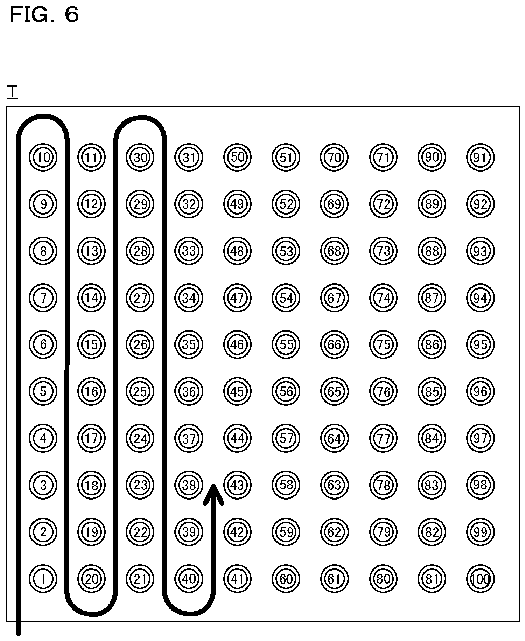

Next, the control unit 21 assigns transplant orders i=1 to 100 for the k-th cultivation panel T to the positional information for the holes T1 of the transplant destination (step S2). More specifically, each of the transplant orders i=1 to 100 is so assigned to the positional information (x, y) for each hole T1 that zig-zag movement over the holes T1 in the cultivation panel T is attained. FIG. 6 illustrates the transplant orders i assigned to the holes T1 in the cultivation panel T. The numeral in each circle in FIG. 6 indicates the transplant order i. The control unit 21 then initializes the transplant order i (step S3). The positional information for the hole T1 with the 1st transplant order is (1, 1), the positional information for the hole T1 with the 2nd transplant order is (2, 1), and the positional information for the hole T1 with the 10th transplant order is (10, 1). Moreover, the positional information for the hole T1 with the 11th transplant order is (10, 2), and the positional information for the hole T1 with the 12th transplant order is (9, 2). The positional information in accordance with the transplant orders may be represented as (1, 1), (2, 1), ..., (10, 1), (10, 2), (9, 2), ... (1, 2), (1, 3), (2, 3), ... (10, 3), (10, 4), (9, 4), ....

The control unit 21 specifies the positional information (m, n) of the seedbed portion of the culture medium B of the transplant source that is associated with the positional information (x, y) of the hole T1 with the i-th transplant order in the k-th cultivation panel T (step S4). The association between the positional information (x, y) of the holes T1 in the k-th cultivation panel T and the positional information (m,n) of the seedbed portions is incorporated into the transplant program 2P in the storage unit 22 or is stored in the storage unit 22, as described above.

The control unit 21 instructs the holder transfer unit 4 to move the holder 40 such that a specified seedbed portion is located above a hole T1 of the transplant destination that is specified by the positional information (x, y) (step S5). The control unit 21 concurrently instructs the transplant arm drive unit 5 to move the supporting stage 51 such that the transplant arm 50 is located below the hole T1 of the transplant destination that is specified by the positional information (x, y) (step S6).

For the hole T1 of the transplant destination with the transplant order i, the control unit 21 executes pulling out of the seedbed portion from the culture medium B and transplanting of the seedbed portion into the hole T1 by the transplant arm 50 (step S7).

Next, the control unit 21 adds 1 to the transplant order i (step S8), and determines whether or not the transplant order i has reached a maximum value I (=100) in the transplant order (step S9). If it is determined that the transplant order i has not reached the maximum value I (S9: NO), the control unit 21 returns the processing to step S4, and continues the processing for the transplant destination with the next transplant order i.

If it is determined that the transplant order i has reached the maximum value I (S9: YES), the control unit 21 outputs instructions for exchanging the cultivation panel T by sound or by output on a liquid crystal panel or the like of the operation unit 23 (step S10). The control unit 21 adds 1 to the number k for the cultivation panel T (step S11), and determines whether or not k has reached a maximum value "3" (step S12). If it is determined that k has not reached the maximum value "3" (S12: NO), the control unit 21 returns the processing to step S2, and continues the transplant processing for the next cultivation panel T.

If it is determined that k has reached the maximum value "3" (S12: YES), the control unit 21 terminates the processing of one transplant.

Of the procedures described above, the association between the positional information (x, y) of the hole T1 in the k-th cultivation panel T specified at step S4 and the positional information (m, n) of the seedbed portion will now be described with reference to the drawings. The association is determined in advance by a prescribed algorithm based on the size of the cultivation panel T, the number and arrangement of holes T1, as well as the size of the culture medium B and the number of divided seedbed portions.

Simply stated, the prescribed algorithm means an algorithm for accommodating the moving range of the culture medium B into a range corresponding to the cultivation panel T as much as possible. In accordance with the algorithm, the association between the hole T1 in the cultivation panel T of the transplant destination and the seedbed portion of the culture medium B of the transplant source is defined by the procedures of (1) to (3), which will be described below.

### (1) Dividing into Regions in the Row Direction

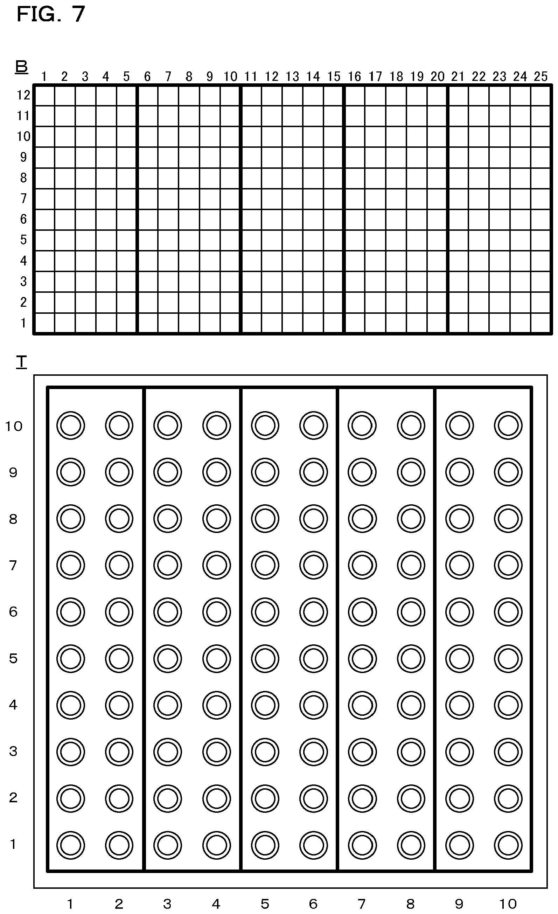

To associate the positional information (x, y) of the hole T1 in the cultivation panel T with the positional information (m, n) of the seedbed portion of the culture medium B, the cultivation panel T and the culture medium B are divided into the same number of pieces in the row direction. The "same number" here may be a common divisor of the number of columns "10" in the cultivation panel T and the number of columns "25" in the culture medium B. In the case where the number of columns in the cultivation panel T and the number of columns in the culture medium B are both prime numbers and where no common divisor exists except for "1," the same number is set as a smaller number in the numbers of columns. In Embodiment 1, "5" is employed for the "same number." FIG. 7 illustrates an example of divided regions in the row direction. The thick lines in FIG. 7 indicate an example of divisions for the first to fifth regions in the row direction.

### (2) Dividing into Regions in the Column Direction

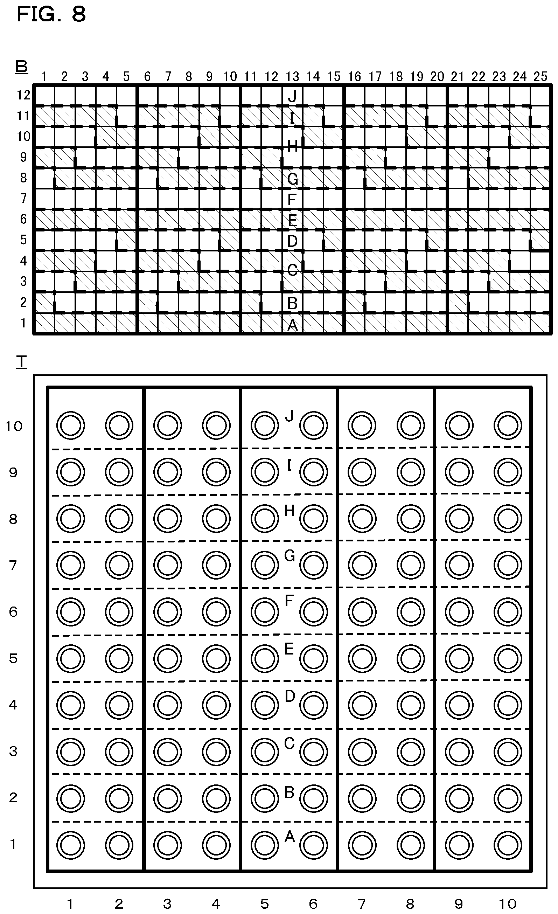

Each of the cultivation panel T and the culture medium B that is divided into "5" regions is further divided into the same number of regions in the column direction (direction different from (1) by 90 degrees). The "same number" here corresponds to a smaller number in the numbers of rows. Thus, the number of divided regions in the column direction is set as "10." FIG. 8 illustrates an example of divided regions. In FIG. 8, the boundaries of the divided regions in the column direction in the cultivation panel T are indicated by broken lines, whereas the boundaries of the divided regions in the column direction in the culture medium B are indicated by hatching. The divided regions in the column direction are then indicated as regions A to J. As illustrated in FIG. 8, each of the first to fifth regions in the cultivation panel T includes twenty holes T1. By further dividing the cultivation panel T into ten in the column direction, divided regions each having two holes T1 are obtained. Moreover, each of the first to fifth regions obtained by dividing the culture medium B in the row direction into "5" includes sixty (12 rows by 5 columns) seedbed portions. Therefore, by further dividing the culture medium B into "ten" in the column direction, one region in the culture medium B is divided into regions each including six seedbed portions. In dividing each of the seedbed portions of 12 rows × 5 columns into regions having six seedbed portions, the divided regions are associated with each other in sequence from an end of the regions, i.e. from a region with a smaller row number m and column number n, as illustrated in FIG. 8.

### (3) Association between Divided Regions

Between the cultivation panel T and the culture medium B, the holes T1 and the seedbed portions are respectively associated with each other for the regions A to J in the divided first to fifth regions in sequence from an end of each region. The expression "from an end of the regions" means that the regions in the cultivation panel T and the culture medium B are associated with each other in the order of numbers of x, y, m and n from the smallest. Here, in the case where the transplanting in the cultivation panel T proceeds along the holes T1 in the column direction in a zig-zag manner (see FIG. 6), the association for the second and fourth regions of the seedbed portions may be carried out in the order of row number m from the largest and in the order of column number n from the smallest in each row, as in the cultivation panel T.

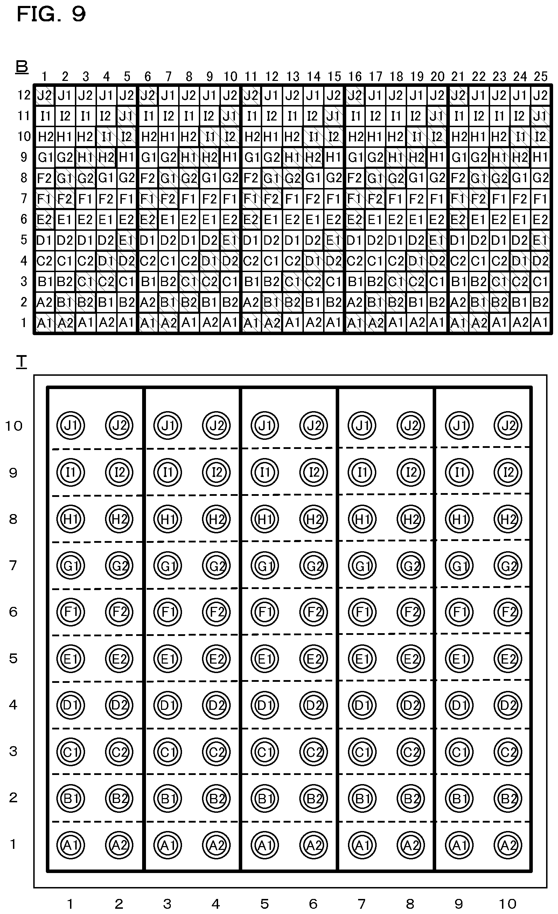

FIG. 9 illustrates an example of association between the holes T1 in the cultivation panel T and the seedbed portions of the culture medium B. The alphabetical letters in the circles corresponding to the holes T1 in the cultivation panel T in FIG. 9 indicate the divided regions A to J in the column direction, while the numerals indicate the numbers counted from the end of each region. In Embodiment 1, seedbed portions are transplanted from one culture medium B to three cultivation panels T. As illustrated in FIG. 9, therefore, the six seedbed portions in each of the regions A to J in the culture medium B are associated with the respective regions in the three cultivation panels T.

The association in (3) is specifically described with reference to FIG. 9.

To the hole T1 of "A1" in the first region of the first cultivation panel T, i.e. to the hole T1 (k, x, y)=(1, 1, 1) in the 1st row and the 1st column, the seedbed portion in the 1st row and the 1st column (m, n)=(1, 1) in the culture medium B is associated.

To the hole T1 of "A2" in the first region of the first cultivation panel T, i.e. to the hole T1 (k, x, y)=(1, 1, 2) in the 1st row and the 2nd column, the seedbed portion in the 1st row and the 2nd column (m, n)=(1, 2) in the culture medium B is associated.

To the hole T1 of "B1" in the first region of the first cultivation panel T, i.e. to the hole T1 (k, x, y)=(1, 2, 1) in the 2nd row and the 1st column, the seedbed portion of the hatched "B1," i.e. the seedbed portion in the 2nd row and the 2nd column (m, n)=(2, 2), in the culture medium B is associated.

To the hole T1 of "B2" in the first region of the first cultivation panel T, i.e. to the hole T1 (k, x, y)=(1, 2, 2) in the 2nd row and the 2nd column, the seedbed portion of the hatched "B2," i.e. the seedbed portion in the 2nd row and the 3rd column (m, n)=(2, 3), in the culture medium B is associated.

Likewise, to the hole T1 of "C1" in the first region of the first cultivation panel T, i.e. to the hole T1 (k, x, y) = (1, 3, 1) in the 3rd row and the 1st column, the seedbed portion of the hatched "C1," i.e. the seedbed portion in the 3rd row and the 3rd column (m, n) = (3, 3), in the culture medium B is associated.

The association between the positional information is incorporated into the transplant program 2P or is stored in the storage unit 22.

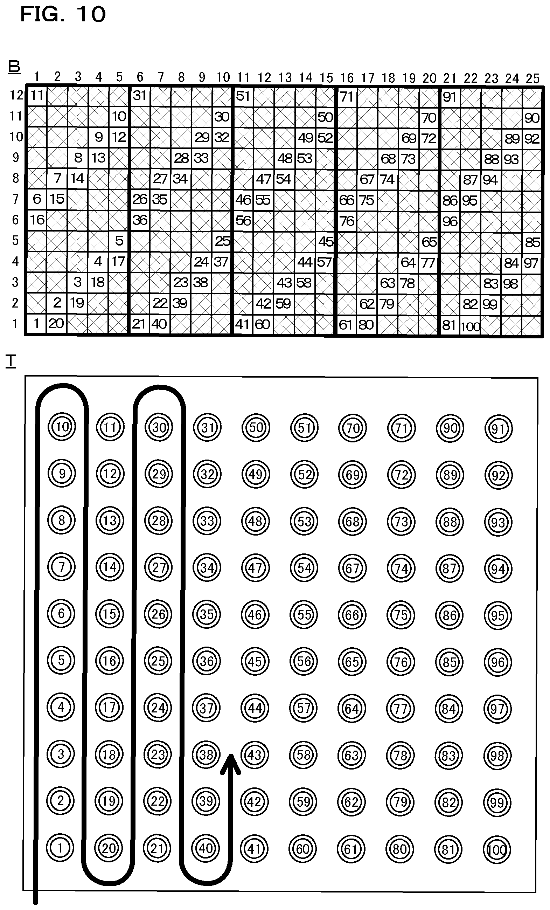

FIG. 10 illustrates the transplant order i from the culture medium B to the first cultivation panel. In the flowchart of FIG. 5, in the processing at step S4, the control unit 21 specifies the positional information of a seedbed portion in the culture medium B corresponding to a hole T1 assigned with the transplant order i. FIG. 10 indicates the transplant order i assigned to each of the holes T1 to which each of the seedbed portions is to be transplanted in a part corresponding to a specified seedbed portion. The transplant order i from the culture medium B to the first cultivation panel T is as illustrated in FIG. 9.

Based on (1) to (3) as described above, the culture medium B and the cultivation panel T are divided into regions, the seedbed portions and the holes T1 are respectively associated with each other between the regions.

As can be seen from the assignment of the transplant order i in FIG. 10, transplanting to the holes T1 in the 1st column and the 2nd column in the cultivation panel T is carried out from the seedbed portions in the 1st to 5th columns in the culture medium B. It is, therefore, not possible for the portions in the 6th to 25th columns in the culture medium B to be positioned over the holes T1 in the 1st and 2nd columns in the cultivation panel T. Likewise, transplanting to the holes T1 in the 9th and 10th columns in the cultivation panel T is carried out from the seedbed portions in the 21st to 25th columns in the culture medium B. It is, therefore, not possible for the portions in the 1st to 20th columns in the culture medium B to be positioned over the holes T1 in the 9th and 10th columns in the cultivation panel T. This prevents the culture medium B from largely deviating in the row direction from the range corresponding to the cultivation panel T in a space above the cultivation panel T.

Moreover, transplanting to the holes T1 in the 1st row in the cultivation panel T is carried out from the seedbed portions in the 1st row in the culture medium B. It is, therefore, not possible for the portions in the 2nd to 12th rows in the culture medium B to be positioned over the holes T1 in the 1st row in the cultivation panel T. Likewise, transplanting to the holes T1 in the 10th row in the cultivation panel T is carried out from the seedbed portions in the 11th or 12th row in the culture medium B. It is, therefore, not possible for the portions in the 1st to 10th rows in the culture medium B to be positioned over the holes T1 in the 1st row in the cultivation panel T. This prevents the culture medium B from largely deviating in the column direction from the range corresponding to the cultivation panel T in a space above the cultivation panel T.

The process of transplanting to the cultivation panel T will specifically be described below with reference to the drawings.

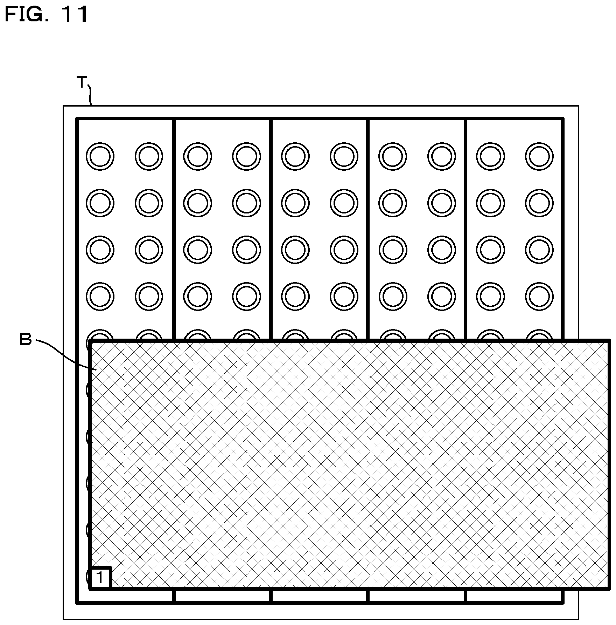

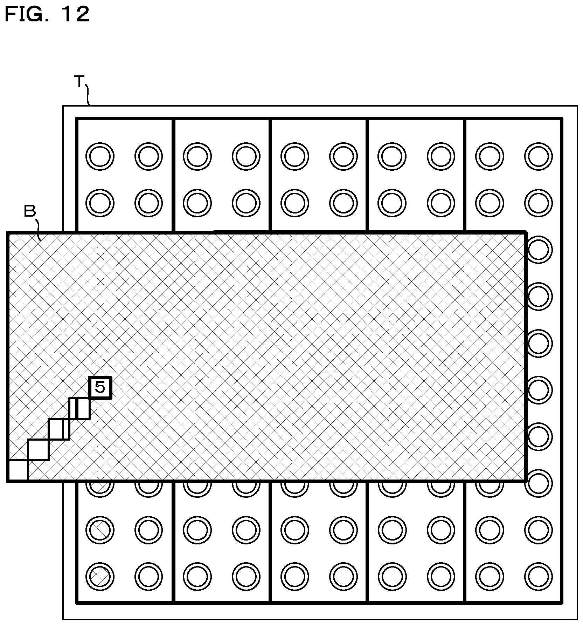

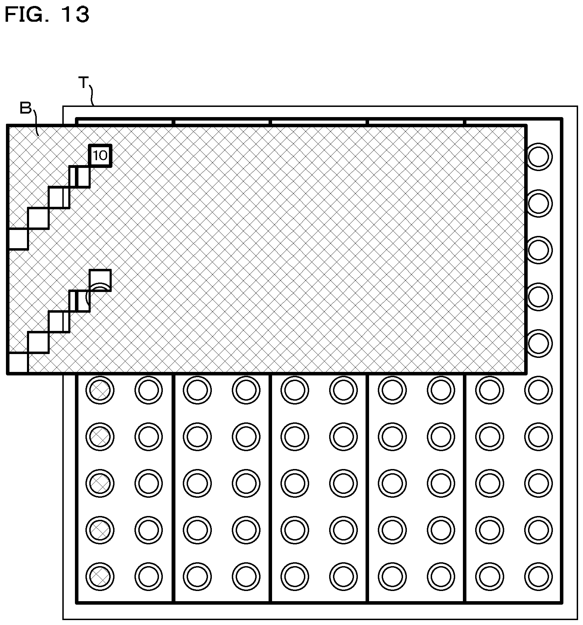

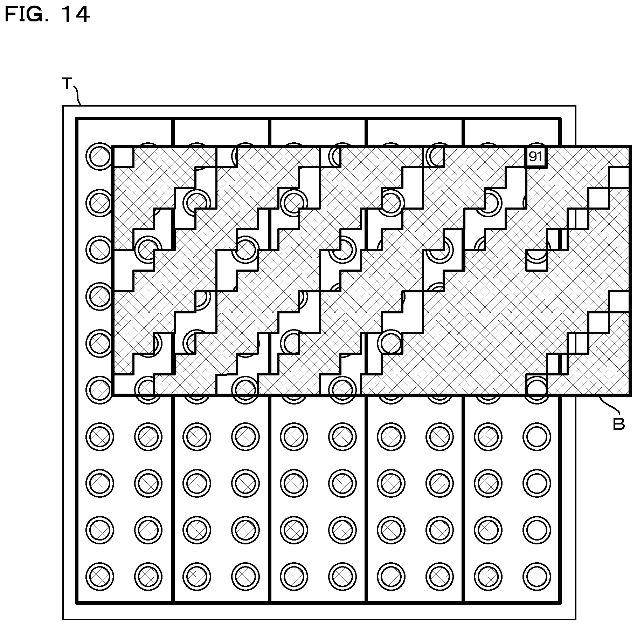

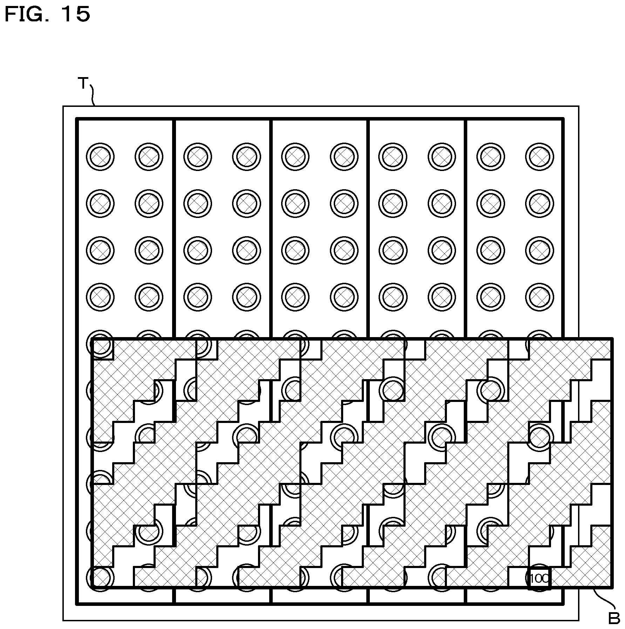

FIGS. 11 to 15 illustrate the positional relationship between the culture medium B and the cultivation panel T in transplanting seedbed portions from the culture medium B to the first cultivation panel T. FIG. 11 illustrates the positional relationship in the case where the transplant order i=1. As illustrated in FIG. 11, for the transplant order i=1, the culture medium B is deviated only by the amount corresponding to two seedbed portions in the row direction from the range corresponding to the cultivation panel T. FIG. 12 illustrates the positional relationship in the case where the transplant order i=5. Likewise, FIG. 13 illustrates the positional relationship in the case where the transplant order i=10. In the positional relationships illustrated in FIGS. 12 and 13, the culture medium B is most deviated to the side of one end (1st column) in the row direction. As illustrated in FIG. 12, however, the culture medium B is deviated from the range corresponding to the cultivation panel T only by the amount substantially corresponding to three seedbed portions. Likewise, FIG. 14 illustrates the positional relationship in the case where the transplant order i=91, and FIG. 15 illustrates the positional relationship in the case where the transplant order i=100. In the positional relationship illustrated in FIG.14, the culture medium B is most deviated to the side of the other end (10th column) in the row direction. As illustrated in FIG. 14, however, the culture medium B is deviated from the range corresponding to the cultivation panel T only by the amount substantially corresponding to three seedbed portions. Furthermore, with reference to FIGS. 11 to 15, in the column direction, the culture medium B is not deviated from the range corresponding to the cultivation panel T.

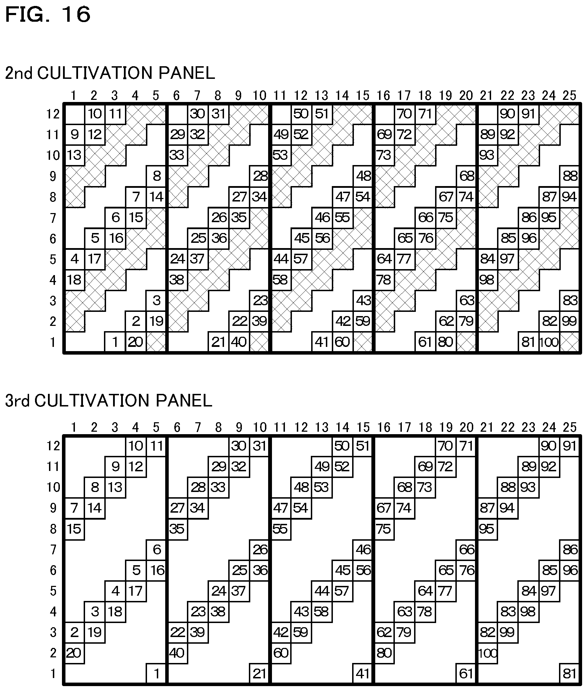

FIG. 16 illustrates the transplant order i from the culture medium B to the second and third cultivation panels T. FIG. 16, which corresponds to FIG. 10, indicates the transplant order i assigned to the hole T1 to which each seedbed portion is to be transplanted, in a part corresponding to the seedbed portion specified in the processing at step S4. In the case where each seedbed portion illustrated in FIG. 16 is transplanted to the cultivation panel T assigned with the transplant order i illustrated in FIG. 6, the culture medium B is not largely deviated from the range corresponding to the cultivation panel T even for the second and third cultivation panels T, as illustrated in FIGS. 11 to 15.

As such, in the transplant device 1 described in Embodiment 1, transplanting of all seedbed portions from the culture medium B to all holes T1 of the cultivation panel T may be achieved by a method of moving the culture medium B within a range not largely deviated from the range corresponding to the cultivation panel T in a space above the cultivation panel T. Thus, the space occupied by the transplant device 1 may be reduced.

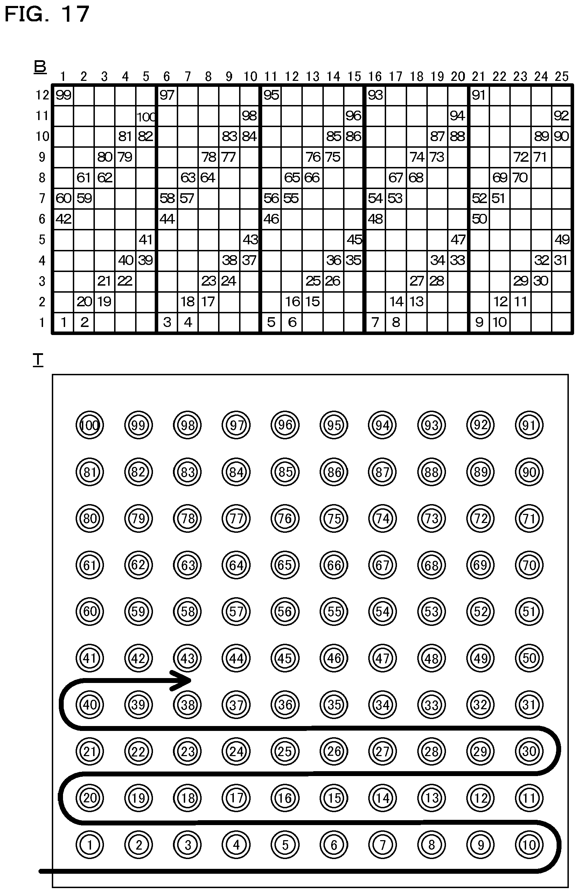

While the transplant order i is assigned, as illustrated in FIG. 6, so as to proceed in the zig-zag manner along the column direction for the transplant order illustrated in Embodiment 1, it may also be assigned so as to first proceed in the zig-zag manner along the row direction. In such a case, the transplant order i assigned to the hole T1 to which each seedbed portion is to be transplanted is as illustrated in FIG. 17. The transplant order is assigned to each hole T1 of the cultivation panel T in the zig-zag manner in order to minimize the movement of the transplant arm 50 with respect to the fixed cultivation panel T. Thus, the seedbed portions may be transplanted into the holes T1 in the cultivation panel T in the order of row numbers from the 1st to 10th rows for each column. Likewise, the order of column numbers from the 1st to 10th columns for each row may also be employed.

### (Embodiment 2)

In Embodiment 2, a cultivation panel 2 including 150 (=15×10) holes is employed. The size of a culture medium B as well as the number of divisions are the same as those in Embodiment 1. In Embodiment 2, therefore, seedbed portions are transplanted from one culture medium B to two cultivation panels T2 in one process.

The procedures in the transplant device 1 according to Embodiment 2 is similar to those in the flowchart of FIG. 5 according to Embodiment 1. In Embodiment 2, since the cultivation panel T2 is different from that in Embodiment 1, the transplant order incorporated into the transplant program 2P according to the number and size of the holes in the cultivation panel T2 is different from that in Embodiment 1.

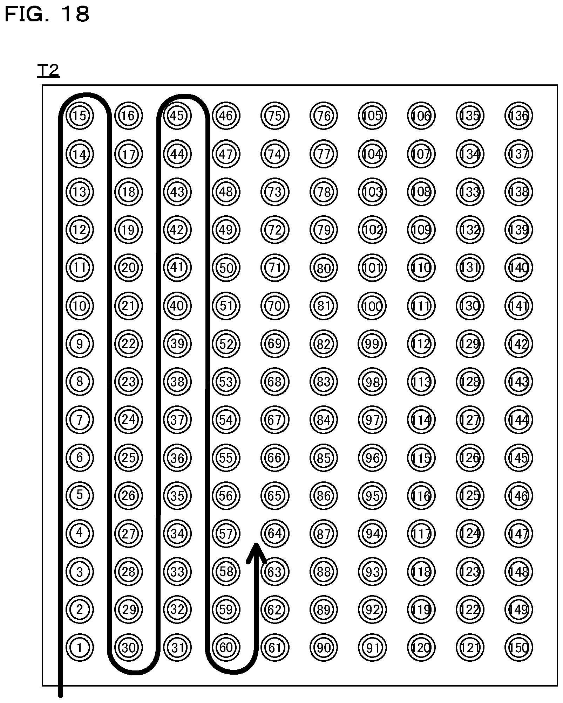

The transplant order in Embodiment 2 will specifically be described. FIG. 18 illustrates the transplant order i assigned to each hole in the cultivation panel T2 according to Embodiment 2. The numeral in each circle in FIG. 18 indicates the transplant order i. As illustrated in FIG. 18, also in the cultivation panel T2, the transplant orders i=1 to 150 are assigned to the holes of the transplant destination so as to proceed along the holes in a zig-zag manner. More specifically, the positional information for the hole with the 1st transplant order is (1, 1), the positional information for the hole with the 2nd transplant order is (2, 1), and the positional information for the hole with the 15th transplant order is (15, 1). Moreover, the positional information for the hole with the 16th transplant order is (15, 2), and the positional information for the hole with the 17th transplant order is (14, 2). The positional information in accordance with the transplant order may be represented as (1, 1), (2, 1), ..., (15, 1), (15, 2), (14, 2), ... (1, 2), (1, 3), (2, 3), ... (15, 3), (15, 4), (14, 4), ....

The association between the positional information (x, y) of the hole in the k(k=1, 2)-th cultivation panel T2 and the positional information (m, n) of the seedbed portion is decided as described below on the basis of a predetermined algorithm as in Embodiment 1, based on the size of the cultivation panel T2, the number and arrangement of the holes, as well as the size of the culture medium B and the number of divided regions for the seedbed portions.

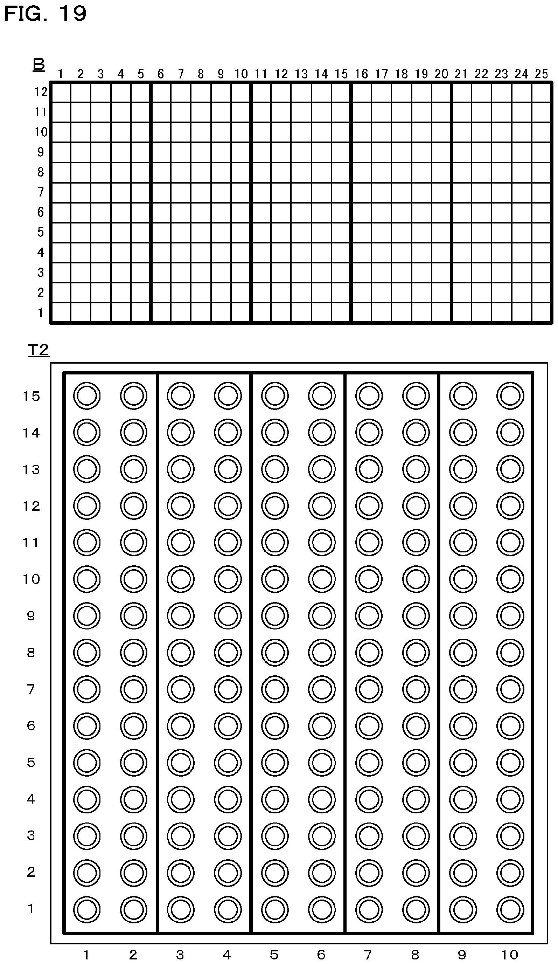

FIG. 19 illustrates an example of divided regions in the row direction according to Embodiment 2. In Embodiment 2 also, the cultivation panel T2 as well as the culture medium B are divided in the row direction into "5" which is a common divisor of the number of columns "10" in the cultivation panel T2 and the number of columns "25" in the culture medium B.

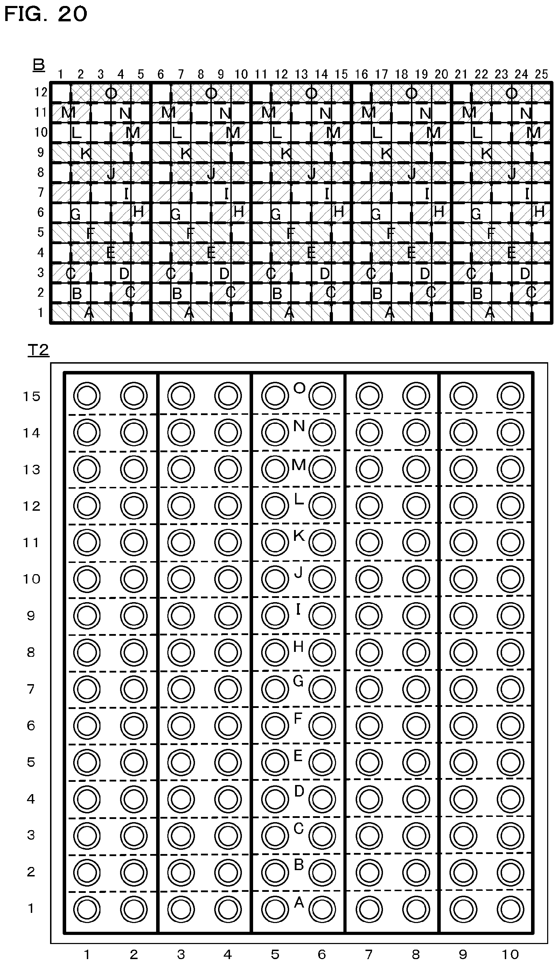

FIG. 20 illustrates an example of divided regions according to Embodiment 2. In Embodiment 2, each of the cultivation panel T2 and the culture medium B is divided into regions corresponding to the number of rows "15" for the holes in the cultivation panel T2. In FIG. 20, the boundaries of the divided regions in the column direction in the cultivation panel T2 are indicated by broken lines, whereas the boundaries of the divided regions in the column direction in the culture medium B are indicated by hatching. The divided regions in the column direction are then indicated as regions A to O. As illustrated in FIG. 20, each of the first to fifth regions in the cultivation panel T2 includes thirty holes. By further dividing the cultivation panel T in the column direction into "15," divided regions each having two holes are obtained. Moreover, each of the first to fifth regions obtained by dividing the culture medium B in the row direction into "5" includes sixty (12 rows by 5 columns) seedbed portions. By further dividing these regions into "15" in the column direction, one region in the culture medium B is divided into regions including four seedbed portions.

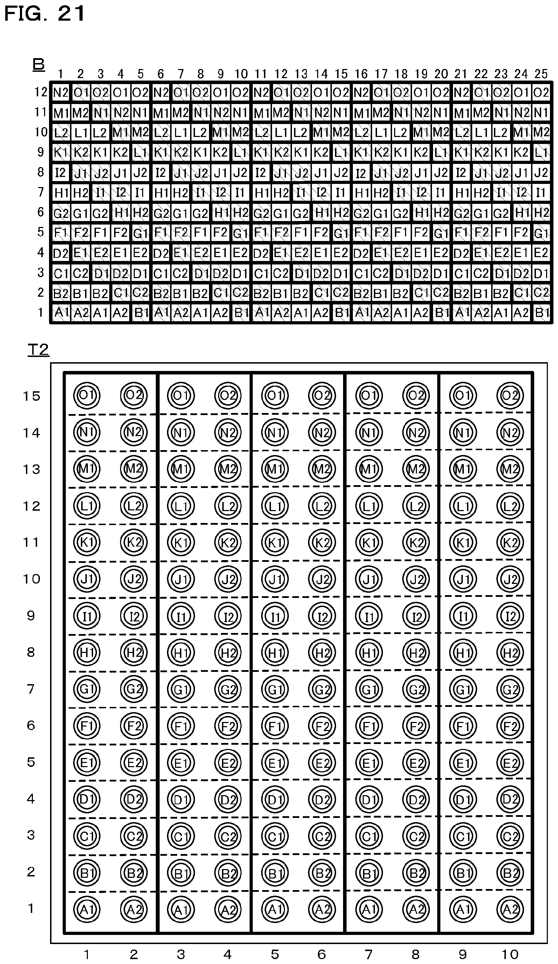

FIG. 21 illustrates an example of association between the holes in the cultivation panel T2 and the seedbed portions of the culture medium B according to Embodiment 2. The alphabetical letters in the circles corresponding to the holes in the cultivation panel T2 in FIG. 21 indicate the divided regions A to O in the column direction, while the numerals indicate the numbers counted from the end of each region. In Embodiment 2, seedbed portions are transplanted from one culture medium B to two cultivation panels T2. As illustrated in FIG. 21, therefore, the four seedbed portions included in each of the regions A to O in the culture medium B are associated with the respective regions in the two cultivation panels T.

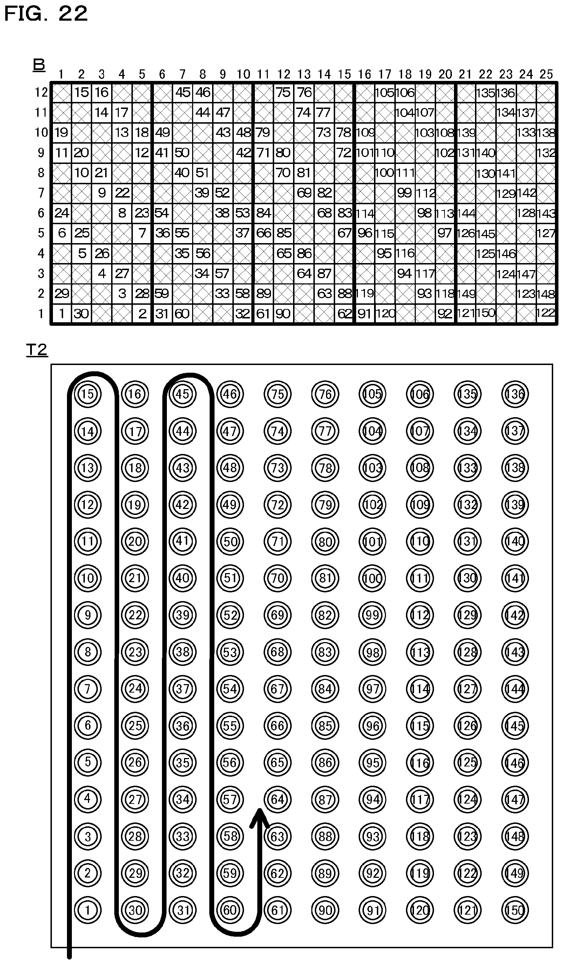

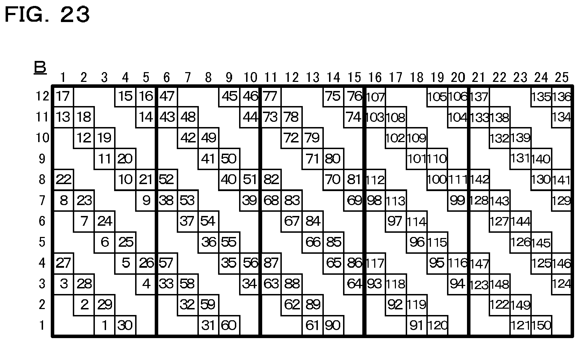

FIGS. 22 and 23 illustrate the transplant order i from the culture medium B to the cultivation panel T2 according to Embodiment 2. In the processing at step S4 described above, the control unit 21 specifies the positional information (m, n) of the seedbed portion in the culture medium B that corresponds to a hole assigned with the transplant order i. FIGS. 22 and 23 indicate, at a part corresponding to the specified seedbed portion, the transplant order i assigned to the hole to which each seedbed portion is to be transplanted. The transplant order i from the culture medium B to the first cultivation panel T2 is as indicated on the culture medium B in FIG. 22. Likewise, the transplant order i from the culture medium B to the second cultivation panel T2 is as indicated on the culture medium B in FIG. 23.

In Embodiment 2 also, transplanting to the holes in the 1st and 2nd columns in the cultivation panel T2 is carried out from the seedbed portions in the 1st to 5th columns in the culture medium B, as can be seen from FIG. 22. It is, therefore, not possible for the portions in the 6th to 25th columns in the culture medium B to be positioned over the holes in the 1st and 2nd columns in the cultivation panel T2. Likewise, transplanting to the holes T1 in the 9th and 10th columns in the cultivation panel T2 is carried out from the seedbed portions in the 21st to 25th columns in the culture medium B. It is, therefore, not possible for the portions in the 1st to 20th columns in the culture medium B to be positioned over the holes in the 9th and 10th columns in the cultivation panel T2. This prevents the culture medium B from largely deviating in the row direction from the range corresponding to the cultivation panel T2 in a space above the cultivation panel T2.

Moreover, transplanting to the holes in the 1st row in the cultivation panel T2 is carried out from the seedbed portions in the 1st row in the culture medium B. It is, therefore, not possible for the portions in the 2nd to 12th rows in the culture medium B to be positioned over the holes T1 in the 1st row in the cultivation panel T2. Likewise, seedbed portions are transplanted to the holes in 15th column in the cultivation panel T2 from those in the 12th column in the culture medium B. It is, therefore, not possible for the portions in the 1st to 11th rows in the culture medium B to be positioned over the holes in the 15th row in the cultivation panel T2. This prevents the culture medium B from largely deviating in the column direction from the range corresponding to the cultivation panel T in a space above the cultivation panel T2.

### (Embodiment 3)

In Embodiment 3, a cultivation panel T3 including 98 (=14×7) holes is employed. The size of a culture medium B as well as the number of divisions in the culture medium B are the same as those in Embodiment 1. In Embodiment 3, one culture medium B has redundancies to fill all the holes in multiple cultivation panels T3. However, the number of seedbed portions in the culture medium B is approximately three times the number of holes in the cultivation panel T3, so that the seedbed portions are transplanted from one culture medium B to three cultivation panels T3 in one process, as in Embodiment 1. The remaining portions may be utilized for another cultivation panel T3, or may be used in place of poorly-grown seedlings.

The procedures in the transplant device 1 in Embodiment 3 is similar to those in the flowchart of FIG. 5 in Embodiment 1. Since the cultivation panel T3 in Embodiment 3 is different from that in Embodiment 1, the association incorporated in advance into the transplant program 2P in accordance with the number and size of the holes in the cultivation panel T3 is different from that in Embodiment 1.

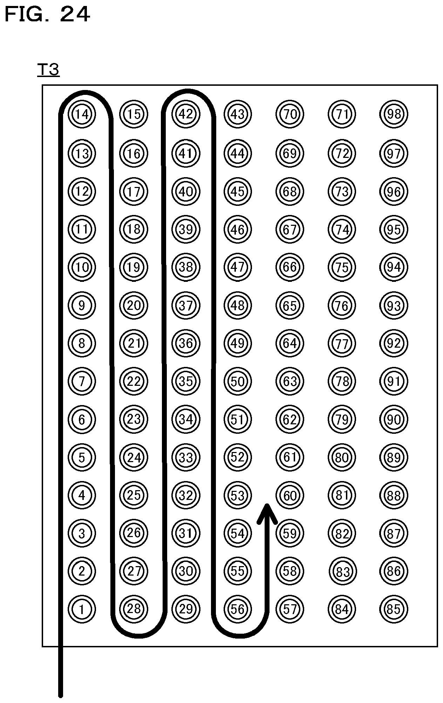

The transplant order in Embodiment 3 will specifically be described. FIG. 24 illustrates the transplant order i assigned to each hole in the cultivation panel T3 according to Embodiment 3. The numeral in each circle in FIG. 24 indicates the transplant order i. As illustrated in FIG. 24, also in the cultivation panel T3, the transplant orders i =1 to 98 are assigned to the holes of the transplant destination so as to proceed along the holes in the column direction in a zig-zag manner. More specifically, the positional information for the hole with the 1st transplant order is (1, 1), the positional information for the hole with the 2nd transplant order is (2, 1), and the positional information for the hole with the 14th transplant order is (14, 1). The positional information for the hole with the 15th transplant order is (14, 2). The positional information in accordance with the transplant order may be represented as (1, 1), (2, 1), ..., (14, 1), (14, 2), (13, 2), ... (1, 2), (1, 3), (2, 3), ... (14, 3), (14, 4), (13, 4), ....

The association between the positional information (x, y) of the hole in the k (k=1, 2)-th cultivation panel T3 and the positional information (m, n) of the seedbed portion is decided as described below on the basis of a prescribed algorithm as in Embodiment 1, based on the size of the cultivation panel T3, the number and arrangement of holes, as well as the size of the culture medium B and the number of divided seedbed portions.

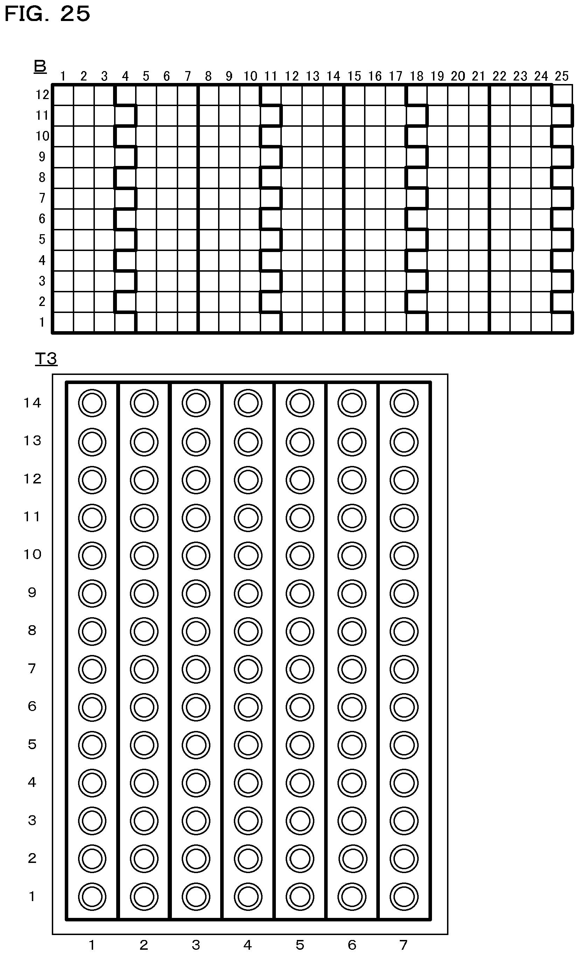

FIG. 25 illustrates an example of divided regions in the row direction according to Embodiment 3. In Embodiment 3, as the number of columns "7" for the cultivation panel T3 and the number of columns "25" for the culture medium B are both prime numbers, the cultivation panel T3 and the culture medium B are divided into seven regions to correspond to the number of columns "7" for the cultivation panel T3 which is a smaller numeral. Since the number of columns "25" for the culture medium B cannot be divided by the number of divisions "7," the seedbed portions in the same column may be shared by two adjacent regions. Here, the number of seedbed portions included in the first to seventh regions is "42."

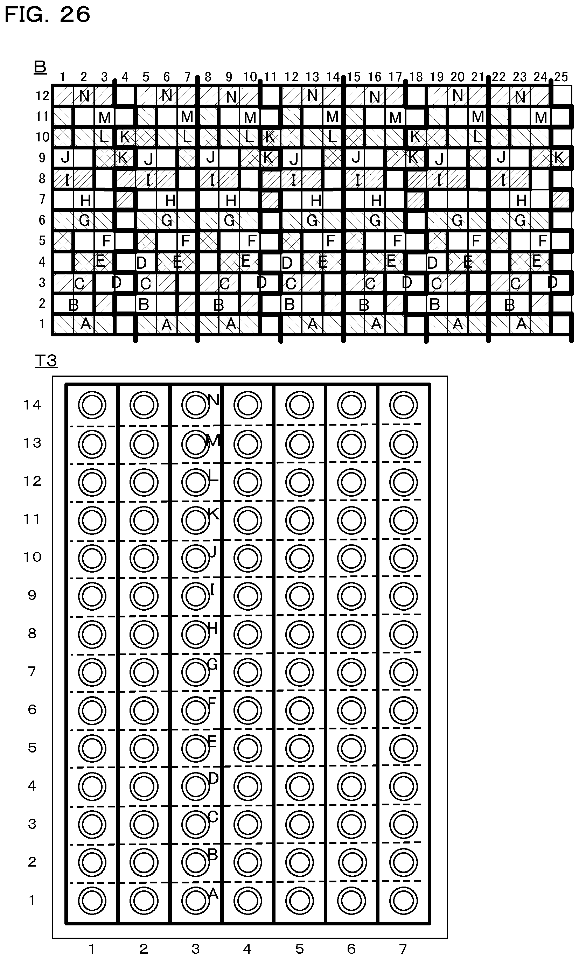

FIG. 26 illustrates an example of divided regions according to Embodiment 3. In Embodiment 3, each of the cultivation panel T3 and the culture medium B is divided into regions corresponding to the number of rows "14" for the holes in the cultivation panel T3. In FIG. 26, the boundaries of the divided regions in the column direction in the cultivation panel T3 are indicated by broken lines, whereas the boundaries of the divided regions in the column direction in the culture medium B are indicated by hatching. The divided regions in the column direction are then indicated as regions A to N. As illustrated in FIG. 26, fourteen rows of holes are present in the cultivation panel T3. By further dividing the cultivation panel T3 into "14" regions in the column direction, the first to seventh regions are divided into regions each having one hole. Moreover, each of the first to seventh regions obtained by dividing the culture medium B in the row direction into "7" includes "42" seedbed portions. By further dividing the culture medium B into "14" regions in the column direction, one region in the culture medium B is divided into regions each having three seedbed portions.

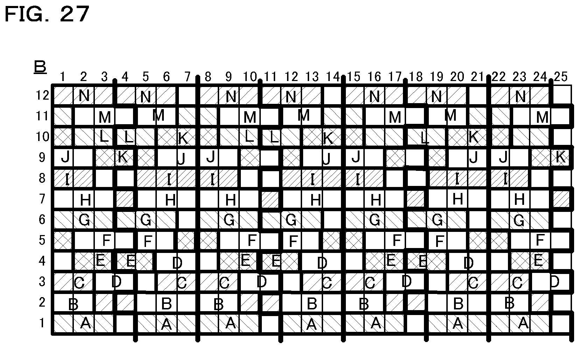

The dividing in the column direction is not limited to that illustrated in FIG. 26. As illustrated in FIG. 24, the transplant order on the cultivation panel T3 proceeds along the holes in the column direction in a zig-zag manner. Thus, the second, fourth and sixth regions of the seedbed portions may be divided in the order of the row number m from the largest, and in the order of the column number n from the smallest for each row. FIG. 27 illustrates another example of divided regions according to Embodiment 3. FIG. 27 illustrates an example where the regions are divided in the order of the row number m from the largest and in the order of the column number n from the smallest for each row.

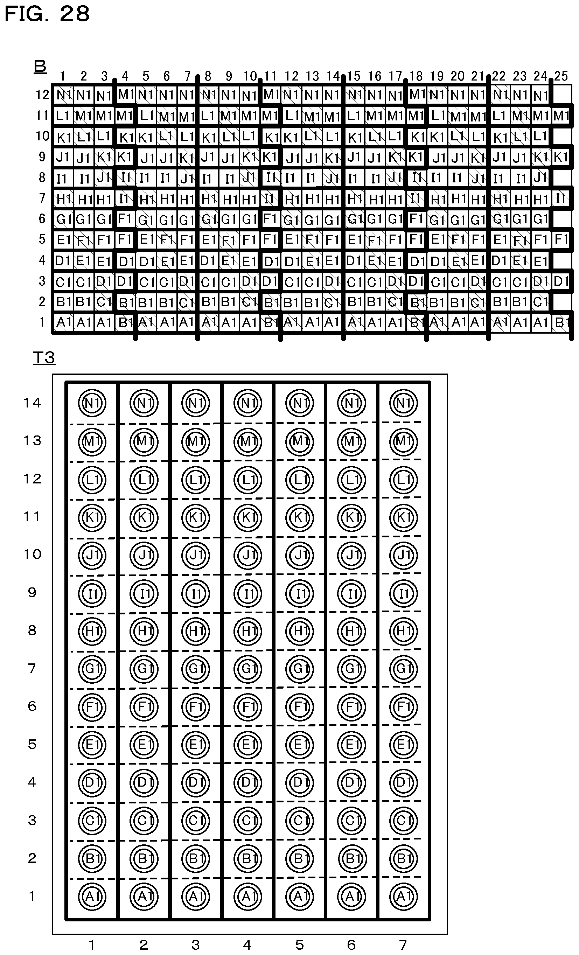

FIG. 28 illustrates an example of association between the holes in the cultivation panel T3 and the seedbed portions of the culture medium B according to Embodiment 3. The alphabetical letters in the circles corresponding to the holes in the cultivation panel T3 in FIG. 28 indicate the divided regions A to N in the column direction, while the numeral (only "1" is assigned here) indicates the number counted from the end of each region. In Embodiment 3, seedbed portions are transplanted from one culture medium B to three cultivation panels T3. As illustrated in FIG. 28, therefore, the three seedbed portions in each of the regions A to N in the culture medium B are associated with the respective regions in the three cultivation panels T3.

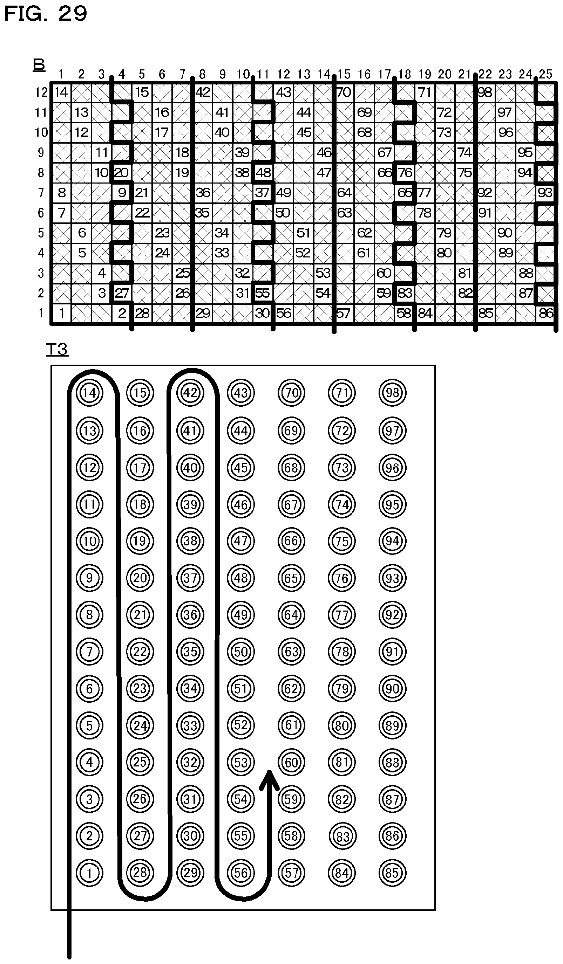

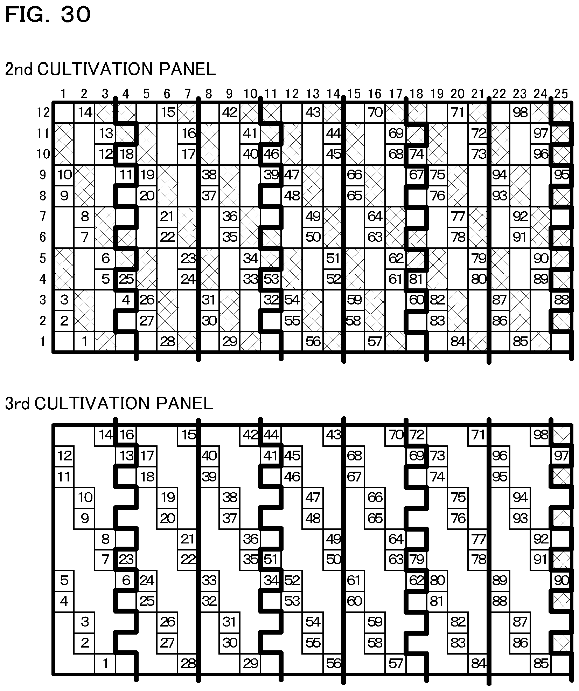

FIGS. 29 and 30 illustrate the transplant order i from the culture medium B to the cultivation panel T3 according to Embodiment 3. In the processing at step S4 described above, the control unit 21 specifies the positional information (m, n) of the seedbed portion in the culture medium B that corresponds to a hole assigned with the transplant order i. FIGS. 29 and 30 indicate the transplant order i assigned to each hole to which each seedbed portion is to be transplanted, at a part corresponding to the specified seedbed portion. The transplant order i from the culture medium B to the first cultivation panel T3 is as indicated on the culture medium B in FIG. 29. Likewise, the transplant order i from the culture medium B to the second and third cultivation panels T3 is as indicated on the culture medium B in FIG. 30.

In Embodiment 3 also, as can be seen from FIG. 29, the seedbed portions are transplanted into the holes in the 1st column in the cultivation panel T3 from the seedbed portions in the 1st to 4th columns in the culture medium B. It is, therefore, not possible for the portions in the 5th to 25th columns in the culture medium B to be positioned over the holes in the 1st column in the cultivation panel T3. Likewise, transplanting to the holes in the 7th column in the cultivation panel T3 is carried out from the seedbed portions in the 22nd to 25th columns in the culture medium B. It is, therefore, not possible for the portions in the 1st to 21th columns in the culture medium B to be positioned over the holes in the 7th column in the cultivation panel T3. This prevents the culture medium B from largely deviating in the row direction from the range corresponding to the cultivation panel T3 in a space above the cultivation panel T3.

Moreover, seedbed portions are transplanted to the holes in the 1st row in the cultivation panel T3 from those in the 1st row in the culture medium B. It is, therefore, not possible for the portions in the 2nd to 12th rows in the culture medium B to be positioned over the holes in the 1st row in the cultivation panel T3. Likewise, seedbed portions are transplanted to the holes in the 14th row in the cultivation panel T3 from those in the 12th row in the culture medium B. It is, therefore, not possible for the portions in the 1st to 11th rows in the culture medium B to be positioned over the holes in the 14th row in the cultivation panel T3. This prevents the culture medium B from largely deviating in the column direction above the cultivation panel T3 from the range corresponding to the cultivation panel T3.

### (Variation Example)

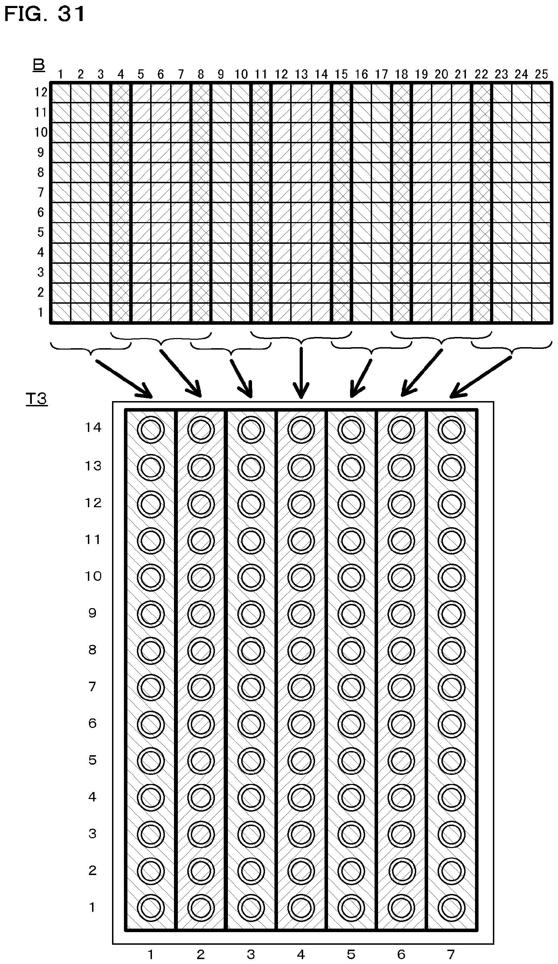

In Embodiment 3 described above, six seedbed portions in the even rows and 25th column out of the three hundred seedbed portions in the culture medium B may be left unused and be used to replace poorly-grown seedlings. Even if, however, all the seedbed portions are used, the moving range of the culture medium B above the cultivation panel T3 may be so kept as not to largely deviate from the range corresponding to the cultivation panel T3 by dividing the culture medium B and the cultivation panel T3 into regions in accordance with a similar algorithm. FIG. 31 illustrates another example of divided regions according to Embodiment 3. As illustrated in FIG. 31, in Variation Example, the culture medium B is divided into seven regions in the row direction so as to correspond to the number of columns "7" in the cultivation panel T3. In FIG. 31, the divided regions are overlapped with one another by only one column for each of the adjacent regions. Each overlapped column may be shared by the adjacent regions. Here, using the 1st to 7th rows in the culture medium B, the culture medium B may be divided into regions with an equal area each including 25 seedbed portions out of the 175 seedbed portions of 7 rows and 25 columns. The seedbed portions in the 8th to 12th rows are combined with the 1st and 2nd rows in the next culture medium B and are divided into regions with an equal area each including 25 seedbed portions, and the 3rd to 9th rows in the next culture medium B is similarly divided into regions having an equal area. The seedbed portions in the 10th to 12th rows in the next culture medium B may be combined with the seedbed portions in the 1st to 4th rows in the third culture medium B, and may similarly be divided into regions with an equal area, and so forth.

Also in the case of the dividing as illustrated in FIG. 31, it is so limited that seedbed portions are transplanted to the holes in the 1st column in the cultivation panel T3 from the seedbed portions in the 1st to 4th columns in the culture medium B, and that seedbed portions are transplanted to the holes in the 2nd column from the seedbed portions in the 4th to 8th columns in the culture medium B. It is so limited that seedbed portions are transplanted to the holes in the 3rd column from the seedbed portions in the 8th to 11th columns in the culture medium B, that seedbed portions are transplanted to the holes in the 4th column from the seedbed portions in the 11th to 15th columns in the culture medium B, and that seedbed portions are transplanted to the holes in the 5th column from the seedbed portions in the 15th to 18th columns in the culture medium B. It is so limited that seedbed portions are transplanted to the holes in the 6th column from the seedbed portions in the 18th to 22nd columns in the culture medium B, and that seedbed portions are transplanted to the holes in the 7th column from the seedbed portions in the 22nd to 25th columns in the culture medium B. This prevents the culture medium B from largely deviating at least in the row direction from the range corresponding to the cultivation panel T3.

While the dividing example illustrated in FIG. 31 shows that the culture medium B in the longitudinal direction (row direction) is divided, the culture medium B in the short direction may also be divided. However, dividing in the longitudinal direction may more significantly reduce the amount of deviation from the range corresponding to the cultivation panel T3 as much as possible, thereby effectively saving space for the transplant device 1.

### (Embodiment 4)

In transplanting by the procedures described in Embodiments 1 to 3, the transplant device 1 may be configured to concurrently sort and select seedlings. The transplant device 1 according to Embodiment 4 obtains sorting information for specifying the positional information of a poorly-grown seedling in the seedbed portions included in the culture medium B by receiving the information through a communication culture medium or a storage culture medium from another device or by accepting operation at the operation unit 23 of itself, and sorts seedlings based on the sorting information. As the configuration of the transplant device 1 is similar to that in Embodiment 1, except for a hardware necessary for receiving information from another device through the communication culture medium or storage culture medium, and for the processing procedures described below, corresponding parts are denoted by the same reference numbers and will not be described in detail.

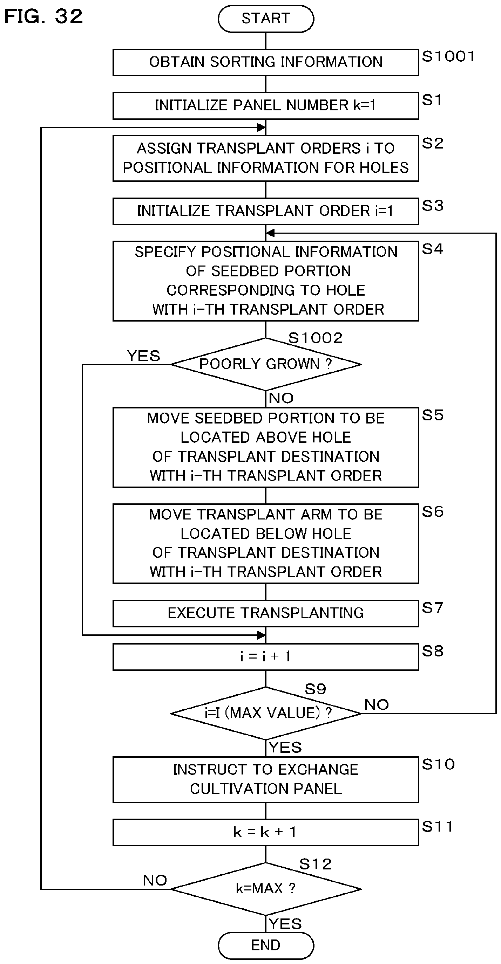

FIG. 32 is a flowchart illustrating an example of a procedure of transplanting according to Embodiment 4. The procedures common to those illustrated in the flowchart of FIG. 5 in Embodiment 1 out of the procedures illustrated in the flowchart of FIG. 32 are denoted by the same step numbers and will not be described in detail.

In Embodiment 4, after the culture medium B is accommodated into the holder 40 and the cultivation panel T is in place, the control unit 21 first obtains sorting information at the start of the processing (step S1001). The sorting information is information indicating good/poor that is associated with the positional information (m, n) of each seedbed portion in the culture medium B. The sorting information may be indicated as binary values, or may be a numeric value representing an index.

At step S4, in the case where the positional information (m, n) of a seedbed portion in the culture medium B of the transplant source that is associated with the positional information (x, y) of a hole T1 with the transplant order i in the k-th cultivation panel T (S4), the control unit 21 refers to sorting information corresponding to the positional information of the specified seedbed portion. Before the instruction for moving the culture medium B (S5) and the instruction for moving the transplant arm 50 (S6) are given, the control unit 21 determines whether or not a seedling of the plant P grown in the seedbed portion at the position corresponding to the positional information specified based on the sorting information that had been referred to is poorly grown (step S1002).

If it is determined at step S1002 that the seedling is not poorly grown (S1002: NO), the control unit 21 gives instructions to move the culture medium B (S5) and to move the transplant arm 50 (S6), executes the transplanting (S7), and proceeds to step S8.

If it is determined at step S1002 that the seedling is poorly grown (S1002: YES), the control unit 21 proceeds to step S8 by skipping steps S5 to S7. After terminating the processing, if there is a vacant hole among the holes T1 in the cultivation panel T, such control is performed that the seedlings are transplanted in sequence from the seedbed portions in another culture medium B that has been buffered.

Thus, by the method of moving the culture medium B within a range where the culture medium B is not largely deviated from the range corresponding to the cultivation panel T in a space above the cultivation panel, transplanting of good seedlings from the seedbed portions in the culture medium B to the holes T1 in the cultivation panel T may be achieved.

### (Embodiment 5)

In Embodiments 1 to 4, the transplant order i is assigned in sequence to the cultivation panels T, T2 and T3 so as to proceed along the holes T1 in a zig-zag manner (FIGS. 6, 17, 18 and 24). In Embodiment 5, the transplant order i is assigned to the culture medium B so as to proceed along the seedbed portions in a zig-zag manner, while the seedbed portions and the holes T1 of the transplant destination are associated with each other such that the culture medium B is not deviated from the range corresponding to the transplant panel as much as possible. The cultivation panel used in Embodiment 5 is denoted by a reference character T4.

The hardware configuration of the transplant device 1 according to Embodiment 5 is similar to the configuration in Embodiment 1. Common configuration parts are denoted by the same reference codes and will not be described in detail. The transplant procedures in Embodiment 5 is similar to those in the flowchart of FIG. 5 in Embodiment 1. In Embodiment 5, however, the method of deciding the association between the holes T1 in the cultivation panel T4 and the seedbed portion in the culture medium B, which is decided in advance, as well as the assignment of the transplant orders i are different from those in Embodiments 1 to 4.

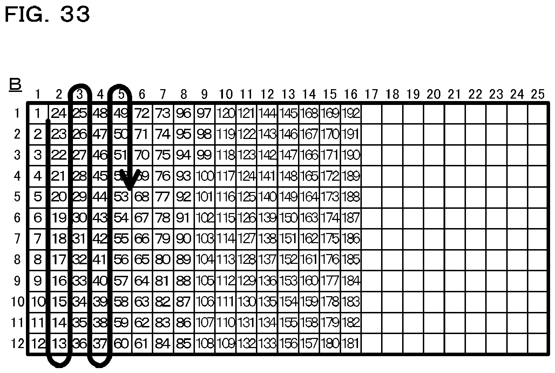

FIG. 33 illustrates the transplant orders i assigned to the seedbed portions in the culture medium B according to Embodiment 5. The positional information in the culture medium B is identified by n rows and p columns while the row in the back of the holder 40 in FIG. 1 is regarded as the 1st row and the leftmost column is regarded as the 1st column (n=1 to 12, p=1 to 25). Likewise, the positional information in the cultivation panel T4 is identified by s rows and u columns while the row in the back in FIG. 1 is regarded as the 1st row and the leftmost column is regarded as the 1st column (s=1 to 13, u=1 to 14). Thus, the positional information for the seedbed portion with the 1st transplant order is (1, 1), the positional information for the seedbed portion with the 2nd transplant order is (2, 1), and the positional information for the seedbed portion with the 12th transplant order is (12, 1). Moreover, the positional information for the seedbed portion with the 13th transplant order is (12, 2), and the positional information for the seedbed portion with the 14th transplant order is (11, 2). The positional information in accordance with the transplant order may be represented as (1, 1), (2, 1), ..., (12, 1), (12, 2), (11, 2), ... (1, 2), (1, 3), (2, 3), ... (12, 3), (12, 4), (11, 4), ....

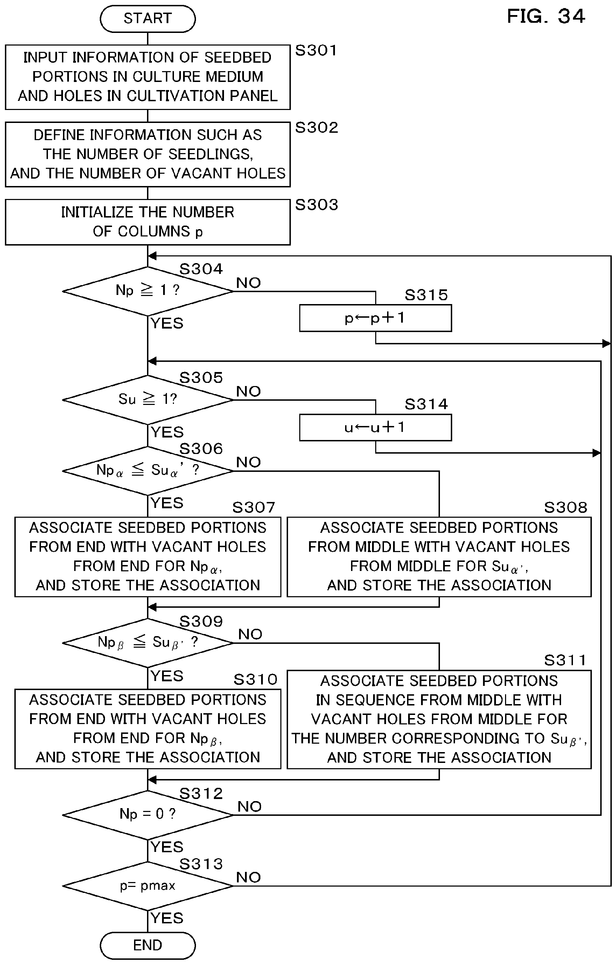

FIG. 34 is a flowchart illustrating an example of a procedure of deciding the association between the seedbed portions in the culture medium B and the holes T1 in the cultivation panel T4 according to Embodiment 5.

The control unit 21 of the transplant control unit 20 inputs information on the array of the seedbed portions to be used in the culture medium B, information on the array of the holes in the cultivation panel T4, and information on seedbed portions left unused as well as vacant holes T1 (step S301). The input of information performed at step S301 may be achieved by a worker inputting a numeric value on the operation unit 23, or may be achieved by image analysis on photographed images of the cultivation panel T4 and the culture medium B. Furthermore, in the case where a vacant hole T1 is left in the cultivation panel T4 or where an unused seedbed portion is left in the culture medium B, if the control information at the previous transplanting is stored in the storage unit 22, the control unit 21 may input information on the remaining seedbed portion and vacant holes T1 from the storage unit 22.

The control unit 21 divides each of the culture medium B and the cultivation panel T4 into two in the column direction of the culture medium B based on the input information, and defines information such as the number of seedlings, the number of vacant holes and the like for each region in the two divided regions in the culture medium B (step S302). At step S302, one of the divided regions in the culture medium B is referred to as a region α, and the other one of the divided regions is referred to as a region β. Moreover, one of the divided regions in the cultivation panel T4 is referred as α' to correspond to the region α in the culture medium B, and the other one of the divided regions is referred to as a region β' to correspond to the region β in the culture medium B. It is noted that the direction of dividing at step S302 may also be the row direction. The direction of dividing the cultivation panel T4 is set to correspond to the direction in which the culture medium B is divided.

Based on the defined information, the control unit 21 first initializes the number of columns p for the seedbed portions to be transplanted and the number of columns u for the holes T1 in the cultivation panel T4 of the transplant destination (step S303).

It is determined on whether or not an unused seedbed portion is present in the p-th column in the culture medium B depending on whether or not the number Np of unused seedbed portions in the p-th column defined at step S302 is 1 or larger (step S304). If it is determined at step S304 that an unused seedbed portion is present in the p-th column (S304: YES), the control unit 21 determines whether or not a vacant hole T1 is present in the u-th column in the cultivation panel T4 of the transplant destination depending on whether or not the number Su of vacant holes T1 in the u-th column defined at step S302 is 1 or larger (step S305).

If it is determined at step S305 that a vacant hole T1 is present in the u-th column in the cultivation panel T4 of the transplant destination (S305: YES), the control unit 21 compares the number Np_{α} of unused seedbed portions in the p-th column (region αp) in the region α in the culture medium B with the number Su_{α'} of vacant holes T1 in the u-th (region α'u) column in the region α' of the cultivation panel T4, and determines whether or not the number Np_{α} of unused seedbed portions is equal to or smaller than the number Su_{α'} of vacant holes T1 (step S306).

If it is determined at step S306 that the number Np_{α} of unused seedbed portions is equal to or smaller than the number Su_{α'} of vacant holes T1 (S306: YES), the control unit 21 associates the seedbed portions in the p-th column in the region α of the culture medium B in sequence from the end of the culture medium B with the vacant holes T1 in the u-th column in the region α' of the cultivation panel T from the end of the cultivation panel T4 for the number corresponding to the number Np_{α} of the seedbed portions, and stores the association (step S307). Subsequently, the control unit 21 proceeds to step S309.

If it is determined at step S306 that the number Np_{α} of unused seedbed portions is larger than the number Su_{α'} of vacant holes T1 (S306: NO), the control unit 21 associates the seedbed portions in the p-th column in the region α of the culture medium B in sequence from the middle of the culture medium B with the vacant holes T1 in the u-th column in the region α' of the cultivation panel T4 in sequence from the middle of the cultivation panel T4 for the number corresponding to the number Su_{α'} of vacant holes T1, and stores the association (step S308). Subsequently, the control unit 21 proceeds to step S309.

The control unit 21 then compares the number Np_{β} of unused seedbed portions in the p-th column in the region β of the culture medium B (region βp) with the number Su_{β'} of vacant holes T1 in the u-th column in the region β' of the cultivation panel T4 (region β'u), and determines whether or not the number Np_{β} of unused seedbed portions is equal to or smaller than the number Su_{β'} of vacant holes T1 (step S309).

If it is determined at step S309 that the number Np_{β} of unused seedbed portions is equal to or smaller than the number Su_{β'} of vacant holes T1 (S309: YES), the control unit 21 associates the seedbed portions in the p-th column in the region β of the culture medium B in sequence from the end of the culture medium B with the vacant holes T1 in the u-th column in the region β' of the cultivation panel T4 in sequence from the end of the cultivation panel T4 for the number corresponding to the number Np_{β} of seedbed portions, and stores the association (step S310). Subsequently, the control unit 21 proceeds to step S312.

If it is determined at step S309 that the number Np_{β} of unused seedbed portions is larger than the number Su_{β'} of vacant holes T1 (S309: NO), the control unit 21 associates the seedbed portions in the p-th column in the region β of the culture medium B in sequence from the middle of the culture medium B for the number corresponding to the number Su_{β'} of vacant holes T1 with the vacant holes T1 in the u-th column in the region β' of the cultivation panel T4 in sequence from the middle of the cultivation panel T4, and stores the association (step S311). Subsequently, the control unit 21 proceeds to step S312.

The control unit 21 then determines whether or not the number Np of unused seedbed portions in the p-th column in the culture medium B is zero (step S312). If it is determined at step S312 that the number Np of unused seedbed portions in the p-th column is zero (S312: YES), the control unit 21 determines whether or not the p-th column in the culture medium B has a maximum number of columns pₘₐₓ (step S313).

If it is determined at step S313 that the p-th column in the culture medium B has the maximum number of columns pₘₐₓ (S313: YES), the control unit 21 terminates the associating operation between the seedbed portions in the culture medium B and the holes T1 in the cultivation panel T4.

If it is determined at step S312 that the number Np of unused seedbed portions in the p-th column is not zero (S312: NO), the control unit 21 increments the number of columns u in the cultivation panel T4 by one (step S314), and returns the processing to step S305. If it is determined at step S305 that Su is 0 (zero) (S305: NO), the control unit 21 also increments the number of columns u by one (S314), and returns the processing to step S305.

If it is determined at step S313 that the number of p-th column in the culture medium B is not the maximum number of columns pₘₐₓ (S313: NO), the control unit 21 increments the number of columns p in the culture medium B (step S315), and returns the processing to step S304. If it is determined at step S304 that Np is 0 (zero) (S304: NO), the control unit 21 also increments the number of columns p by one (S315), and returns the processing to step S304.

According to the procedures as described above, the association between the seedbed portions in the culture medium B and the holes T1 in the cultivation panel T4 according to Embodiment 5 may be decided.

The control unit 21 then starts the process of transplanting the seedbed portions in the culture medium B from the end (1st column, 1st row) to the cultivation panel T4 based on the association between the seedbed portions of the culture medium B and the holes T1 of the cultivation panel T4 that is stored by the procedures illustrated in the flowchart of FIG. 34. Here, as for the transplant order i, transplanting proceeds sequentially in the column direction of the culture medium B in a zig-zag manner.

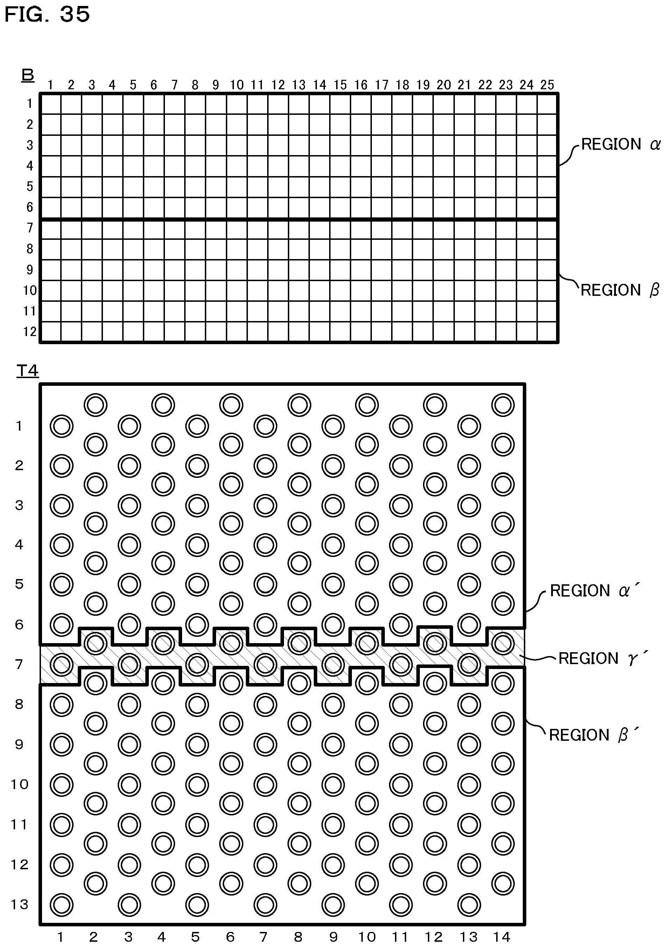

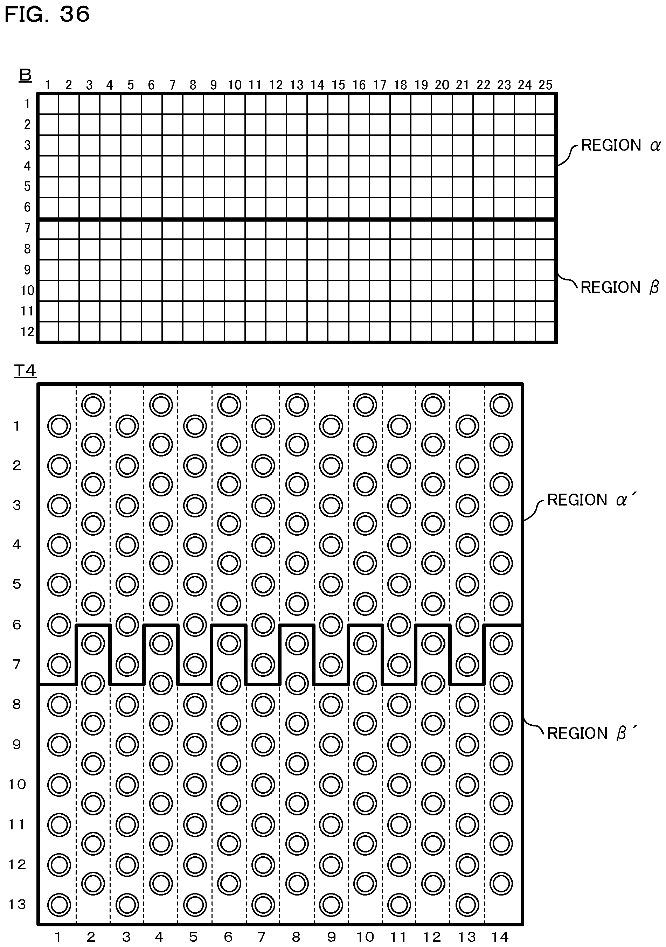

Subsequently, the procedure of deciding the association illustrated in the flowchart of FIG. 34 will be described by providing a specific example. FIGS. 35 and 36 illustrate an example of region dividing in the culture medium B and the cultivation panel T4. As illustrated in FIGS. 35 and 36, the control unit 21 first inputs information on the array (n rows, p columns) of the seedbed portions in the culture medium B as well as information on the array (s rows, u columns) for the holes T1 in the cultivation panel T4 (S301). Moreover, the control unit 21 inputs information on a seedbed portion left unused and information on vacant holes T1 in the cultivation panel T4. In the example of FIGS. 34 and 35, the seedbed portions in the culture medium B are all left unused, while all the holes T1 in the cultivation panel T4 are vacant.

At step S302, the control unit 21 then divides the culture medium B in the short direction into two regions including the range of the 1st to 6th rows as a region α and the range of the 7th to 12th rows as a region β. The control unit 21 further divides the region α and the region β for each column to obtain a region αp (p=1 to pₘₐₓ, p=1 to 25 in the culture medium B) and a region βp (p=1 to pₘₐₓ, p=1 to 25 in the culture medium B) that are associated with the holes T1 in the cultivation panel T4. It is noted that the number of unused seedbed portions in each of the regions αp and regions βp is "6." Likewise, the control unit 21 divides the cultivation panel T4 into two regions in accordance with the dividing direction of the culture medium B. Since the number of rows in the cultivation panel T4 is an odd number, basically, the 1st to 6th rows in the cultivation panel T4 are regarded as the region α' whereas the 8th to 13th rows are regarded as the region β'. Moreover, the control unit 21 allocates the holes T1 in the 7th row to the region α' and region β' depending on whether the column number is even or odd. That is, the control unit 21 allocates, out of the holes T1 in the 7th row, the holes T1 in the odd-numbered columns to the regions in the odd-numbered columns of the region α', and the holes T1 in the even-numbered columns to the regions in the even-numbered columns in the region β'. Accordingly, the cultivation panel T4 with an odd number of rows is also divided into two, top and bottom parts, as illustrated in FIG. 36. As in the culture medium B, the regions α' and β' in the cultivation panel T4 are also divided for each column as indicated by broken lines, to obtain a region α'u (u=1 to 14) and a region β'u (u=1 to 14). It is noted that the number of vacant holes T1 in each of the region α'u and the region β'u is "7" or "6."

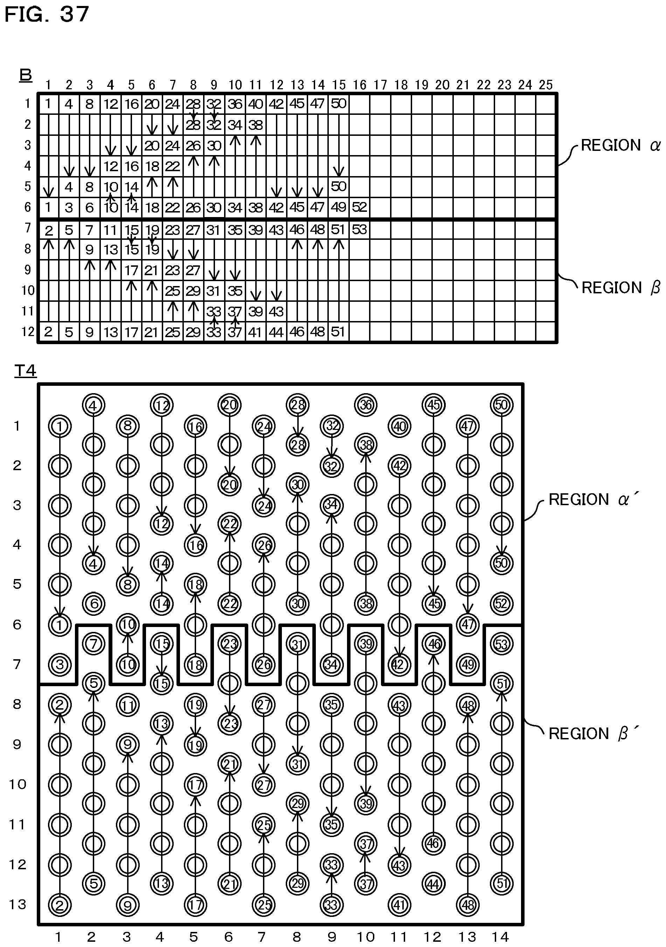

The association of the regions αp and βp in the culture medium B divided as described above with the regions α'u and β'u, i.e. steps S303 to S313 in the flowchart of FIG. 34, will now be described by providing a specific example. FIG. 37 illustrates the association between the regions αp, βp, α'u and β'u in the culture medium B and the cultivation panel T4. The numerals in the culture medium B in FIG. 37 as well as the numerals in the holes 1 of the cultivation panel T4 indicate the order of associating one with another, which is different from the transplant order i.

At step S303, the control unit 21 sets the number of columns p=1 for the seedbed portions and the number of columns u=1 for the holes T1. The control unit 21 then determines that the number Np of unused seedbed portions in the 1st column in the culture medium B is equal to or larger than 1 since it is "12" (S304: YES), and the number Su of vacant holes T1 in the first column in the cultivation panel T4 is equal to or larger than 1 since it is "13" (S305: YES).

The control unit 21 compares the number N1_{α} "6" of unused seedbed portions in each column in the region α1 of the culture medium B with the number S1_{α'} "7" of vacant holes T1 in each column in the region α'1 of the cultivation panel T4, and determines that N1_{α} "6" is equal to or smaller than S1_{α'} "7" (S306: YES). Thus, the control unit 21 associates the seedbed portions of (n, p)=(1, 1) to (6, 1) corresponding to N1_{α} "6" sequentially from the end, i.e. the 1st row, of the culture medium B in the region α1 with the holes T1 of (s, u)=(1, 1) to (6,1) from the end, i.e. the 1st row, of the cultivation panel T4 in the region α'1 (S307, denoted by the numeral 1 in FIG. 37). Here, since the transplant orders i =1 to 6 are assigned to (n, p)=(1, 1) to (6, 1) in the culture medium B, the transplant orders i= 1 to 6 are assigned to (s, u)=(1, 1) to (6, 1) in the cultivation panel T4.

The control unit 21 compares the number N1_{β} "6" of unused seedbed portions in the region β1 of the culture medium B with the number S1_{β'} "6" of vacant holes T1 in the region β'1 of the cultivation panel T4, and determines that N1_{β} "6" is equal to or smaller than S1_{β'} "6" (S309: YES). Thus, the control unit 21 associates the seedbed portions of (n, p)=(12, 1) to (7, 1) corresponding to N1_{β} "6" in sequence from the end, i.e. the 12th row, of the culture medium B in the region β1 with the holes T1 of (s, u)=(13, 1) to (8, 1) from the end, i.e. the 13th row, of the cultivation panel T4 in the region β'1 (S310, denoted by the numeral 2 in FIG. 37). Here, the transplant orders i =12 to 7 are assigned to (n, p) = (12, 1) to (7, 1) for the culture medium B (see FIG. 33). Accordingly, in the cultivation panel T4, the transplant orders i=12 to 7 are assigned to (s, u) = (13, 1) to (8, 1), and therefore (i, s, u) = (7, 8, 1), (8, 9, 1), ..., (12, 13, 1) is satisfied.

Since all the seedbed portions in the 1st column in the culture medium B are associated with the holes T1, the control unit 21 then determines at step S312 that the number of unused seedbed portions N1=0 (zero) in the 1st column (S312: YES), and determines that p=1 is not the maximum value (S313: NO), and thus returns the processing to step S304. No seedbed portions remain since all the "12" seedbed portions in the p=1st column are associated with the holes T1 (S304: NO), and therefore the control unit 21 sets p as p=2 (2nd column) (S315).

The control unit 21 then determines at step S304 that the number N2 of unused seedbed portions in the p=2nd column in the culture medium B is equal to or larger than 1 since it is "12" (S304: YES), and the number of vacant holes T1 in the u=1st column in the cultivation panel T4 is equal to or larger than 1 since "one" vacant hole T1 of (s, u) = (7, 1) is left (S305: YES).

The control unit 21 compares the number N2_{α} "6" of unused seedbed portions in the region α2 of the culture medium B with the number S1_{α'} "1" of vacant holes T1 in the column of the region α'1 of the cultivation panel T4, and determines that N2_{α} "6" is larger than S1_{α'} "1" (S306: NO). Thus, the control unit 21 associates the seedbed portions of (n, p) = (6, 2) corresponding to S1_{α'} "1" at the middle, i.e. the 6th row, of the culture medium B in the region α2 with the hole T1 of (s, u) = (7, 1) at the middle, i.e. the 7th row, of the cultivation panel T4 in the region α'1 (S307, denoted by the numeral 3 in FIG. 37). Since the number S1_{β'} of vacant holes T1 in the region β' is zero, the processing at step S311 is not performed. Here, the transplant order i =19 is assigned to (n, p) = (6, 2) in the culture medium B (FIG. 33). Accordingly, in the cultivation panel T4, the transplant order i=19 is assigned to the holes T1 of (s, u) = (7, 1), and therefore (i, s, u) = (19, 7, 1) is satisfied.

The control unit 21 then determines at step S312 that the number N2 of unused seedbed portions in the 2nd column in the culture medium B is not zero since N2 is still "11" (S312: NO), and determines whether or not the number S1 of vacant holes T1 in u=the 1st column in the cultivation panel T4 is equal to or larger than 1 while p remains as p=2 (S305). Since it is determined that S1 is not vacant here (S305: NO), the control unit 21 sets the number of columns u in the cultivation panel T4 as u=2 (2nd column) (S314). Since the number S2 of vacant holes T1 in the 2nd column is "13" which is equal to or larger than 1 (S305: YES), the control unit 21 proceeds to step S306.

At step S306, the control unit 21 compares the number N2_{α} "5" of unused seedbed portions in the region α2 of the culture medium B with the number S2_{α'} "6" of vacant holes T1 in the column of the region α'2 of the cultivation panel T4, and determines that N2_{α} "5" is equal to or smaller than S2_{α'} "6" (S306: YES). Thus, the control unit 21 associates the seedbed portions of (n, p)=(1, 2) to (5, 2) corresponding to N2_{α} "5" from the end, i.e. the 1st row, of the culture medium B in the region α2 to the holes T1 of (s, u)=(1,2) to (5,2) in sequence from the end, i.e. the 1st row, of the cultivation panel T4 in the region α'2 (S307, denoted by the numeral 4 in FIG. 37). Here, the transplant orders i =24 to 20 are assigned to (n, p) = (1, 2) to (5, 2) in the culture medium B (see FIG. 33). Accordingly, in the cultivation panel T4, the transplant orders i=24 to 20 are assigned to (s, u) = (1, 2) to (5, 2), and therefore (i, s, u) = (20, 5, 2), (21, 4, 2), ..., (24, 1, 2) is satisfied.

Likewise, the control unit 21 compares the number N2β "6" of unused seedbed portions in the region β2 of the culture medium B with the number S2_{β'} "6" of vacant holes T1 in the region β'2 of the cultivation panel T4, and determines that N2_{β} "6" is equal to or smaller than S2_{β'} "6" (S309: YES). Thus, the control unit 21 associates the seedbed portions of (n, p)=(12, 2) to (7, 2) corresponding to N2_{β} "6" from the end, i.e. the 12th row, of the culture medium B in the region β2 to the holes T1 of (s, u)=(13, 2) to (8, 2) in sequence from the end, i.e. the 13th row, of the cultivation panel T4 in the region β'2 toward the middle (S310, denoted by the numeral 5 in FIG. 37).

By repeating such processing, the seedbed portions in the culture medium B and the holes T1 in the cultivation panel T4 are associated with one another as illustrated in FIG. 37. As illustrated in FIG. 37, the holes T1 in the 52nd and 53rd order of association in the cultivation panel T1 are normally associated with the seedbed portions of the transplant orders i=186 and 187 illustrated in FIG. 33. However, the control unit 21 changes the transplant orders i of these seedbed portions to i=182 and 183 so that the need for changing the cultivation panel T4 to a new cultivation panel T4 is eliminated.

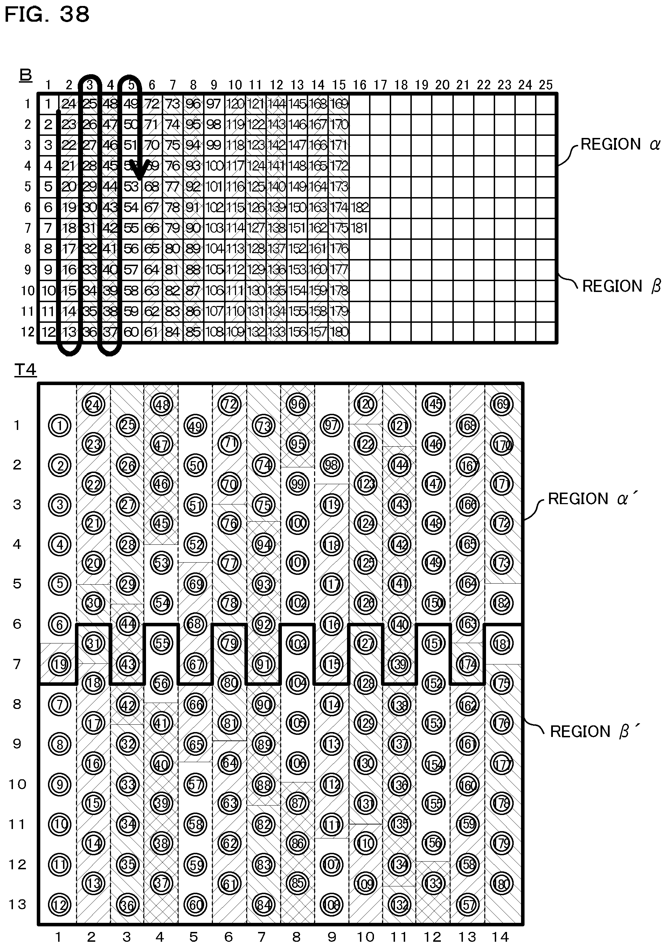

FIG. 38 illustrates the transplant orders i from the culture medium B to the first cultivation panel. In FIG. 38, the range of holes T1 in the cultivation panel T4 to which the seedbed portions in the same column in the culture medium B are to be transplanted is indicated by discriminating such holes T1 by the types of hatching. As illustrated in FIG. 38, transplanting to the holes T1 in the region α' in the cultivation panel T4 is carried out from the seedbed portions in the region α of the culture medium B. Thus, the region α of the culture medium B will not be located over the region β' of the cultivation panel T4. Likewise, the region β of the culture medium B will not be located over the region α' of the cultivation panel T4. It is further to be noted that the seedbed portions transplanted to the holes T1 at the end in the column direction, i.e. in the 1st column, of the cultivation panel T4 are always the ones located in the 1st row in the culture medium B, while the seedbed portions transplanted to the holes T1 in the 13th row in the cultivation panel T4 are always the ones located in the 12th row in the culture medium B. Likewise, the seedbed portions transplanted to the holes T1 in the 2nd column of the cultivation panel T4 are the ones located in the 2nd or 1st row in the culture medium B, while the seedbed portions transplanted to the holes T1 in the 12th row in the cultivation panel T4 are the ones located in the 11th or 12th row in the culture medium B. Therefore, the culture medium B will not be deviated from the cultivation panel T4 in the column direction.

Furthermore, as illustrated in FIG. 34, the transplant orders i from the culture medium is in sequence from the 1st column of the culture medium B in a zig-zag manner (comparative example: FIGS. 10 and 16 in Embodiment 1). Thus, in pulling out one of the seedbed portions with slits by gripping it with the transplant hand of the transplant arm 50, adjacent seedbed portions are always present in the peripheral seedbed portions of the seedbed portion to be pulled out at least in the row or column direction until the last seedbed portion. This reduces the possibility for the peripheral seedbed portions to be pulled and tilted when one seedbed portion is pulled out.

The process of transplanting to the cultivation panel T4 will specifically be described below with reference to the drawings.

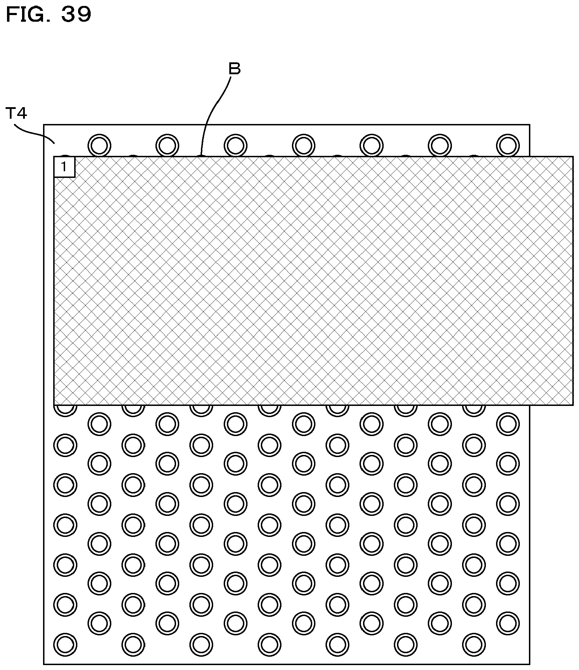

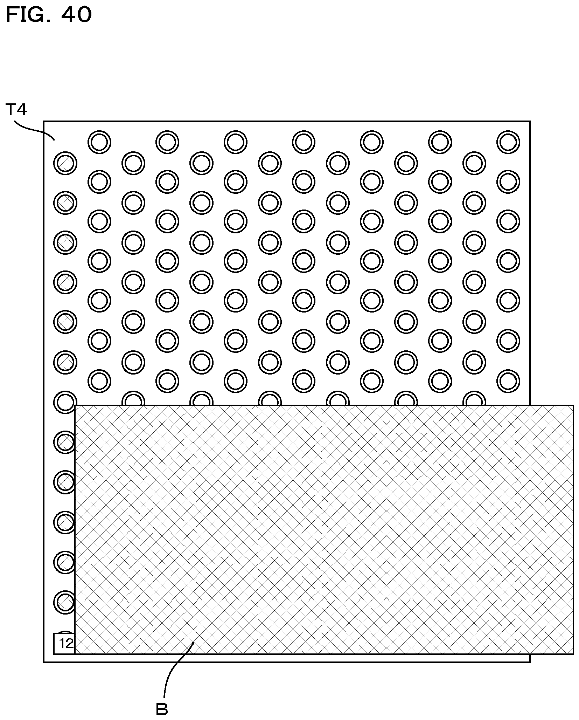

FIGS. 39 to 41 each illustrates the positional relationship between the culture medium B and the cultivation panel T4 at the time of transplanting seedbed portions from the culture medium B to the cultivation panel T4. FIG. 39 illustrates the positional relationship for the transplant order i=1. As illustrated in FIG. 39, for the transplant order i=1, the culture medium B is deviated from the range corresponding to the cultivation panel T4 only by the amount corresponding to two seedbed portions in the row direction and is not deviated in the column direction. FIG. 40 illustrates the positional relationship in the case where the transplant order i=12. The positional relationships illustrated in FIGS. 39 and 40 show examples where the culture medium B is located closest to the end (1st or 13th row side) of the cultivation panel T4 in the column direction. As illustrated in FIGS. 39 and 40, however, the culture medium B is not deviated from the cultivation panel T4 in the column direction. As can also be seen from FIG. 38, the seedbed portions at the end (in the 1st or 12th row) of the culture medium B in the column direction are transplanted to the holes T1 at the end of the cultivation panel T4 in the column direction. Therefore, the culture medium B will not be deviated from the cultivation panel T4 in the column direction.

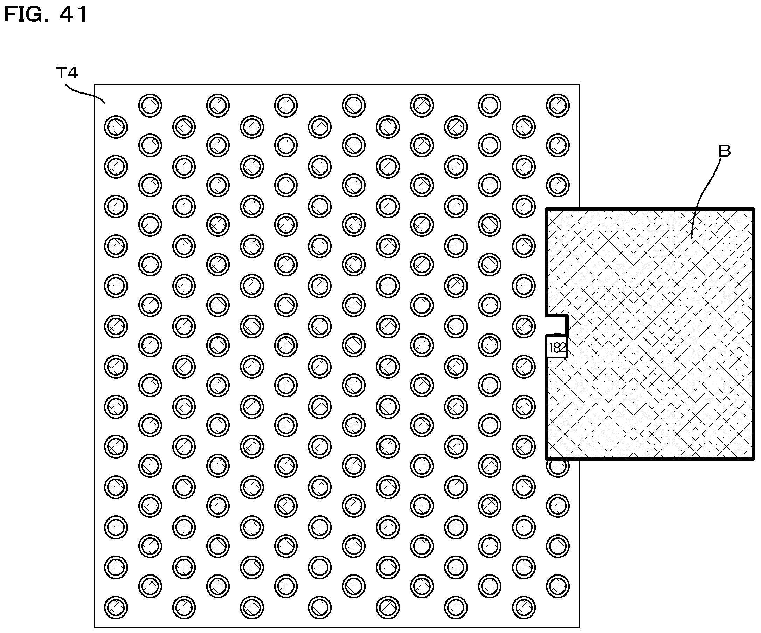

FIG. 41 illustrates the positional relationship for the transplant order i=182 corresponding to the final position in the cultivation panel T4. At the final location i=182, the seedbed portions at the middle of the culture medium B are transplanted. Here, the culture medium B is deviated from the range of the cultivation panel T4 by the amount corresponding to ten seedbed portions in the row direction, but not deviated in the column direction.

It is therefore possible to decide the association between the seedbed portion and the hole T1 such that the culture medium B is not deviated from the range of the cultivation panel T4 at least in the column direction. Thus, the size of the transplant device 1 in the column direction of the cultivation panel T4 (front-back direction in FIG. 1) may be reduced in terms of space to substantially correspond to the size of the cultivation panel to be used. Moreover, in Embodiment 5, as the transplant orders i in the culture medium B are in a zig-zag sequence, the possibility of the peripheral seedbed portions being pulled and tilted when pulling out one seedbed portion is reduced. Thereafter, the remaining seedbed portions are firmly gripped by a transplant hand when transplanted, which also reduces the possibility of transplant failure. That is, transplanting of a plant P with a posture leading to poor growth may be prevented.

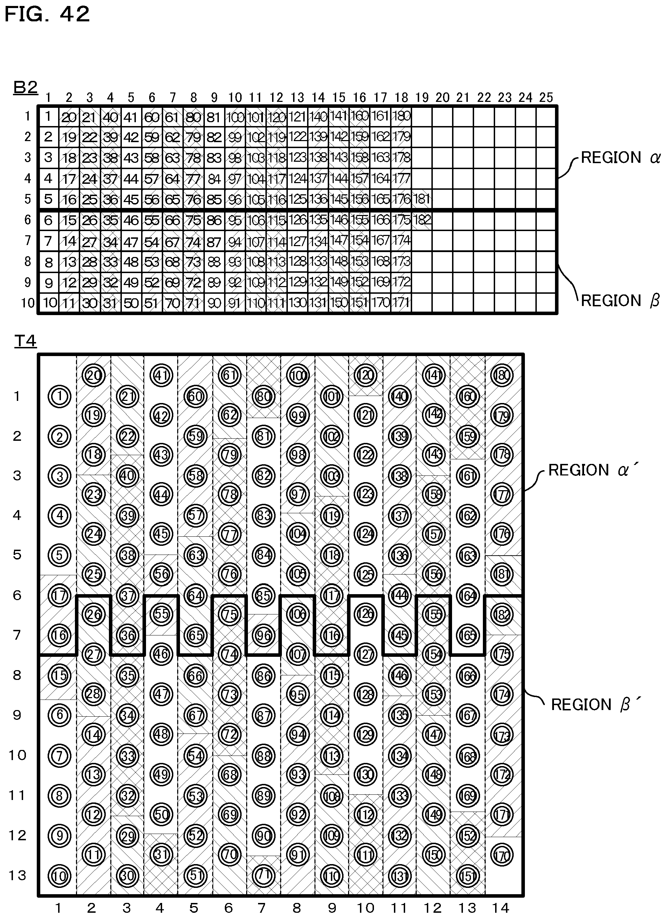

In the example described above, the cultivation panel T4 is employed in which the number of rows in the region α and the region β of the culture medium B is substantially equal to the number of rows in the region α' and the region β' (with the number of rows "13" for the number of rows "12" in the culture medium B). However, similar effects may be attained by employing another culture medium or cultivation panel. FIG. 42 illustrates the transplant order i in a culture medium B2 and the cultivation panel T4. The culture medium B2 is configured similarly to the culture medium B except that it is sectioned into 250 (=10×25) seedbed portions. In the case of using 10 rows and 25 columns, since the number of rows is "10," the number of seedbed portions "5" in the region αp and the region βp of the culture medium B is smaller than the number of vacant holes T1 "6" or "7" in the region α'u and the region β'u. In this case also, as can be seen from FIG. 42, the seedbed portions at the end (in the 1st and 2nd or 11th and 12th rows) of the culture medium B in the column direction are transplanted to the holes T1 at the end of the cultivation panel T4 in the column direction. Therefore, the culture medium B will not be deviated from the cultivation panel T4 in the column direction.

According to Embodiment 5, such control is performed that each of the culture medium B and the cultivation panel T4 is divided into two regions in the short direction and associating operation is performed for each region. Moreover, the culture medium B and the cultivation panel T4 are so divided that the resulting numbers of rows in the divided regions are substantially equal to each other. This is for the transplanting to proceed in a substantially uniform manner in the row direction. The number of divided regions is not limited to two but may be controlled to be three or more.

### (Embodiment 6)

According to Embodiment 6, sorting information for specifying the positional information of a poorly-grown seedling in the seedbed portions included in the culture medium B is obtained to sort seedlings based on the sorting information. Moreover, in Embodiment 6, multiple arms are used to transplant multiple seedbed portions at a time.

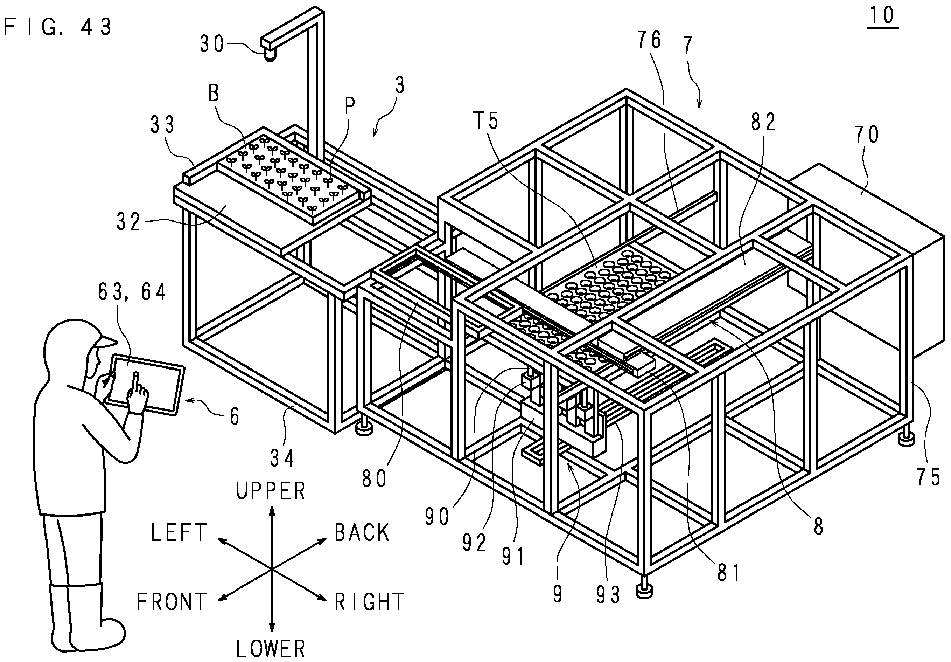

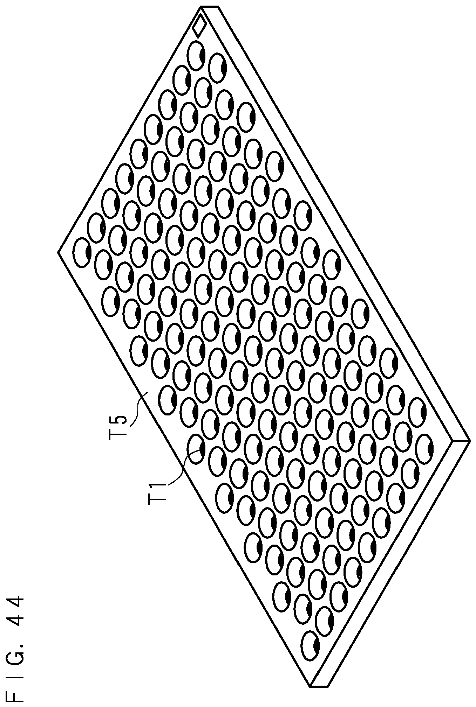

FIG. 43 is a perspective view illustrating a transplant device according to Embodiment 6. FIG. 44 is a perspective view illustrating an example of a cultivation panel to which a plant is to be transplanted according to Embodiment 6. The reference numeral 10 in FIG. 43 indicates the transplant device. For the culture medium B in Embodiment 6, the same one as described in Embodiment 1 is employed, and therefore detailed description thereof will not be repeated. The transplant device 10 is a device for automatically transplanting the plant P grown in the culture medium denoted by the reference code B in FIG. 2 to a cultivation panel denoted by the reference code T5 in FIG. 43.

The culture medium B used in Embodiment 6 is divided into 300 (=12×25) seedbed portions as illustrated in FIG. 2, and has slits to the extent that would not reach the other surface. In Embodiment 6, the size of the culture medium B is 280mm×580mm for example, while the pitch (interval in the culture medium) of adjacent seedbed portions in the longitudinal direction is 23.2mm for example. It is understood that the size and the number of divisions of the seedbed portions is not limited thereto.

The cultivation panel T5 used in Embodiment 6 is made of, for example, styrene foam, and has the shape of a rectangular flat board. In the cultivation panel T5, multiple holes T1 are aligned in the longitudinal and lateral directions. Each hole T1 has a circular shape and is tapered so as to be reduced in diameter from one surface side of the panel to a depth approximately half the panel depth. The diameter of the hole T1 on the one surface side is substantially equal to the length of a diagonal line of one seedbed portion in the culture medium B, whereas the diameter on the reduced side is substantially equal to or a little shorter than the length of one side of the seedbed portion. The size of the cultivation panel T5 illustrated in FIG. 44 is 890mm × 590mm, and is provided with 153 (=17×9) holes T1. The pitch between the holes T1 in the width direction (short direction) is 58.0mm. It is understood that the size of the cultivation panel T5 and the number of the holes T1 are not limited thereto, and the distance between the holes T1 is designed to be suitable for growing the plant P depending on the type of the plant P.

The structure of the transplant device 10 for transplanting the plant P from the culture medium B to the cultivation panel T5 is described. In the following description, upper, lower, front, back, left and right are used as indicated by the arrows in FIG. 43. The transplant device 10 comprises a transplant unit 7 and an imaging unit 3, and has a sorting function of transplanting a good plant P by a transplant unit 7 from the culture medium B to the cultivation panel T based on a result of sorting performed as will be described later on the basis of an image obtained by photographing the culture medium B by the imaging unit 3.

The transplant unit 7 comprises a frame 75 holding a cultivation panel T, a holder transfer unit 8 transferring a holder 80 for the culture medium B, a transplant arm drive unit 9 driving a transplant arm 90, and a transplant control unit 70 (outer casing thereof is illustrated in FIG. 43) instructing the holder transfer unit 8 and the transplant arm drive unit 9 to transfer the holder 80 and to drive the transplant arm 90, respectively.

The frame 75 is constituted by multiple supporting posts and multiple horizontal members that connect the supporting posts at the top and bottom parts. A pair of left and right rails 76 are installed in the front-back direction at the middle part of the frame 75. The cultivation panel T5 is supported by the rails 76 and 76 at both edges in the longitudinal direction, and is horizontally mounted to the middle part of the frame 75. Furthermore, the cultivation panel T5 may manually be attached to and detached from a predetermined position along the rails 76 and 76.

The transplant arm drive unit 9 is located below the cultivation panel T5, and comprises the transplant arm 90, a supporting stage 91, a drive unit 92 and a traveling guide 93. The traveling guide 93 is located at the lower part of the frame 75 in the front-back direction. The position where the traveling guide 93 is located is under the cultivation panel T5. The supporting stage 91 is mounted to the traveling guide 93 so as to be movable thereon. The supporting stage 91 is long in the left-right direction, and multiple drive units 92 are arranged in parallel on the supporting stage 91 in the longitudinal direction while the transplant arm 90 is attached to each of the drive units 92. The length of the traveling guide 93 is a little longer than the length in the longitudinal direction of the cultivation panel T5, while the transplant arms 90 may move in parallel within a range corresponding to the longitudinal direction of the cultivation panel T.

In the example illustrated in FIG. 43, five drive units 92 and five transplant arms 90 are mounted. The distance between the adjacent transplant arms 90 corresponds to a lowest common multiple of the pitch between the seedbed portions in the culture medium B and the pitch between the holes T1 in the cultivation panel T5 as described above. More specifically, the distance between the parallel adjacent transplant arms 90 is 116.0mm, which is five times the pitch of 23.3mm between the seedbed portions in the longitudinal direction of the culture medium B, and is twice the distance of 58.0mm between the holes T1 in the width direction (short direction) of the cultivation panel T5. It is noted that the distance is not limited to the lowest common multiple, but may correspond to any common multiple.

Furthermore, the transplant arms 90 are configured to be movable integrally in the left-right direction. This allows the multiple transplant arms 90 to move to positions corresponding to the holes T1 of the cultivation panel T5 in a space below the cultivation panel T5 within a range corresponding to the size of the cultivation panel T5. Each of the transplant arms 90 may further be raised from the supporting stage 91 by the operation of the drive unit 92, while a transplant hand (not illustrated) located at the tip end of the transplant arm 90 may be raised and lowered between an initial position lower than the cultivation panel T5 and a raised position higher than the cultivation panel T as it penetrates through multiple holes T1 opened in the cultivation panel T5.

The holder transfer unit 8 is located above the cultivation panel T5, and comprises a holder 80, a lateral guide 81 and a longitudinal guide 82. The longitudinal guide 82 is located at the upper right of the cultivation panel T5 in the front-back direction. One end of the lateral guide 81 extending in the left-right direction is attached to the longitudinal guide 82. One long side of the holder 80 having the shape of a rectangular frame is attached to the front surface of the lateral guide 81. This allows the holder 80 to move in the left-right direction along the lateral guide 81, and to also move together with the lateral guide 81 in the front-back direction along the longitudinal guide 82. It is noted that the length of the longitudinal guide 82 is longer than the length of the cultivation panel T5 in the front-back direction, and that the length of the lateral guide 81 is a little longer than the length obtained by adding the width (length in the left-right direction) of the cultivation panel T5 to the length of the holder 80 in the longitudinal direction. The holder 80 may move from the transplanting position over the cultivation panel T5 to a position deviated in the left-right direction from the cultivation panel T5 to the left by the amount corresponding to the width of the cultivation panel T5, and may move to a position deviated in the front-back direction from the cultivation panel T5 to the front and back by the amount corresponding to the length of the holder 80 in the short direction. The holder 80 holds the culture medium B placed by a worker in a placement position at the front left.

In the transplant unit 7 configured as described above, the holder 80 which holds the culture medium B placed by the worker moves from the placement position to a transplant start position at the front right in accordance with the instructions from the transplant control unit 70, and moves in a space above the cultivation panel T5 in the left-right and backward directions from the transplant start position which serves as a reference. Moreover, the supporting stage 91 moves in a space below the cultivation panel T5 backward from the start position at the front in accordance with the instructions from the transplant control unit 70. In the case where a seedbed portion of the culture medium B is located directly above a vacant hole T1 in the cultivation panel T5, the transplant control unit 70 moves the supporting stage 91 such that the transplant arm 90 is positioned directly below the seedbed portion. Subsequently, the transplant control unit 70 makes the drive unit 92 operate so that a transplant hand at the tip end of the transplant arm 70 is moved to a raised position. As the transplant arm 90 together with the transplant hand penetrates the vacant hole T1 and the transplant hand moves to the raised position where it reaches the seedbed portion directly above, the transplant hand grips the seedbed portion and the transplant arm 90 is lowered while gripping the seedbed portion. As each transplant arm 90 is lowered, the seedbed portion gripped by the transplant hand is fractured by a lattice at the holder 80, is lowered together with the transplant arm 90, enters the hole T1 of the cultivation panel T5 and is held at the portion with a reduced diameter. The grip by each transplant hand is released, and the transplant arm 90 is further lowered so that the transplant hand is returned to the initial position. As such, the holder 80, supporting stage 91 and transplant arm 90 move in the front-back and upper-lower directions by the instructions of the transplant control unit 70, to achieve transplanting of the seedbed portions of the culture medium B to the cultivation panel T5.

The imaging unit 3 is a mechanism for photographing the culture medium B before being installed into the transplant unit 7. The imaging unit 3 comprises a camera 30, a placement table 32, a guide 33 and a frame 34. The frame 34 is arranged on the left side of the frame 75 of the transplant unit 7 in parallel thereto in FIG. 43. The placement table 32 is located on the upper side of the frame 34 and has a size larger than the culture medium B. The camera 30 is provided above the placement table 32 so as to photograph the entire placement table 32. The guide 33 is located along the periphery of the placement table 32 in an L shape, such that the culture medium B may be placed at an appropriate position in the photograph range when a worker places the culture medium B on the placement table 32.

Furthermore, the reference numeral 6 in FIG. 43 denotes an information processing device which is a tablet PC (Personal Computer) operated by the worker. The information processing device 6 comprises a touch panel integrated display also serving as a display unit 63 and an operation unit 64, and is capable of wireless communication between the imaging unit 3 and the transplant unit 7 of the transplant device 10.

The transplant device 10 and the information processing device 6 according to Embodiment 1 are used as described below in order to transplant the plant P from the culture medium B to the cultivation panel T5. A worker places the culture medium B in which the plant P to be transplanted is planted onto the placement table 32 of the imaging unit 3, and then makes the camera 30 of the imaging unit 3 to execute photographing. At the imaging unit 3, image data of an image obtained by photographing by the camera 30 is transmitted to the information processing device 6. In the information processing device 6, an image of the culture medium B is displayed on the display unit 63 based on the image data transmitted from the imaging unit 3, and an individual plant P may be selected on the image with the configuration as described later. The positional information of the selected plant in the culture medium B is transmitted to the transplant unit 7 as sorting information, and the plant is transplanted by the operation as described above according to the instructions of the transplant control unit 70 while sorting the plants P to remove a poorly-grown plant P based on the sorting information in the transplant unit 7.

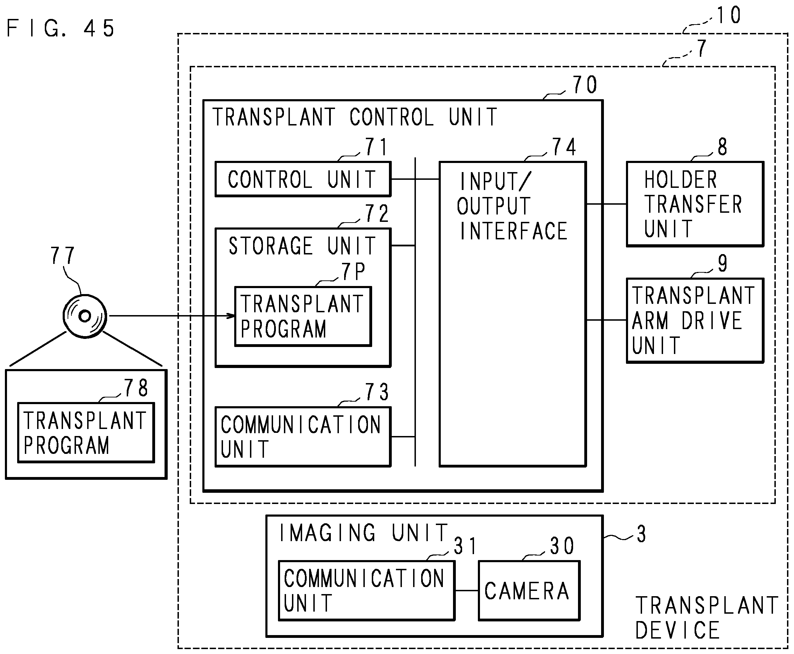

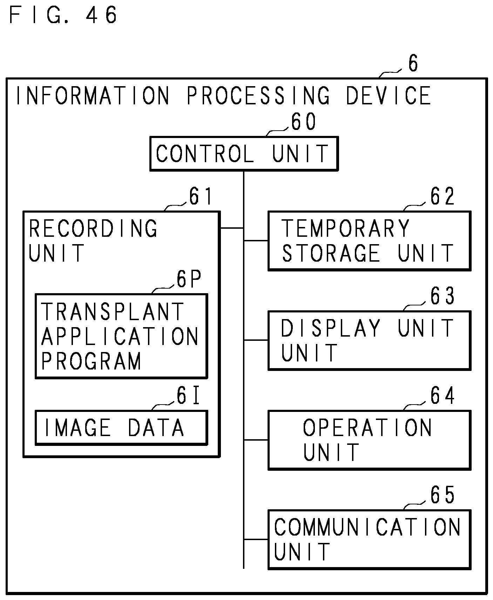

The transplant device 10 and the information processing device 6 achieving such a sorting function will be described in detail. FIGS. 45 and 46 are block diagrams illustrating the internal configurations of the transplant device 10 and the information processing device 6, respectively, according to Embodiment 6. The transplant unit 7 constituting the transplant device 10 is configured by the holder transfer unit 8 as well as the transplant arm drive unit 9, and the transplant control unit 70 controlling these units 4 and 5, as described earlier. The transplant control unit 70 is a programmable logic controller. The transplant control unit 70 comprises a control unit 71 which is a microprocessor, a storage unit 72 using a flash memory or the like, a communication unit 73 achieving wireless or wired communication with another device, and an input/output interface 74 connected to the holder transfer unit 8 and the transplant arm drive unit 9.

Based on the transplant program 7P pre-stored in the storage unit 72, the control unit 71 instructs the holder transfer unit 8 to move the holder 80 and to stop the movement thereof with reference to the information of the sorted seedlings received from the communication unit 73, while instructing the transplant arm drive unit 9 to drive the transplant arm 90 in the upper and lower direction, to move the transplant arm 90 in the parallel direction, to travel along the guide rail 76, and to stop such movements. The information received from the communication unit 73 may once be stored in the storage unit 22.

The transplant program 7P is a computer program for the control unit 71 to execute the control described above. The transplant program 7P is pre-stored in the storage unit 71, or is incorporated into the control unit 71. Moreover, the transplant program 7P may be recorded in a computer readable recording culture medium 77. The storage unit 71 stores therein a transplant program 78 read out from the recording culture medium 77 by a reading device (not illustrated). Examples of the recording culture medium 77 include an optical disc such as a CD-ROM, DVD-ROM and BD, a magnetic disk such as a flexible disk and a hard disk, a magneto-optical disk, a semiconductor memory and so forth. It is further possible to download the transplant program 78 according to Embodiment 6 from an external computer (not illustrated) connected to a communication network (not illustrated), and store it in the storage unit 71.

The communication unit 73 attains wireless communication using Bluetooth (registered trademark), Wi-Fi (Wireless Fidelity) or the like. The communication unit 73 may attain wired communication using LAN or the like, not limited to wireless communication. The control unit 71 may receive, by the communication unit 73, information on the sorted seedlings transmitted from the information processing device 6.

The imaging unit 3 comprises a communication unit 31 transmitting image data of an image photographed by the camera 30 with or without wire to the information processing device 6. The communication unit 31 attains wireless communication using Bluetooth (registered trademark), Wi-Fi or the like. It is noted that the communication unit 31 may also attain wired communication using LAN (Local Area Network), USB (Universal Serial Bus) or the like.

The information processing device 6 is a tablet PC as described above, and comprises a control unit 60, a recording unit 61, a temporary storage unit 62, a display unit 63, an operation unit 64 and a communication unit 65. The information processing device 6 may be configured to comprise an imaging unit. It is noted that the information processing device 6 is not limited to a tablet PC, but may also be a mobile terminal device such as a so-called smartphone, or may further be a stationary desktop PC.

For the control unit 60 of the information processing device 6, a CPU (Central Processing Unit) is employed. The control unit 60 reads out and executes a computer program including a transplant application program 6P stored in the recording unit 61.

A flash memory is employed for the recording unit 61. The recording unit 61 pre-stores therein a computer program including the transplant application program 6P read out by the control unit 60. Moreover, in the recording unit 61, information for identifying the culture medium B and the cultivation panel T5 to be used for transplanting is recorded in advance. In the information for identifying the culture medium B, the number (numbers of rows and columns) of seedbed portions (holes B1) and the dimension of the pitch are recorded in association with each other. The information identified by the cultivation panel T5 is recorded by associating the number (numbers of rows and columns) of holes T1 and the dimension of the pitch with each other. In the case where multiple types of culture mediums B or cultivation panels T5 with different divisions are employed, identification information for each type is recorded and the number as well as the pitch dimension are also recorded in association with each identification information. Furthermore, the recording unit 61 may be used as a recording region of image data 6I transmitted from the imaging unit 3 of the transplant device 10. It is noted that a storage device other than a flash memory may also be employed for the recording unit 61. For the temporary storage unit 62, a RAM such as a DRAM (Dynamic Random Access Memory) is employed. The temporary storage unit 62 temporarily stores information generated by the processing of the control unit 60.

A touch panel integrated liquid crystal display is employed for the display unit 63. The control unit 60 displays on the display unit 63 various types of operation screens including images such as text and icon. It is noted that the display unit 63 is not limited to a liquid crystal display, or to a touch panel integrated type. For the operation unit 64, a touch panel integrated in the display of the display unit 63 and buttons provided at the casing of the information processing device 6 are employed. The operation unit 64 notifies the control unit 60 of a touch by the user on the touch panel as well as the positional information of the touched part. Furthermore, the operation unit 64 notifies the control unit 60 of information on, for example, pressing of a button as well as the time of pressing.

The communication unit 65 attains wireless communication using Bluetooth (registered trademark) or Wi-Fi. The control unit 60 may communicate, through the communication unit 65 for example, with the transplant control unit 20 and the imaging unit 3 of the transplant device 10 by Wi-Fi via an access point (not illustrated). The communication unit 65 may also attain wired communication using USB, not limited to wireless communication. Moreover, in the case where the information processing device 6 is a desk top PC, the communication unit 65 may use a network card for attaining wired communication using LAN.

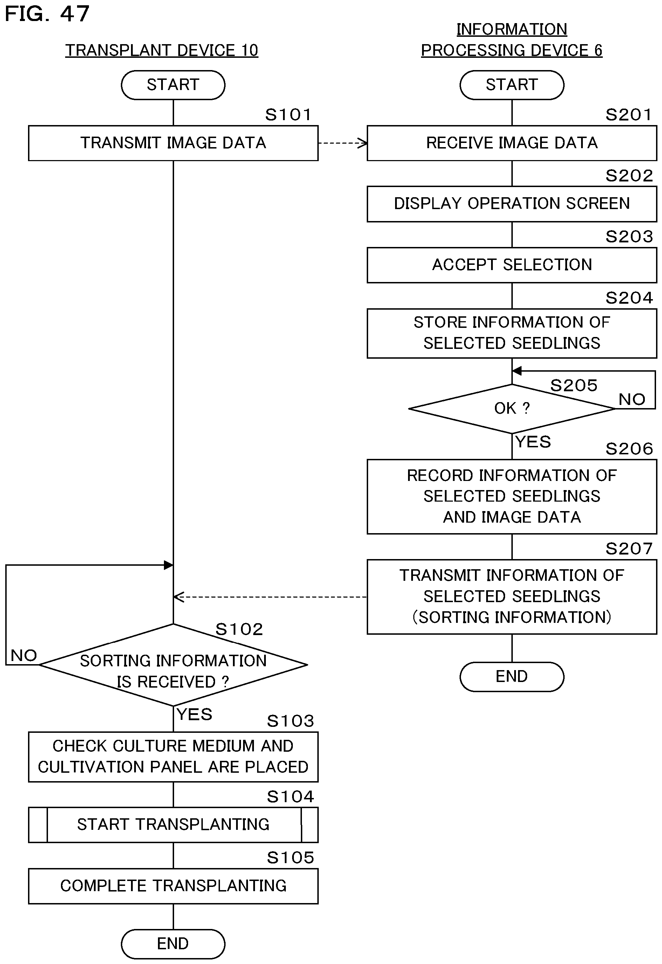

The procedure of transplanting between the transplant device 10 and the information processing device 6 configured as described above will be described in detail with reference to a flowchart. FIG. 47 is a flowchart illustrating an example of a procedure of transplanting according to Embodiment 6. The procedure illustrated in the flowchart of FIG. 47 is started by the transplant device 10 when the culture medium B including a plant P which passed through a growing step is placed on the placement table 32 of the imaging unit 3 and is photographed by the camera 30, and is started by the information processing device 6 when a transplant application based on the transplant application program 6P is activated.

In the imaging unit 3, the image data of an image photographed by the camera 30 is transmitted from the communication unit 31 (step S101). Thereafter, in the transplant device 10, the control unit 71 of the transplant control unit 70 determines whether or not sorting information corresponding to the image data transmitted from the imaging unit 3 is received (step S102), and if it is determined that the sorting information is not received (S102: NO), the control unit 71 returns the processing to step S102 and is switched to a waiting state of waiting until it is determined that such information is received.

In the information processing device 6, the control unit 60 receives image data from the communication unit 65 (step S201), and displays on the display unit 63 an operation screen including a photographed image of the culture medium B based on the received image data (step S202).

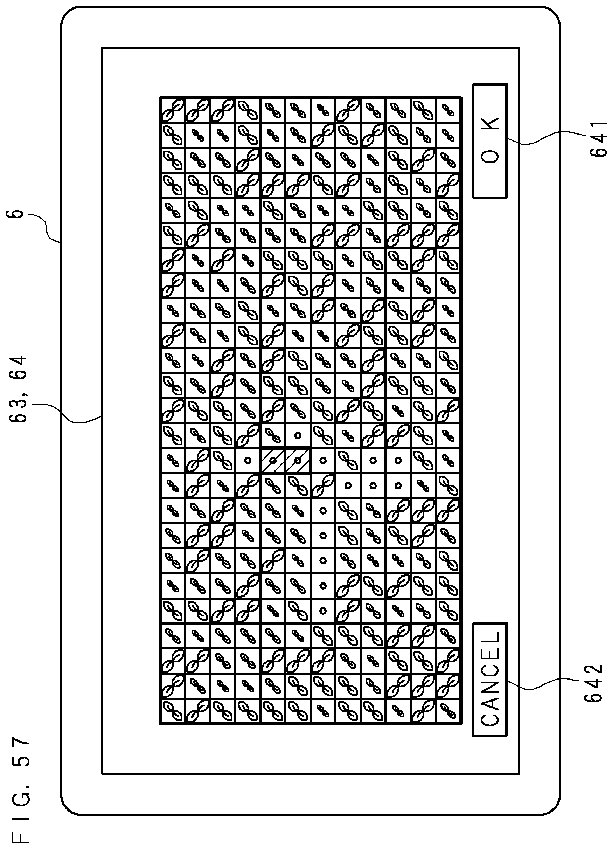

The control unit 60 accepts selection of a seedbed portion on the photographed image on the operation screen (step S203). The control unit 60 stores the identification information of the seedbed portion corresponding to a selected seedling in the temporary storage unit 62 (step S204). The identification information of the seedbed portion is specified by the position (row and column numbers) on the culture medium B for the seedbed portion selected at step S203 in the photographed image. Next, the control unit 60 determines whether or not an OK button 641 (see FIG. 57) is tapped (step S205), and if determined that the OK button 641 is not tapped (S205: NO), returns the processing back to step S205 and waits until it is determined that the OK button 641 is tapped. During the processing, if a CANCEL button 642 is tapped, the control unit 60 erases the identification information stored in the temporary storage unit 62.

If it is determined that the OK button 641 is tapped (S205: YES), the control unit 60 records the identification information stored in the temporary storage unit 62 and the image data of the obtained photographed image in the recording unit 61 in association with each other (step S206). The control unit 60 then transmits identification information stored in the temporary storage unit 62 as sorting information from the communication unit 65 to the transplant control unit 20 of the transplant device 10 (step S207). More specifically, the sorting information is digital information representing, as binary information, the quality, i.e. good or poor, of the growth for each of the seedbed portions in 12 rows and 25 columns ("good" as "1" while "poor" as "0"). Here, the control unit 60 may make the display unit 63 display a message for instructing the worker to place the culture medium B in the holder 80 of the transplant device 10. Processing for one culture medium B in the information processing device 6 is terminated.

In the transplant device 10, the control unit 71 of the transplant control unit 70 determines whether or not sorting information is received from the communication unit 73 and is waiting (S102). At step S102, if it is determined that the sorting information transmitted from the information processing device 6 is received (S102: YES), the control unit 71 checks if the culture medium B is placed in the holder 80 and the cultivation panel T5 is placed in the frame 75 of the transplant device 10 (step S103). The processing at step S103 may be performed by checking if the transplant start button or the like located at the transplant device 10 is pressed or not, or by providing a sensor or the like to sense, through the control unit 71, if the placement is appropriate.

Upon confirming that the sorting information is received and the placement of the culture medium B of the transplant source as well as the cultivation panel T5 of the transplant destination is completed, the control unit 71 starts transplanting based on the transplant procedure defined by a predetermined transplant algorithm and the sorting information (step S104). The procedure of transplanting at step S104 will be described later in detail.

The control unit 71 completes transplanting the seedlings except for a poorly-grown seedling sorted by the sorting information, among the seedlings cultivated in one culture medium B (step S105), and terminates the transplanting process for the culture medium B.

Subsequently, a predetermined transplant algorithm at step S104 is described. A predetermined transplant algorithm means, simply stated, an algorithm for reducing the number of operations of the transplant arm 90 as much as possible. The control unit 71 of the transplant control unit 70 causes the multiple transplant arms 90 to pull out as many seedbed portions as possible from the culture medium B at a time, and to transplant the seedbed portions to the cultivation panel T5. The procedure of transplanting based on the predetermined transplant algorithm is calculated based on the number N_{A} of the transplant arms 90, the arrays (row and column numbers) of the holes T1 in the cultivation panel T5 and the arrays (row and column numbers) of the seedbed portions in the culture medium B, as will be described below.

In the transplant procedure described below, the row and column numbers in the cultivation panel T5 are identified by x rows and y columns with the right front side in FIG. 43 as the 1st row and the right side in FIG. 43 as the 1st column. Accordingly, the seedbed portions in the culture medium B are also identified by m rows and n columns with the right front side in FIG. 43 as the 1st row and the right side in FIG. 43 as the 1st column in the state of being placed in the holder 80.
(1) The row number x and the column number y for the first hole T1 of the transplant destination, and the row number m and the column number n for the seedbed portions of the transplant source are initialized as x=y=m=n=1.
(2) The number k and the position (row number x and column number y) of the hole T1 of the transplant destination with the i-th (i=1, 2 ...) transplant order.
   More specifically, for the column number y, one in every P holes T1 of the transplant destination is decided based on the interval between the transplant arms 90 in the direction of parallel arrangement and on the pitch in the row direction between the holes T1 in the cultivation panel T5. The number of transplant arms 90 that are to be activated is decided to satisfy k=[(Y-y)/P]+1 ([ ] is a Gaussian symbol) and k ≦ N_{A} according to the first column number y and the interval P of the holes T1 of the transplant destination as well as the number of holes T1 in the x-th row (maximum value Y of y). The hole T1 of the transplant destination is located at the row number x=x and the column number y=y+j×P (j=0 to k-1).
(3) The position (row number m and column number n) of the seedbed portion of the i-th transplant destination is decided.
   More specifically, for the column number n, one in every p seedbed portions of the transplant source is decided based on the interval between the transplant arms 90 in the direction of parallel arrangement and on the interval between the seedbed portions of the culture medium B in the row direction. The number of seedbed portions of the transplant source corresponds to the number k of the holes T1 of the transplant destination. The seedbed portion to be transplanted is located at the row number m=m and the column number n=n+j×p (j=0 to k-1).
(4) The column number y for the hole T1 of the transplant destination is added by 1, to obtain y=y+1.
   Here, in the case where the first column number y for the hole T1 of the transplant destination exceeds the interval P, the transplant destination must be in the next row, and therefore x is added by 1 to obtain x=x+1 while the column y=1 is set so as to be in the first column. In the case where x added by 1 exceeds the maximum value X of the row number, the transplant destination is occupied, and thus initialization is performed as x=y=1 so that the transplant destination is set in the next cultivation panel.
(5) The column number n of the seedbed portion of the transplant source is added by 1 to obtain n=n+1.
   Here, in the case where the first column number n for the seedbed portion of the transplant source exceeds the interval p, the transplant source has to be in the next row, and thus m is added by 1 to obtain m=m+1 while the column n=1 so as to be the first column. Until m added by 1 exceeds the maximum value M for the number of rows, (2) to (5) are repeated by adding 1 to the number i of the transplant order. (1) to (5) correspond to the first procedure.
(6) In (5), if m added by 1 exceeds the maximum value M for the number of rows, the number i of the transplant order is assigned to the set of row number m and column number n that have not been decided as the transplant source, among the row number m and column number n in the seedbed portions, in sequence from the 1st row and 1st column in the row direction. As for the hole T1 of the transplant source, the number i of the transplant order is assigned to the holes T1 in the vacant state in sequence from the smaller ones of the row number x and column number y. The procedure (6) corresponds to the second procedure.

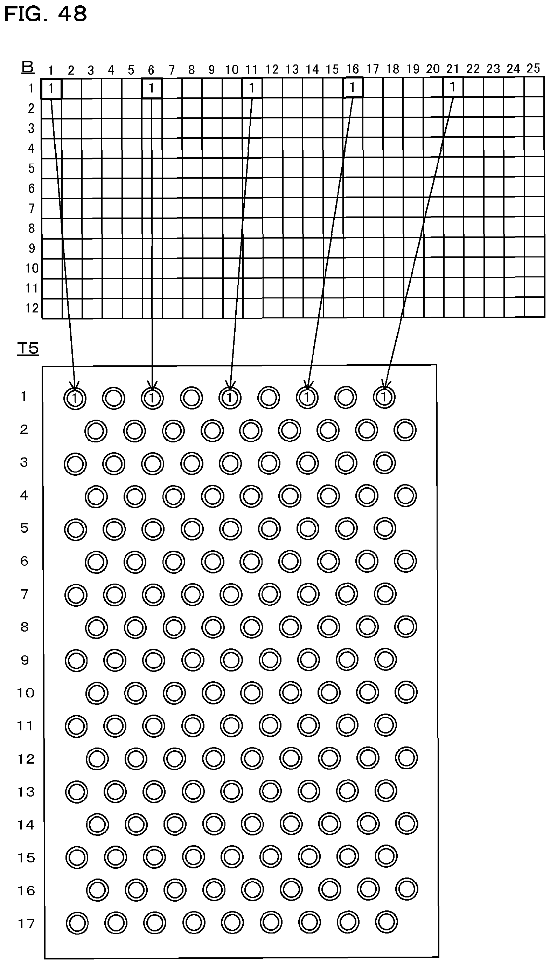

For the examples of the culture medium B (see FIG. 2) and the cultivation panel T5 illustrated in FIG. 44, the procedures defined by (1) to (6) described above will be described in detail with reference to the drawings illustrating the process of deciding the transplant procedure. FIGS. 48 to 54 illustrate the transplant order defined by the transplant algorithm according to Embodiment 6. In FIGS. 48 to 54, the number of transplant order is assigned to each of the holes T1 of the cultivation panel T5 and the seedbed portions of the culture medium B to indicate the order of transplanting.

In Embodiment 6, the number of transplant arms 90 is N_{A}, the cultivation panel T has 17 rows and 9 columns (X=17, Y=9), and the culture medium B has 12 rows and 25 columns (M=12, N=25) as described above. Since the interval between the transplant arms 90 in the direction of parallel arrangement in Embodiment 6 is twice the pitch between the holes T1 in the row direction, the interval P in the cultivation panel T5 in the row direction corresponds to P=2. Since the interval between the transplant arms 90 in the direction of parallel arrangement in Embodiment 6 is five times the interval between the seedbed portions in the row direction, the interval p in the culture medium B in the row direction corresponds to p=5.

According to (1) as described above, for the transplant destination in the first transplanting, the row number x and the column number y for the first hole T1 of the transplant destination in the first transplant, and the row number m and the column number n for the seedbed portions of the transplant source are initialized as x=y=m=n=1. According to (2), if Y=9, y=1, P=2 and NA=5 are assigned to the number k of holes of the transplant destination = [(Y-y)/P]+1([ ] is a Gaussian symbol) and to k≦N_{A}. Therefore, since x=1 and y=1+j×2 (j=0 to 4), using five transplant arms 90, five holes T1 of (x, y) = (1, 1), (1, 3), (1, 5), (1, 7), (1, 9), i.e. holes T1 in the odd-numbered columns in the first row, are defined as the transplant destination as illustrated in FIG. 48.

According to (3), the row number m and the column number n for the first transplant source correspond to m=1 and the column number n=1+j×5 (j=0 to 4), five positions of (m, n) = (1, 1), (1, 6), (1, 11), (1, 16), (1, 21) are defined as illustrated in FIG. 48.

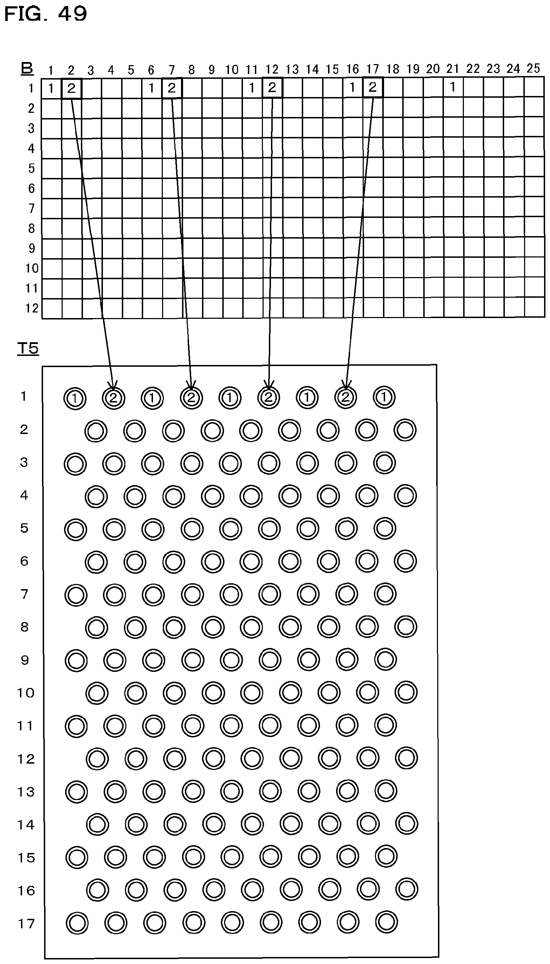

Next, according to (4) described above, y=y+1 and n=n+1 are satisfied, so that y=2, n=2 not exceeding the intervals P, p. The procedure thus returns to (2), where the number of holes of the transplant destination in the second transplanting k=[(9-2)/2]+1 where k≦5 is satisfied, and thus k=4 is obtained. The hole T1 of the transplant destination corresponds to x=1 and y=2+j×2 (j=0 to 3), so that four positions of (x, y) = (1, 2), (1, 4), (1, 6) and (1, 8), i.e. the even-numbered columns in the 1st row, are defined as illustrated in FIG. 49. Since the row number m and the column number n in the seedbed portion of the transplant source in the second transplanting corresponds to m=1 and the column number n=2+j×5 (j=0 to 3) according to (3), four positions of (m, n) = (1, 2), (1, 7), (1, 12) and (1, 17) are defined as illustrated in FIG. 49.

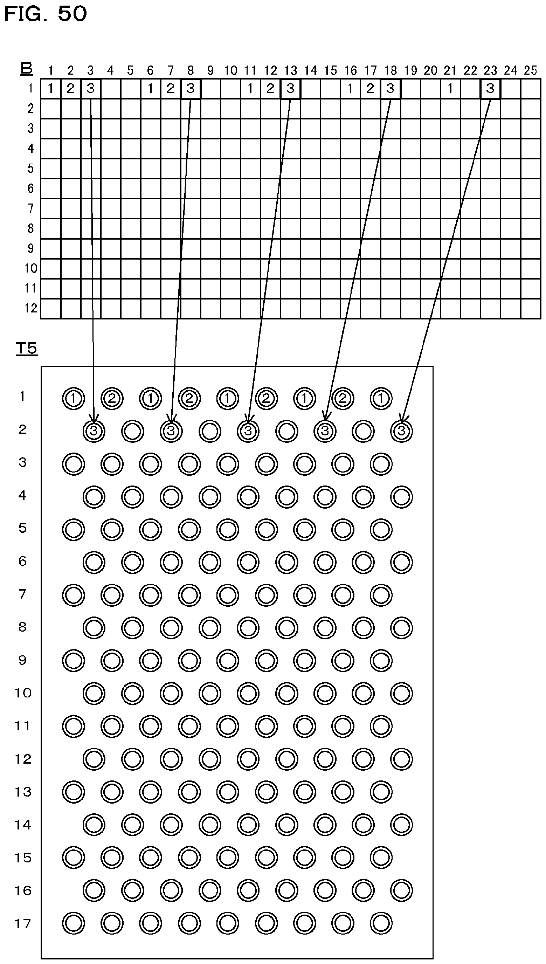

Likewise, according to (4) and (5), y=y+1 and n=n+1 are satisfied to obtain y=3 and n=3, where the column number y exceeds the interval P, so that 1 is added to the row number x to obtain x=x+1=2 and y=1. Since the column number n for the seedbed portions does not exceed p, the procedure goes back to (2), where the number of holes of the transplant destination in the third transplanting k=[(9-1)/2]+1 where k≦5 is satisfied, and thus k=5 is obtained. The hole T1 of the transplant destination corresponds to x=2 and y=1+j×2 (j=0 to 4), so that five positions of (x, y) = (2, 1), (2, 3), (2, 5), (2, 7) and (2, 9), i.e. the odd-numbered columns in the 2nd row, are defined as illustrated in FIG. 50. Since the row number m and the column number n for the seedbed portion of the transplant source in the third transplanting correspond to m=1 and the column number n=3+j×5 (j=0 to 4) according to (3), five positions of (m, n) = (1, 3), (1, 8), (1, 13), (1, 18) and (1, 23) are defined as illustrated in FIG. 50.

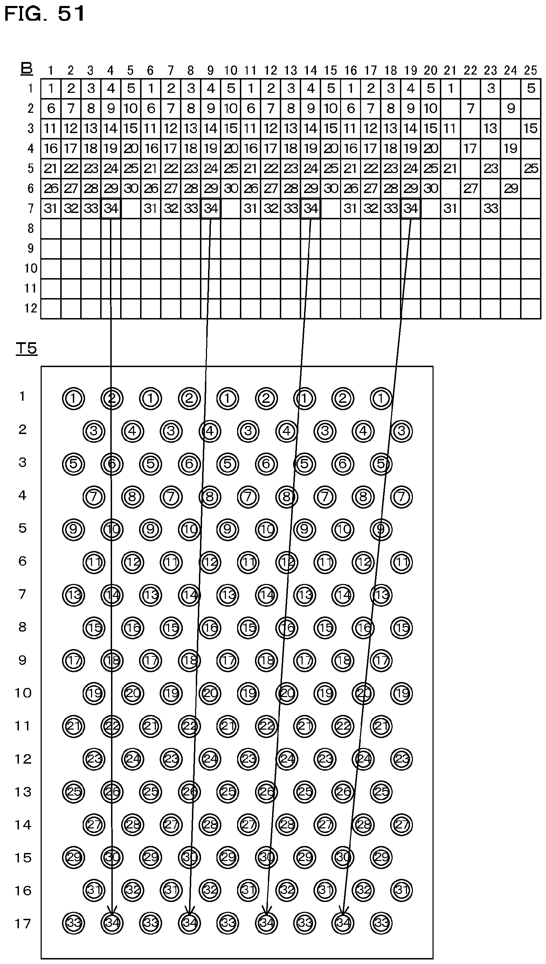

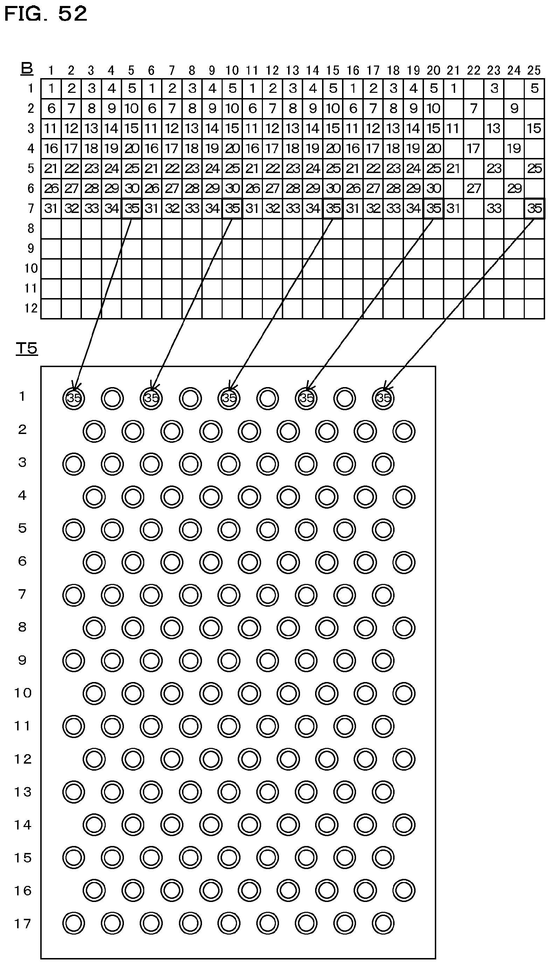

For the 34th transplanting, the repetition from (2) to (5) is defined as illustrated in FIG. 51. Here, in (4), the column number y for the hole T1 of the transplant destination is added by 1 to obtain y=y+1, resulting in the column number y=3 which exceeds the interval P. Therefore, 1 is added to x=17 to obtain x=18, which exceeds the maximum number of rows X=17, so that the next cultivation panel is used as a transplant destination. The row and column numbers are then initialized as x=y=1. As such, thirty-four operations may complete the transplanting to one cultivation panel T5. In (5), for the seedbed portions of the transplant source, even if n=n+1=5, it does not exceed the interval p=5, the procedure returns to (2). As to the number of holes of the transplant destination in the 35th transplanting, k=[(9-1)/2]+1 and k≦5 is satisfied, and thus k=5 is obtained. The hole T1 of the transplant destination corresponds to x=1 and y=1+j×2 (j=0 to 4), so that five positions of (x, y) = (1, 1), (1, 3), (1, 5), (1, 7) and (1, 9), i.e. the odd-numbered columns in the 1st row in the next panel, are defined as illustrated in FIG. 52. Since the row number m and the column number n in the seedbed portion of the transplant source in the 35th transplanting correspond to m=7 and the column number n=5+j×5 (j=0 to 4) according to (3), five positions of (m, n) = (7, 5), (7, 10), (7, 15), (7, 20) and (7, 25) are defined as illustrated in FIG. 52.

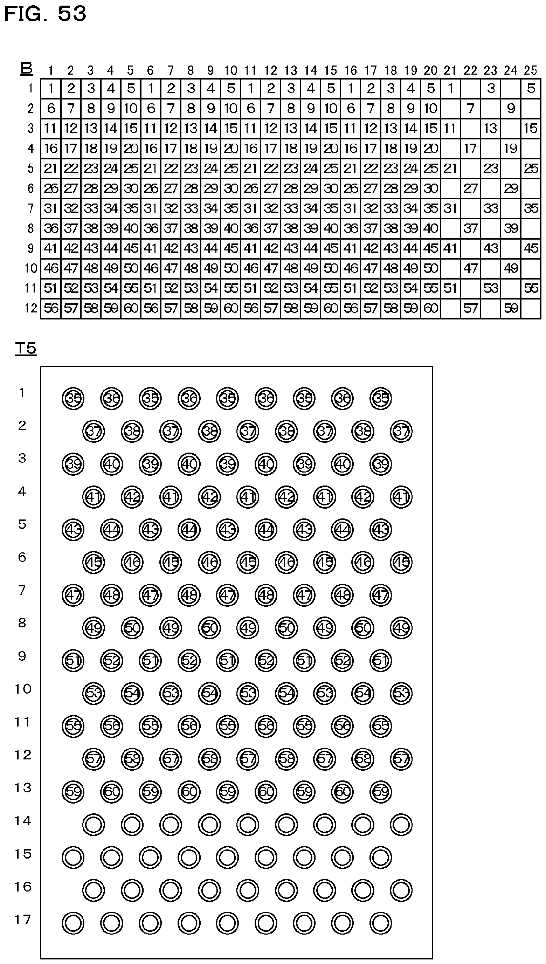

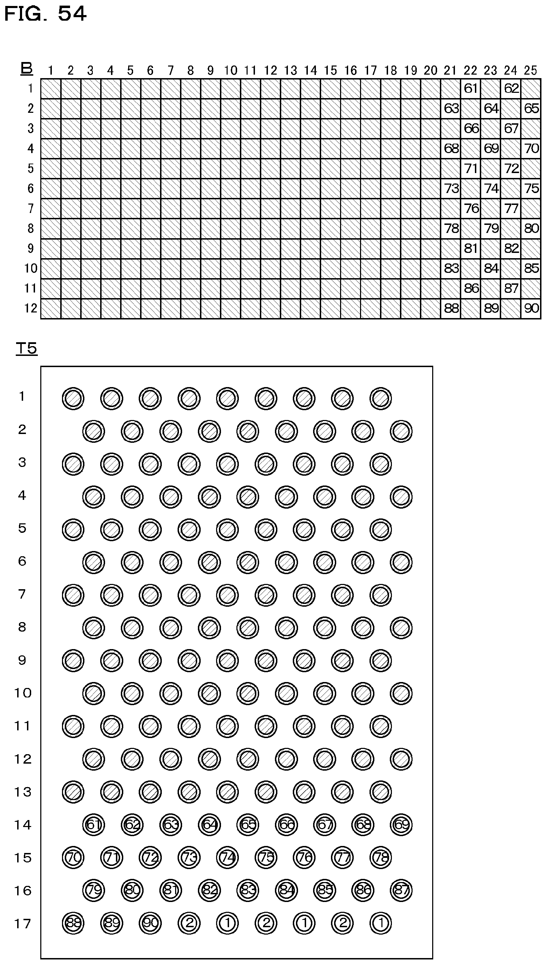

Furthermore, (2) to (5) are repeated for the 60th transplanting, which is defined as illustrated in FIG. 53. Here, in (4), the column number y for the hole T1 of the transplant destination is added by 1 to obtain y=y+1, resulting in the column number y=3 which exceeds the interval P. Thus, 1 is added to x=13 to obtain x=14, which does not exceed the maximum value x=17, so that the procedure moves forward while x=14 and y=1. In (5), the column number n for the seedbed portions of the transplant source corresponds to n=n+1=6, which exceeds the interval p=5. Thus, 1 is added to m=12 to obtain m=13, which exceeds the maximum value for the number of rows M=12. Here, according to (6), the transplant order is defined as illustrated in FIG. 54.

For one culture medium B, all the seedbed portions may be transplanted to the cultivation panel T5 in the transplant order as described above. As illustrated in FIG. 54, while six holes T1 are left in the cultivation panel T5 of the transplant destination, in principle, the row number m and the column number n are initialized as those for a new culture medium B to be subjected to a similar process. Accordingly, as illustrated in FIG. 54, out of the five seedbed portions (m, n)=(1, 1), (1, 6), (1, 11), (1, 16) and (1, 21) of the first transplant source in the next culture medium B, three portions at (m, n)=(1, 11), (1, 16) and (1, 21) corresponding to three portion at (x, y)=(17, 5), (17, 7) and (17, 9) excluding the occupied holes T1 at (x, y)=(17, 1) and (17, 3) are determined as the next transplant destination.

In the transplant device 10 according to Embodiment 6, however, transplanting is carried out also in accordance with the sorting information received from the information processing device 6. Detailed transplant procedures performed by referring to the sorting information in addition to the transplant order defined by (1) to (6) as described above will be described below with reference to the flowchart.

First, out of the transplant order defined by (1) to (6) as described above, the number k and the interval P of the multiple holes T1 of the transplant destination that can be decided by (2) may be stored in the storage unit 72 as a set of the number k of the transplant arms 50 when the column number y for the hole T1 of the transplant destination corresponds to 1 to P. More specifically, in the example of Embodiment 6, P=2, k=4 (when y=1) and k=5 (when y=2) are stored. Furthermore, the transplant order for the transplant source decided by (1) to (6) is stored in the storage unit 72 in association with the number i. For example, in association with the number i indicating the transplant order, according to the row numbers m and the column numbers n for the seedbed portions of the transplant source, (i, (m, n)) = (1, (1, 1), (1, 6), (1, 11), (1, 16), (1, 21)) are stored, for example. In the example of the culture medium B (see FIG. 2) and the cultivation panel T5 in FIG. 44, as illustrated in FIGS. 53 and 54, for the culture medium B, the row numbers m and column numbers n indicating seedbed portions of the transplant source according to the first procedure with i=1 to 60 as well as the row numbers m and column numbers n indicating seedbed portions of the transplant source according to the second procedure with i=61 to 90 are stored.

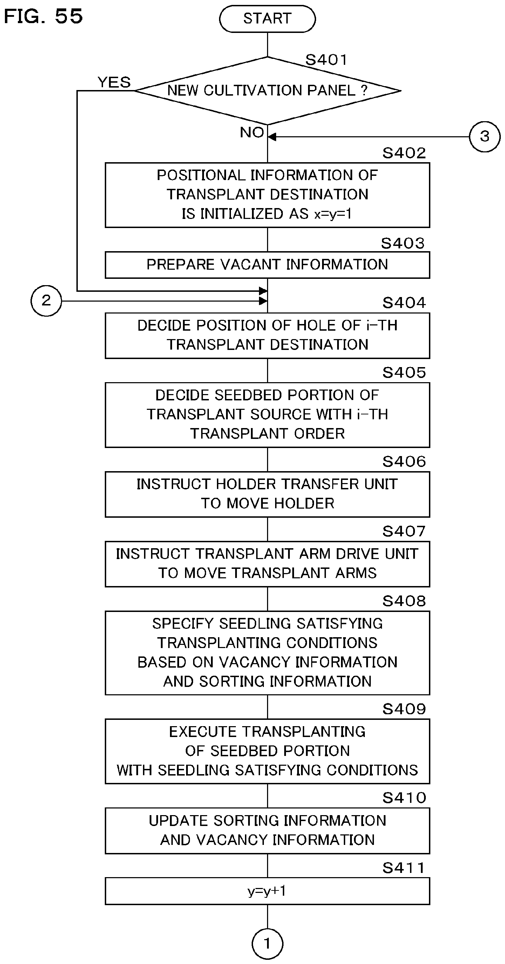

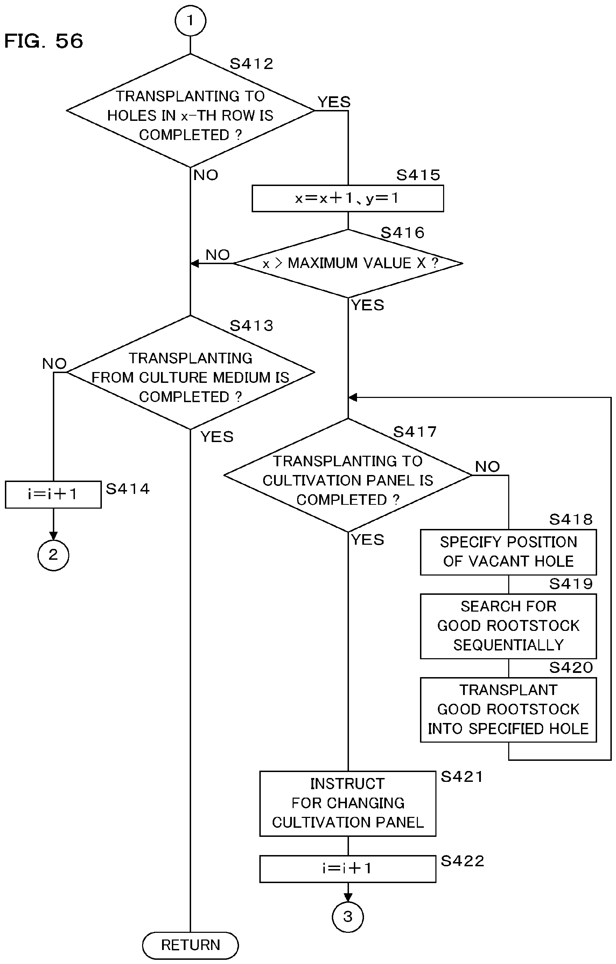

FIGS. 55 and 56 show a flowchart illustrating an example of a detailed procedure of transplanting according to Embodiment 6. The procedure illustrated in the flowchart of FIGS. 55 and 56 corresponds to the procedure at step S104 illustrated in the flowchart of FIG. 47.

The control unit 71 first determines whether or not the transplant destination is a new cultivation panel T (step S401). If it is determined that the transplant destination is not a new cultivation panel T (S401: NO), the positional information thereof is initialized as x=y=1 (step S402), and vacant information for the holes T1 in the cultivation panel T5 is further prepared (step S403). In step S403, specifically, the vacant information is digital information representing the vacancy of each hole T1 in the x rows and y columns as binary information ("0" for vacant and "1" for occupied), which is initially "0" for all the holes T1 in the x rows and y columns.

The control unit 71 decides the position of the hole T1 of the i-th transplant destination (step S404). More specifically, in the case where the transplant order i is from 1 to 60 (order of transplanting in the first procedure), the control unit 71 decides that x=x and y=y+j×P (j= 0 to k-1) from the row numbers x and the column numbers y. Since P=2, k=4 (when y=1) and k=5 (when y=2) are stored in the storage unit 72, in the case of x=y=1, the position of the transplant destination is decided as x=1 and y=1, 3, 5, 7 and 9. If the transplant order i is from 61 to 90, the control unit 71 decides the position at one of the row numbers x and the column numbers y.

The control unit 71 decides the seedbed portion of the transplant source with the i-th transplant order (step S405). At step S405, in the case where the transplant order i is from 1 to 60 (which can be used for transplanting in the first procedure), the control unit 71 decides the position with reference to the row numbers m and the column numbers n of the seedbed portions stored in the storage unit 72 in association with the transplant order i. To the i-th transplant order, (m, n) = (1, 1), (1, 6), (1, 11), (1, 16) and (1, 21) are associated. In the case where the transplant order i is from 61 to 90, the seedbed portions corresponding to good plants P remaining in the culture medium B out of the associated seedbed portions are decided one by one in sequence.

The control unit 71 instructs the holder transfer unit 8 to move the holder 80 such that the seedbed portions decided at step S405 are located above the holes T1 at the positions decided at step S404 (step S406). The control unit 71 instructs the transplant arm drive unit 9 to move the supporting stage 91 such that the transplant arms 90 are located under the holes T1 at the positions decided at step S404 (step S407).

The control unit 71 specifies, of the holes T1 of the row numbers x and the column numbers y of the transplant destination, a hole T1 satisfying the conditions where the vacancy information of the hole T1 is "0" and where a seedbed portion of the transplant source in the row number m and the column number n corresponding to the hole T1 is good in growth and indicates "1" based on sorting information (step S408). The control unit 71 executes pulling out of the seedbed portion from the culture medium B and transplanting of the seedbed portion into the hole T1 by the transplant arm 90, for the hole T1 specified at step S408 as satisfying the conditions (step S409).

Subsequently, the control unit 71 updates the sorting information for the culture medium B of the transplant source as well as the vacancy information of the cultivation panel T5 of the transplant destination (step S410). More specifically, the control unit 71 updates the vacancy information for the cultivation panel T5 such that the information corresponding to the hole T1 occupied by the execution of transplanting at step S409 indicates the occupied state "1," and updates, for the sorting information of the culture medium B, the information corresponding to the seedbed portion pulled out by the execution of transplanting to "0."

Next, the control unit 71 adds 1 to the column number y of the hole T1 of the transplant destination (step S411), and determines whether or not transplanting to the holes T1 in all the columns in the x row is completed (step S412). At step S412, in the case where the transplant order i is from 1 to 60 that correspond to the first procedure, the control unit 71 may determine the completion depending on whether or not the column number y is larger than the interval P. In the case where the transplant order i is from 61 to 90 that correspond to the second procedure, the control unit 71 may determine the completion depending on whether or not y is larger than Y.

If, at step S412, it is determined that transplanting to the holes T1 in all the columns in the x-th row is not completed (S412: NO), the control unit 71 determines the completion of transplanting from the culture medium B depending on whether or not all the sorting information for the culture medium B is "0" (step S413). At step S413, if it is determined that the transplanting from the culture medium B is not completed (S413: NO), the control unit 71 adds 1 to the number i of the transplant order (step S414), and returns the processing to step S404.

If, at step S412, it is determined that the transplanting to the holes T1 in all the columns in the x-th row is completed (S412: YES), the control unit 71 adds 1 to the row number x to obtain x=x+1, and y=1 is attained with y being the head column (step S415). Next, the control unit 71 determines whether or not the row number x is larger than the maximum value X (step S416). If, at step S416, it is determined that the row number x is equal to or smaller than the maximum value X (S416: NO), the control unit 71 returns the processing to step S413, and continues the transplanting for the next x-th row.

If, at step S416, it is determined that the row number x is larger than the maximum value X (S416: YES), the control unit 71 determines the completion of transplanting to the cultivation panel T that has been in place depending on whether or not "0" is included in the vacancy information (step S417). If, at step S417, it is determined that the transplanting is not completed (S417: NO), the control unit 71 specifies the position of a vacant hole T1 (step S418). At step S418, specifically, the control unit 71 specifies the row number x and the column number y corresponding to the vacancy information of "0" in the increasing order from the smallest. The control unit 71 then searches for a good rootstock sequentially in the row direction for the remaining seedbed portions that have not been transplanted among the seedbed portions (i=61 to 90) that are subject to the second procedure or those with the transplant order i or lower in the culture medium B (step S419). The control unit 71 transplants the good rootstock searched for at step S419 into the specified hole T1 (step S420), and returns the processing to step S417.

At step S417, if it is determined that the transplanting is completed (S417: YES), the control unit 71 outputs instructions for changing the cultivation panel by sound or the like (step S421), adds 1 to the number i of the transplant order (step S422), and returns the processing to step S402.

At step S413, if it is determined that the transplanting from the culture medium B is completed (S413: YES), the control unit 71 terminates the transplant processing for the culture medium B, and returns the processing to step S105 in the flowchart of FIG. 47.

In the description with reference to the flowchart of FIGS. 55 and 56, the transplant orders for the seedbed portions of the transplant source based on the transplant algorithm indicated in (1) to (6) described above are stored in the storage unit 72. However, the procedure of deciding the transplant order of (1) to (6) may be performed in the procedure illustrated in the flowchart of FIGS. 55 and 56.

The process of transplanting according to the transplant order in consideration of the sorting information will be described in detail. FIG. 57 illustrates an example of an operation screen displayed on the information processing device 6 according to Embodiment 6. FIG. 57 illustrates an example of an operation screen displayed by the control unit 60 at step S202 in the procedure illustrated in the flowchart of FIG. 47. As illustrated in FIG. 57, on the operation screen here, a photographed image of the entire culture medium B is displayed to correspond to a predetermined frame, and an OK button 641 for starting the transplant as well as a CANCEL button 642 for canceling the sorting of seedlings are further displayed. Since the image of the entire culture medium B is photographed and displayed at a time, a worker is able to carry out relative sorting of multiple seedlings concurrently. The photographed image of the culture medium B in the operation screen may preferably be enlarged for display. This allows the worker to sort the seedlings while viewing an enlarged image.

The area in a predetermined frame (thick frame in FIG. 57) in which the image of the culture medium B is displayed on the operation screen is divided so as to select each seedbed portion. When the worker taps a portion corresponding to an arbitrary seedbed portion on the display unit 63, the tapped portion is displayed to be identifiable as a selected portion, as indicated by the hatching in FIG. 57. Color, hatching or a symbol such as a circle or cross is used for the display mode in a superposing manner. The color, hatching information and symbol information are recorded in the recording unit 61. Based on the information on the number of seedbed portions recorded in the recording unit 61, the divided areas on the image of the culture medium B are identified by the row numbers m and the column numbers n of 12 rows and 25 columns, and a seedbed portion selected by tapping is stored by its row number and column number in the temporary storage unit 62. In the example illustrated in FIG. 57, the seedbed portions in the 5th row and 11th column and in the 6th row and 11th column are selected, so that the control unit 60 stores (05, 11) and (06, 11). As for the identification information of the seedbed portions, the divided areas may also be identified by, for example, serial numbers (1, 2, 3 ...) in sequence from the upper left in FIG. 15 in the row direction.

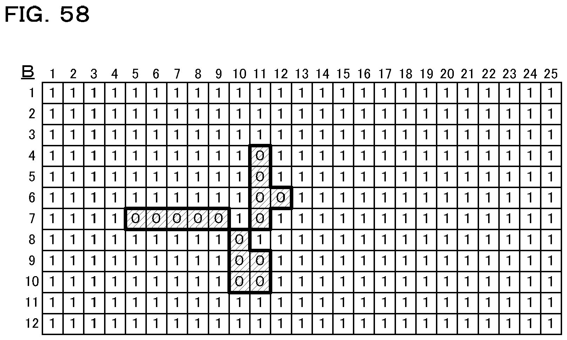

Next, a specific example of sorting information transmitted from the information processing device 6 to the transplant device 10 in the case where a poorly-grown seedbed portion is selected on the operation screen as illustrated in the example of FIG. 57 will be described. FIG. 58 illustrates an example of sorting information. In the example illustrated in FIG. 58, to simplify the description, the sorting information is indicated to correspond to FIGS. 48 to 54 illustrating the transplant orders for the culture medium B. In the example illustrated in FIG. 58, the sorting information, indicating that the 4th to 7th rows and 11th column, 6th row and 12th column, 7th row and 5th to 9th columns, 8th row and 10th column, 9th row and 10 to 11th columns, 10th row and 10 to 11th columns are selected, is transmitted to the transplant device 10. As the sorting information is digital information representing good or poor in growth for each seedbed portion as binary information, it is understood that the information is not limited to matrix information as illustrated in FIG. 58, but may also be represented by, for example, a bit sequence including 300 (=12×25) bits.

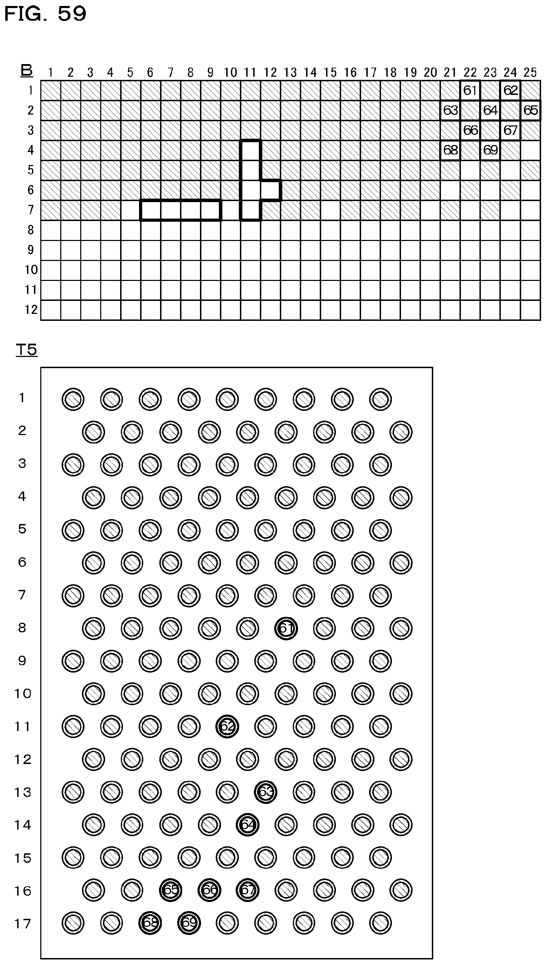

FIG. 59 illustrates an example of transplanting based on the sorting information in FIG. 58. In FIG. 59, already-transplanted seedlings are indicated by hatching in the culture medium B of the transplant source and the cultivation panel T5 of the transplant destination. At the time point when the transplanting to a new cultivation panel T is completed to the last row x=17 based on the sorting information in FIG. 58, referring to the sorting information in FIG. 58 together with the transplant procedure illustrated in FIG. 51, it is found that total of nine holes T1 corresponding to the seedbed portions in the areas enclosed by the thick lines on the culture medium B are vacant holes as illustrated in the bottom part of FIG. 59. For example, the poorly-grown seedbed portion in the 4th row and the 11th column is not transplanted to the hole T1 in the 8th row and 6th column, leaving the hole T1 vacant. In this case, the control unit 21 specifies the row numbers x and the column numbers y of vacant holes T1 in the ascending order, and searches for a good rootstock sequentially in the row direction among the remaining seedbed portions that have not been transplanted and have the 34th or lower number of the transplant order in the seedbed portions (i=61 to 90) or the culture medium B subject to the second procedure (S419). Here, the control unit 71 searches for a seedbed portion subject to the second procedure sequentially in the row direction, since no good seedbed portion with the transplant order of the 34th or lower remains in the culture medium B without having been transplanted. To the vacant holes T1 in the cultivation panel T5, nine seedbed portions corresponding to i=61 to 69 are transplanted.

When the cultivation panel T5 is changed to a new one, the seedbed portion corresponding to the next transplant order i=35 in the culture medium B is transplanted to the new cultivation panel T5, starting from x=y=1 in sequence.

As such, in the transplant device 10 according to Embodiment 6, it is possible to reduce, as much as possible, the number of times the poorly-grown rootstock is removed in the transplant procedure while further referring to sorting information defined by the selecting operation based on an image. The information processing device 6 may wirelessly communicate with the transplant device 10, which allows a worker who is at a location distant from the installation site of the transplant device 10 to operate the transplant device 10.

### (Variation Example 1)

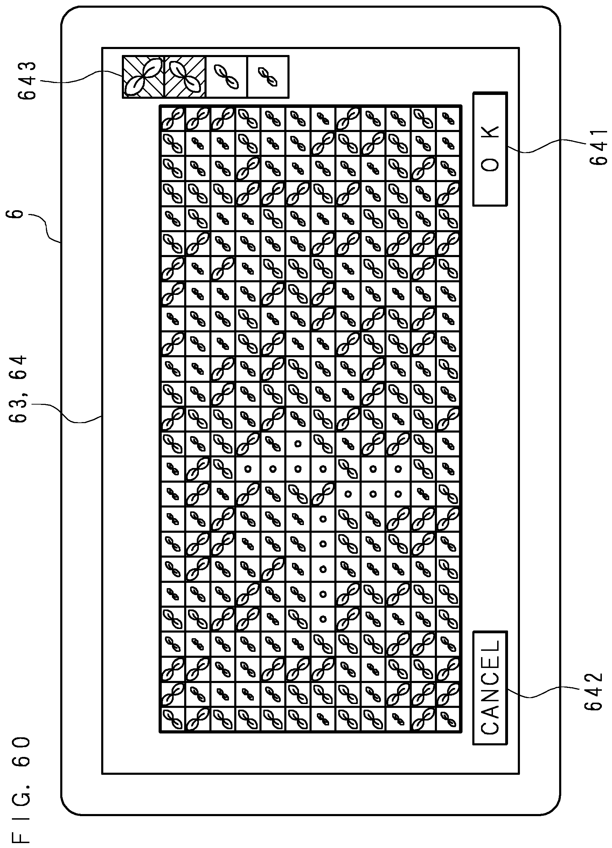

In order for a worker to easily select the poorly-grown plant P to be removed from transplanting, grade samples may additionally be displayed, which serves as a reference for selecting operation, on the operation screen illustrated in FIG. 57. FIG. 60 illustrates an example of an operation screen according to Variation Example 1. In the operation screen according to Variation Example 1, an image 643 of grade samples are displayed next to the photographed image of the culture medium B on the display unit 63. The image 643 of grade samples is recorded in the recording unit 61 of the information processing device 6. In the case of receiving image data of the photographed image of the culture medium B from the imaging unit 3, the control unit 60 reads out the image 643 of grade samples from the recording unit 61 and displays the image 643 together with the photographed image on the display unit 63. It may also be configured that the image 643 of grade samples is stored in the storage unit 22 of the transplant control unit 20 and is transmitted to the information processing device 6 by the control unit 21. This allows the worker to select the plant P not to be transplanted while comparing the states of the plant P in the culture medium B with the grade samples, making it possible to standardize the criteria for judgment by different workers at the same level and to homogenize the quality of the plant P.

### (Variation Example 2)

In Embodiment 6, the camera included in the information processing device 6 which is a tablet PC may also be used as the camera 30 of the imaging unit 3. Here, step S101 of the procedure illustrated in the flowchart of FIG. 47 is also executed on the information processing device 6 side. That is, the transplant application based on the transplant application program 6P is activated in the information processing device 6, and is started when the camera function activated by the transplant application is used for photographing an image by the camera 30. Here, in the case where a problem such as defocusing occurs in a photographed image, the CANCEL button 642 is pressed to restart the photographing. On the transplant device 10 side, the processing is started at step S102 where the transplant control unit 70 determines whether or not sorting information is received.

### (Embodiment 7)

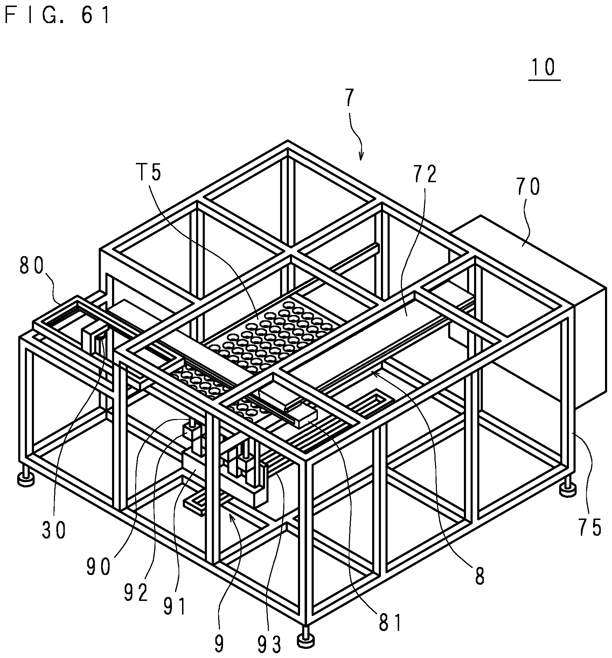

FIG. 61 is a perspective view illustrating a transplant device 10 according to Embodiment 7. In Embodiment 7, the camera 30 of the imaging unit 3 according to Embodiment 6 is installed at a position where it looks down the holder 80, and moves with the holder 80. Moreover, the camera 30 photographs a moving image, and the communication unit 31 of the imaging unit 3 transmits the image data of the moving image to the information processing device 6. Since the transplant device 10 as well as the information processing device 6 according to Embodiment 7 are configured similarly to those in Embodiment 6 except for the camera 30 described above and the procedures described below, common parts are denoted by the same reference codes and will not be described in detail.

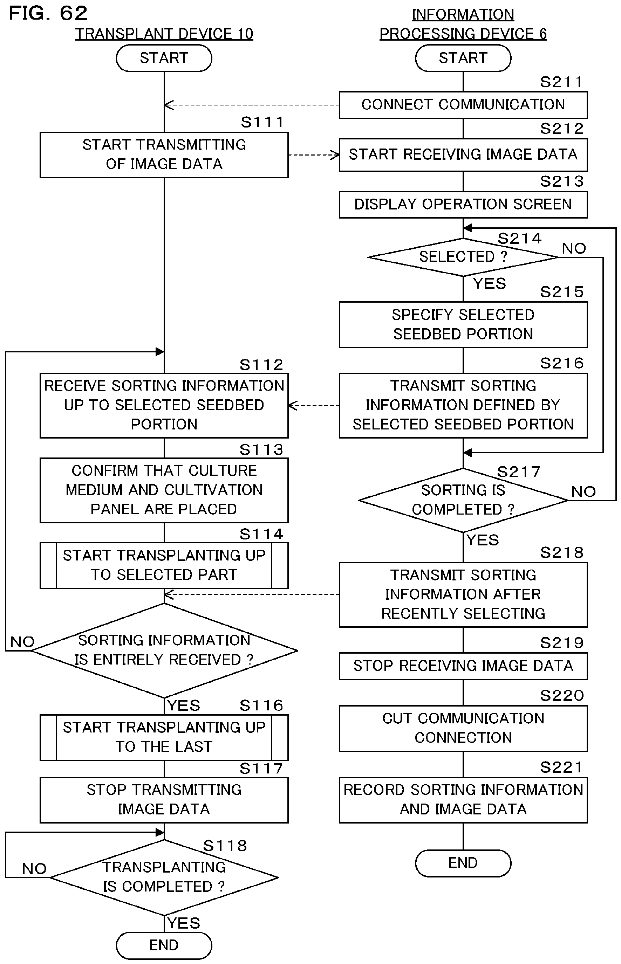

FIG. 62 is a flowchart illustrating an example of a procedure of transplanting according to Embodiment 7. The procedure illustrated in the flowchart of FIG. 62 is started when the transplant application based on the transplant application program 6P is activated in the information processing device 6.

In the information processing device 6, the control unit 60 connects itself to the transplant device 10 so as to connect communication for transmitting and receiving the image data of a moving image (step S211), and thereby the transplant device 10 starts the processing.

The transplant device 10 establishes the communication connection with the information processing device 6 and starts photographing of a moving image by the camera 30, while starting transmission of the image data from the communication unit 31 (step S111).

In the information processing device 6, the control unit 60 starts receiving image data (step S212), and displays on the display unit 63 an operation screen including the moving image of the culture medium B in a frame based on the received image data (step S213). The control unit 60 determines whether or not the seedbed portion in the culture medium B displayed in the operation screen is selected (tapped) (step S214). If it is determined as selected (S214: YES), the control unit 60 specifies a selected part (row number p and column number q) within the moving image of the culture medium B in the operation screen (step S215). The control unit 60 determines that the seedbed portions to the row number p and the column number q-1 in the selected part as good rootstocks, and transmits sorting information indicating that the seedbed portion of the row number p and the column number q is poorly grown (step S216). Accordingly, the worker sorts the seedbed portions in sequence from the 1st row and 1st column while viewing them in the photographed image of the culture medium B.

In the transplant device 10, the control unit 71 of the transplant control unit 70 receives the sorting information up to the selected seedbed portion every time the selecting operation is performed (step S112), and if it confirms that the culture medium B and the cultivation panel T are appropriately placed (step S113), transplanting up to the seedbed portions corresponding to the selected part is started based on the received sorting information (step S114). The transplant procedure is the same as the procedure illustrated in the flowchart of FIGS. 55 and 56 described in Embodiment 6.

In the information processing device 6, the control unit 60 executes the processing of steps S214 to S216 every time the seedbed portion of a poorly-grown seedling is selected. If it is determined at step S214 that no seedbed portion is selected (S214: NO), the control unit 60 determines whether or not sorting is completed by tapping the OK button 641 (step S217). If it is determined at step S217 that the sorting is not completed (S217: NO), the control unit 60 returns the processing to step S214. If it is determined at step S217 that the sorting is completed (S217: YES), the control unit 60 transmits sorting information indicating that the seedbed portions with the row numbers and column numbers at or after the most recently selected part are all good rootstocks (step S218). Once the transmission of sorting information is completed, the control unit 60 stops receiving image data (step S219), cuts the communication connection for receiving moving image (step S220), records the sorting information as well as image data in the recording unit 61 as necessary (step S221), and terminates the processing of the transplant application for one culture medium B.

In the transplant device 10, the control unit 71 determines whether or not the sorting information is entirely received up to the last row and the last column of the culture medium B (step S115). If it is determined that the sorting information is not entirely received (S115: NO), the control unit 71 returns the processing to step S112, and receives the next sorting information.

If it is determined at step S115 that the sorting information is entirely received (S115: YES), the control unit 71 starts the transplanting up to the last row and the last column of the culture medium B as in step S114 (step S116), and stops photographing by the camera 30 in the imaging unit 3 and transmitting image data (step S117). The control unit 21 determines whether or not transplanting up to the last part that had been started is completed (step S118), and if determined as not completed (S118: NO), returns the processing to step S118 and waits until it is determined as completed. If it is determined at step S118 that the transplanting is completed (S118: YES), the control unit 21 terminates the transplanting process for one culture medium B.

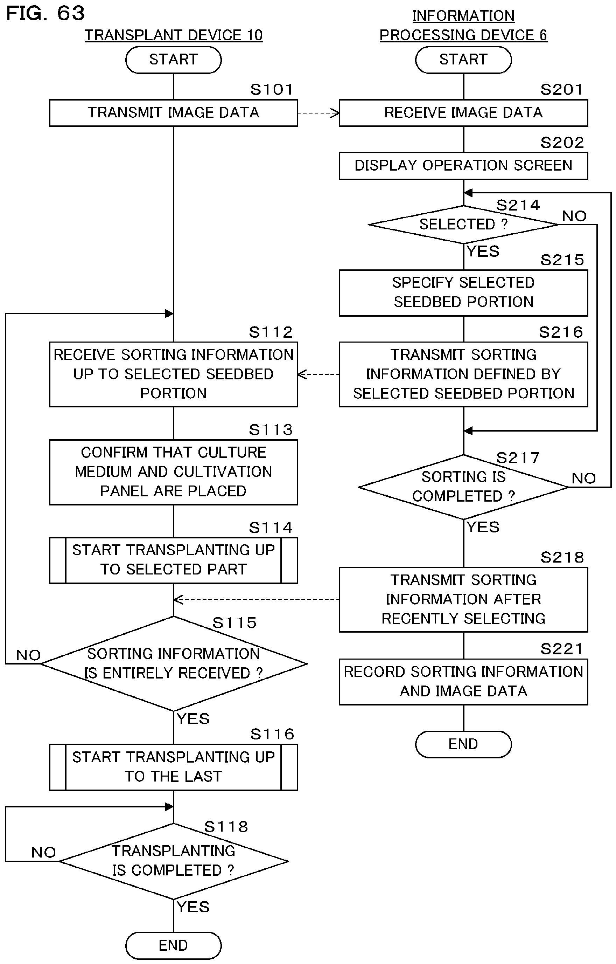

As such, even if the operation of sorting for all the plants P is not finished on the information processing device 6 side, transplanting up to the seedbed portion at a position where sorting is completed may be started concurrently, which can achieve faster and more efficient transplanting. While the camera 30 is configured to photograph a moving image in Embodiment 7, it may also be configured to photograph and output a still image. For example, every time the sorting information transmitted from the information processing device 6 is received at the transplant control unit 70 side (S112), the image data may be photographed by the camera 30 and transmitted to the information processing device 6. For example, concurrent transplanting may also be started based on an initially-photographed image alone. FIG. 63 is a flowchart illustrating an example of a procedure of transplanting in the case where a still image is used according to Embodiment 7. The procedures in FIG. 63 are denoted by the same step numbers as in the procedures according to Embodiment 6 illustrated in FIG. 47 and the procedures illustrated in the flowchart of FIG. 62, and will not be described in detail. As illustrated in the flowchart of FIG. 63, after the image data of a still image photographed at the imaging unit 3 is transmitted on the transplant device 10 side (S101), the sorting information is transmitted (S216) every time the sorting operation is accepted on the information processing device 6 side (S214: YES). Accordingly, after image data obtained by photographing the culture medium B by the camera 30 (or a camera included in the information processing device 6) at the time of starting is attained, transplanting may be carried out while proceeding sorting operation in sequence without the presence of a worker. On the information processing device 6 side, the part corresponding to the selected seedbed portions in the processing up to then in the image of the culture medium B based on the transmitted image data is colored to indicate that the part is already selected.

Embodiments 1 to 7 and Variation Examples thereof, particularly the transplanting based on the transplant orders described in Embodiments 1 to 5 may appropriately be combined with sorting procedures based on the sorting information described in Embodiments 6 and 7. Also for the configuration using multiple transplant arms, the transplant order may be decided as in the method of deciding the association between the seedbed portions of the transplant source and the holes T1 of the transplant destination described in Embodiments 1 to 5, and transplanting may be carried out concurrently by the multiple arms.

It should be understood that the embodiments disclosed above are illustrative and non-restrictive in every respect. Since the scope of the present invention is defined by the appended claims rather than by the description preceding them, all changes that fall within metes and bounds of the claims, or equivalence of such metes and bounds thereof are therefore intended to be embraced by the claims.

### [Description of Reference Numerals]

- 1, 10: transplant device
- 2, 7: transplant unit
- 20, 70: transplant control unit
- 21, 71: control unit
- 22, 72: storage unit
- 23: operation unit
- 25, 75: frame
- 26: supporting plate (second holding unit)
- 4, 8: holder transfer unit (moving unit)
- 40, 80: holder (first holding unit)
- 5. 9: transplant arm drive unit
- 50, 90: transplant arm
- 3: imaging unit
- 30: camera
- 31: communication unit
- 6: information processing device
- 60: control unit
- 61: recording unit
- 73: communication unit
- 76, 76: rail (second holding unit)
- B, B2: culture medium
- P: plant
- T, T2, T3, T4, T5: cultivation panel
- T1: hole

## Claims

1. A transplant device comprising a first holding unit that holds a flat board-like culture medium in which a plurality of plants are planted in row and column directions, and a second holding unit that holds a flat board-like cultivation panel so as to be opposed to the culture medium, the flat board-like cultivation panel in which a plurality of holes for holding the plants are arranged in row and column directions, the transplant device transplanting the plants from the culture medium to the holes of the cultivation panel, further comprising:
a procedure deciding unit that decides a transplant procedure from the culture medium to the holes of the cultivation panel based on a predetermined transplant algorithm;
a moving unit that moves the first holding unit or the second holding unit so that a plant in the culture medium and a hole of the cultivation panel corresponding to a transplant procedure decided by the procedure deciding unit are aligned in a vertical direction; and
a transplant unit that performs transplanting, after the moving unit moves the first and second holding units, by pulling or pushing the plant into the hole using a transplant arm which is raised and lowered in a direction orthogonal to the culture medium and the cultivation panel.

2. The transplant device according to claim 1, wherein
the moving unit moves the first holding unit or the second holding unit in a planar direction within a range where corresponding regions, in a plurality of regions obtained by dividing the cultivation panel and the culture medium to have a same number of regions in the row direction or the column direction, are opposed to each other.

3. The transplant device according to claim 2, wherein
the moving unit moves the first holding unit or the second holding unit within a range where corresponding regions, in a plurality of regions obtained by dividing the cultivation panel and the culture medium to have a same number of regions in a longitudinal direction of the cultivation panel or the culture medium out of the row direction and the column direction of each of the cultivation panel and the culture medium, are opposed to each other.

4. The transplant device according to claim 2 or 3, wherein
the moving unit moves the first holding unit or the second holding unit within a range where corresponding regions, in a plurality of regions obtained by dividing the cultivation panel and the culture medium to have a same number of regions both in the row direction and the column direction, are opposed to each other.

5. The transplant device according to any one of claims 2 to 4, wherein
the same number is a greatest common divisor of the number of rows or columns in a longitudinal direction of the culture medium and the number of rows or columns in a direction of the cultivation panel corresponding to the longitudinal direction.

6. The transplant device according to claim 2, wherein
the moving unit moves the first holding unit or the second holding unit within a range where corresponding regions, in a plurality of regions obtained by dividing the cultivation panel or the culture medium into two regions in a first direction, which is a short direction, out of the row direction and the column direction of each of the cultivation panel and the culture medium, are opposed to each other.

7. The transplant device according to claim 6, wherein the procedure deciding unit
associates holes in one region in the plurality of regions of the cultivation panel in sequence from an end in the first direction with plants in a region corresponding to the one region in sequence from an end of the culture medium in the first direction toward a middle, or
associates holes in one region in the plurality of regions of the cultivation panel in sequence from a middle of the cultivation panel in the first direction with plants in a region corresponding to the one region in sequence from a middle of the culture medium in the first direction toward an end.

8. The transplant device according to any one of claims 2 to 7, further comprising a storage unit storing in advance an association between the corresponding regions.

9. A transplant device transplanting, from a flat board-like culture medium in which a plurality of plants are planted in a row direction and a column direction, the plants to a flat board-like cultivation panel in which holes for holding the plants are arranged in a row direction and a column direction, comprising:
a plurality of transplant arms arranged in parallel at an interval corresponding to a common multiple of an interval between the plants in one direction of the culture medium and an interval between the holes in the one direction of the cultivation panel; and
a transplant unit concurrently transplanting a plurality of plants planted in the culture medium at an interval corresponding to the common multiple to the cultivation panel by the plurality of transplant arms in a predetermined order.

10. The transplant device according to claim 9, wherein
the transplant unit further comprises an operability deciding unit that decides whether or not each of the plurality of transplant arms is able to operate in transplanting the plants in the culture medium, based on sorting information for the plants.

11. A transplant device transplanting a plurality of plants from a flat board-like culture medium in which the plants are planted in a row direction and a column direction to a flat board-like cultivation panel in which a plurality of holes for holding the plants are arranged in a row direction and a column direction, comprising:
an imaging unit that photographs the culture medium;
a transmitting unit that transmits an image photographed by the imaging unit;
a receiving unit that receives sorting information for a plant sorted based on the image transmitted by the transmitting unit;
a transplant deciding unit that decides a plurality of plants to be transplanted based on the sorting information received by the receiving unit; and
a transplant unit that transplants the plants decided by the transplant deciding unit to the cultivation panel.

12. The transplant device according to claim 11, wherein
the transplant unit further comprises
a plurality of transplant arms arranged in parallel at an interval corresponding to a common multiple of an interval of the plants in one direction of the culture medium and an interval of the holes in the one direction of the cultivation panel, and
the transplant unit is configured to concurrently transplant the plants decided by the transplant deciding unit, among a plurality of plants planted in the culture medium at an interval corresponding to the common multiple, to the cultivation panel by the plurality of transplant arms.

13. A transplant system comprising a transplant device that transplants a plurality of plants from a flat board-like culture medium in which the plants are planted in a row direction and a column direction to a flat board-like cultivation panel in which a plurality of holes for holding the plants are arranged in a row direction and a column direction, and a communication device having a display unit and being connected to the transplant device, wherein
the transplant device comprises:
an imaging unit that photographs the culture medium; and
a transmitting unit that transmits an image photographed by the imaging unit to the communication device, and
the transplant device further comprises:
a receiving unit receiving sorting information for plants sorted based on an image transmitted by the transmitting unit from the communication device;
a transplant deciding unit that decides a plurality of plants to be transplanted based on the sorting information received by the receiving unit; and
a transplant unit that transplants the plants decided by the transplant deciding unit to the cultivation panel.

14. The transplant system according to claim 13, wherein
the transplant device further comprises a plurality of transplant arms arranged at an interval corresponding to a common multiple of an interval between the plants in one direction of the culture medium and an interval between the holes in the one direction of the cultivation panel,
the transplant unit is configured to concurrently transplant a plurality of plants planted in the culture medium at an interval corresponding to the common multiple to the cultivation panel by the plurality of transplant arms, and
the transplant deciding unit is configured to decide whether or not each of the plurality of transplant arms is able to operate, based on the received sorting information.

15. A method of transplanting a plurality of plants from a flat board-like culture medium in which the plants are planted in a row direction and a column direction to a flat board-like cultivation panel in which a plurality of holes for holding the plants are arranged in a row direction and a column direction, wherein
the cultivation panel and the culture medium are divided to have a same number of regions in a row direction or a column direction,
the culture medium or the cultivation panel is moved in a planar direction within a range where corresponding regions, in a plurality of divided regions, are opposed to each other, and
after moving the culture medium or the cultivation panel, the plants are transplanted from the culture medium by pulling or pushing the plants into the holes in a direction orthogonal to the culture medium.

16. A method of transplanting a plurality of plants from a flat board-like culture medium in which the plants are planted in a row direction and a column direction to a flat board-like cultivation panel in which a plurality of holes for holding the plants are arranged in a row direction and a column direction, comprising:
concurrently transplanting, using a plurality of transplant arms arranged in parallel at an interval corresponding a common multiple of an interval between the plants in the culture medium in one direction and an interval between the holes in the one direction of the cultivation panel, the plurality of plants planted in the culture medium at the interval to the cultivation panel by the plurality of transplant arms; and
transplanting a plant remaining in the culture medium to the cultivation panel using any one of the plurality of transplant arms.

17. A method of transplanting a plurality of plants using a transplant device that transplants the plants from a flat board-like culture medium in which the plants are planted in a row direction and a column direction to a flat board-like cultivation panel in which a plurality of holes for further growing the plants are arranged in a row direction and a column direction, and a communication device having a display unit and being connected to the transplant device, wherein
the transplant device transmits a photographed image of the culture medium to the communication device,
the communication device displays a received photographed image on the display unit, accepts selection of a plant in a culture medium on the photographed image, and transmits sorting information defined by the selection to the transplant device, and
the transplant device receives sorting information from the communication device, decides a plurality of plants to be transplanted based on the received sorting information, and transplants the decided plants to the cultivation panel.

18. A computer program causing a processor, included in a transplant device comprising a first holding unit that holds a flat board-like culture medium in which a plurality of plants are planted in a row direction and a column direction and a second holding unit that holds a flat board-like cultivation panel in which holes for holding the plants are arranged in a row direction and a column direction, to move the first holding unit or the second holding unit in a planar direction,
the program causing the processor to execute processing of moving the first holding unit or the second holding unit within a range where corresponding regions, in a plurality of regions obtained by dividing the cultivation panel and the culture medium to have a same number of regions in the row direction or the column direction, are opposed to each other.

19. A computer program causing a computer to execute transplanting of a plurality of plants from a flat board-like culture medium in which the plants are planted in a row direction and a column direction to a flat board-like cultivation panel in which a plurality of holes for holding the plants are arranged in a row direction and a column direction,
the program further causing the computer to execute processing of:
deciding a plurality of plants to be planted concurrently by a plurality of transplant arms arranged in parallel at an interval corresponding to a common multiple of an interval between the plants in one direction of the culture medium and an interval between the holes in the one direction of the cultivation panel;
concurrently transplanting the decided plants to the cultivation panel by the plurality of transplant arms; and
transplanting a plant remaining in the culture medium to the cultivation panel using any one of the plurality of transplant arms.

20. A computer program causing a computer having a display unit to accept selection from a flat board-like culture medium in which a plurality of plants are planted in a row direction and a column direction,
the program further causing the computer to execute processing of:
obtaining a photographed image of the culture medium;
displaying the obtained photographed image on the display unit;
accepting selection of a plant in the culture medium on the photographed image; and
transmitting sorting information defined by the selection to an external device.
